# EUROPÄISCHE PATENTSCHRIFT

(11) **EP 0 875 015 B1**
(45) Veröffentlichungstag und Bekanntmachung des Hinweises auf die Patenterteilung: **20.10.1999**
(21) Anmeldenummer: 96946043.5
(22) Anmeldetag: 05.12.1996
(51) Int. Cl.: G02B 6/44

(54) **KABELMUFFE FÜR LICHTWELLENLEITER MIT SPLEISSKASSETTEN UND ÜBERLÄNGENABLAGEN**
CABLE JOINT FOR OPTICAL FIBRES WITH SPLICING CASSETTES AND OVERLENGTH LOOPS
MANCHON DE CABLE POUR CABLE A FIBRES OPTIQUES AVEC CASSETTES D'EPISSURE ET BOUCLES DE SURLONGUEURS

(30) Priorität: 17.01.1996 DE 19601576; 25.04.1996 DE 19616597; 12.06.1996 DE 19623482; 08.10.1996 DE 19641442; 08.10.1996 DE 19641443
(43) Veröffentlichungstag der Anmeldung: 04.11.1998
(73) Patentinhaber: SIEMENS AKTIENGESELLSCHAFT, 80333 München (DE)
(72) Erfinder: FINZEL, Lothar, D-85617 Unterschleissheim (DE); SCHRÖDER, Günter, D-82140 Esting (DE); DIERMEIER, Heinz, D-81739 München (DE)
(86) Internationale Anmeldenummer: DE9602331
(87) Internationale Veröffentlichungsnummer: WO9726574

(56) Entgegenhaltungen:
- EP-A- 0 029 571
- EP-A- 0 091 633
- EP-A- 0 350 245
- EP-A- 0 532 980
- EP-A- 0 581 634
- DE-A- 4 408 633
- DE-C- 4 140 701
- GB-A- 2 277 812
- US-A- 4 626 616
- US-A- 4 709 980
- US-A- 4 744 622
- PATENT ABSTRACTS OF JAPAN vol. 12, no. 203 (P-715) [3050] , 11.Juni 1988 & JP 63 005308 A (FURUKAWA ELECTRIC), 11.Januar 1988,
- PATENT ABSTRACTS OF JAPAN vol. 18, no. 402 (P-1777), 27.Juli 1994 & JP 06 118253 A (SUMITOMO ELECTRIC), 28.April 1994,

## Beschreibung

Die Erfindung betrifft ein Lichtwellenleiter-Übertragungssystem aus einer Kabelmuffe für Lichtwellenleiter mit Spleißkassetten und Lichtwellenleiter-Überlängenablagen für Lichtwellenleiter-Überlängen und aus mindestens einem Lichtwellenleiter-Kabel, wobei Kabeleinführungseinheiten in Form von Kabeleinführungsstutzen in die Kabelmuffe senkrecht zur Achse des Muffenkörpers der Kabelmuffe angeordnet sind, die Lichtwellenleiter-Überlängen und die Spleißkassetten innerhalb des Muffenkörpers in Achsrichtung des Muffenkörpers entnehmbar angeordnet sind und mindestns eine Stirnseite des Muffenkörpers mit einem von außen zugänglichen Deckel dichtend abgeschlossen ist.

Aus der DE 39 04 232 - A1 ist eine Rangier- und Abzweiggarnitur für Nachrichtenkabel und Verteilnetze, bestehend aus einem Abzweigkasten und mindestens einer darin untergebrachten Abzweigmuffe, bekannt. Dort wird eine Haubenmuffe mit üblichen Kabeleinführungsabdichtungen verwendet, wobei die in den Abzweigkasten eingeführten Kabel mit Überlängen eingelegt sind, um die Haubenmuffe für Servicearbeiten herausnehmen zu können. Die Kabelzuführungen zur Haubenmuffe erfolgen über separat verlegte Kabelkanäle, wobei im Kabelkasten bzw. Kabelschacht entsprechende Überlängen von den Kabeln abgelegt werden, bevor sie in die Haubenmuffen eingeführt werden. Für Servicearbeiten werden die Haubenmuffen aus ihrer Schachtlage herausgehoben bzw. herausgeschwenkt, so daß dann die Haubenmuffe zugänglich ist und geöffnet werden kann. Derartige Kabelanlagen sind jedoch auf normale Verlegeweise von frei verlegbaren Kabeln abgestimmt.

Aus der US-Patentschrift 4.709.980 ist eine Kabelmuffe bekannt, bei der die Kabeleinführungen der Lichtwellenleiter senkrecht zur Achse der Kabelmuffe angeordnet sind. Darin sind Spleißkassetten enthalten, die nach Öffnen eines Deckels nach oben entnommen werden können.

Aus der DE-PS 41 40 701 - C1 ist eine Kabelmuffe als Unterflurbehälter bekannt, bei dem die Kabeleinführungen senkrecht zur Kabelmuffenachse erfolgen, wobei die Einführungen über Durchführflansche vorgenommen wird, so daß auch die Kabel mit entsprechenden Einheiten versehen werden müssen. Hier sind ebenfalls nach oben herausnehmbare Kassetten enthalten.

Aus der EP-A-0 532 980 ist eine Haubenmuffe mit Einführungsstutzen bekannt, die schräg einlaufend von unten her in eine Bodenplatte der Haubenmuffe angesetzt sind. Eine derartige Kabelmuffe ist für den Einsatz in Kabelschächten und gegebenenfalls für Befestigung an Masten konzipiert.

In JP-04289451 wird ein Schutzgehäuse für eine im Boden angeordnete Kabelmuffe beschrieben. Dieses Schutzgehäuse besteht aus ringförmigen Bauteilen, die auf einem Sockel angeordnet werden. Die Muffe wird auf einem Gestell darin montiert und mit Füllmaterial umgeben.

In der JP-61148782 wird eine Kabelmuffe beschrieben, bei der Lichtwellenleiterkabel axial eingeführt werden. Die Kabelmuffe besteht aus einem Bleigehäuse und ist so ausgebildet, daß darin Kassettenanordnungen für Lichtweilenleiterüberlängen liegend angeordnet werden können. Diese Kabelmuffe ist besonders geeignet für den Einsatz bei großen Temperaturwechseln. Die Dichtungen werden durch Verschweißen hergestellt.

Aufgabe der Erfindung ist jedoch, eine Kabelmuffe für Lichtwellenleiter zu schaffen, die für einfach zu verlegende Mini-oder Mikrokabel geeignet ist, wobei diese Mini- bzw. Mikrokabel aus Rohren bestehen, in denen Lichtwellenleiter oder Lichtwellenleiterbündel lose eingeführt sind. Die gestellte Aufgabe wird nach einer ersten Art mit einer Kabelmuffe der eingangs erläuterten Art dadurch gelöst, daß die Kabeleinführungseinheiten als Einführungsstutzen in Form von dicht angesetzten Rohren ausgebildet sind, daß die Lichtwellenleiter-Kabel in Form von Lichtwellenleiter-Minikabeln bzw. Lichtwellenleiter-Mikrokabeln, bestehend jeweils aus einem Rohr und darin lose eingebrachten Lichtwellenleitern, Lichtwellenleiter-Bändchen bzw. Lichtwellenleiter-Bündeln in den in Rohrverbindungstechnik für die Aufnahme und Abdichtung der Rohre der Lichtwellenleiter-Kabel ausgebildeten Kabeleinführungseinheiten angeordnet sind, wobei die dichtende Verbindung der Rohrverbindungstechnik eine Schweiß-, Löt- oder Klebeverbindung zwischen dem Rohr des Lichtwellenleiter-Kabels und der Kabeleinführungseinheit ist.

Die gestellte Aufgabe wird jedoch auch nach einer zweiten und dritten Art entsprechend der Merkmale der Patentansprüche 2 und 3 gelöst.

Durch die neue Art der Ausbildung von Lichtwellenleiter-Kabeln als Mini- bzw. Mikrokabel lassen sich erhebliche Vorteile in der Verlegetechnik erzielen. So steht im Vordergrund eine drastische Reduzierung der Kosten, da die dünnen Rohre der Lichtwellenleiterkabel in einfach in die Erdoberfläche einzubringende Schlitze eingelegt werden können, so daß eine deutliche Reduzierung der linientechnischen Gesamtkosten bei einer Neuinstallation möglich ist. Außerdem ist eine Erhöhung der Betriebssicherheit durch redundante Trassenführung möglich, die besonders nutzwoll ist, wenn eine ringförmige Netzstruktur umgesetzt wird. So lassen sich beispielsweise durch diese einfach zu verlegenden Mikrokabel durch Zuschaltung über optische Schalter an bestehende Netze in einfacher Weise flexibel und intelligente Netze aufbauen. Dabei können einfache Anschlußfaserringe mit optischer Umschaltung verwendet werden, so daß Lichtwellenleiterfasern bis zum Endteilnehmer eingesetzt werden können. Der große Vorteil besteht auch darin, daß diese einfachen Mikrokabel nachträglich in Straßen, Gehwegen, Randsteinen, im Sockelbereich von Hauswänden und besonderen Trassen eingebracht werden können. Dabei läßt sich ein angepaßtes technisches Konzept nach den Betreiberwünschen realisieren, wobei vorhandene Infrastruktur in Bezug auf Wegerechte, Rohre für Abwasser, Gas und Fernwärme berücksichtigt werden kann. Die Verlegung der Mikrokabel ist insofern besonders einfach zu beherrschen, da der Rohrdurchmesser der Mikrokabel nur zwischen 3,5 bis 5,5 mm besträgt, so daß für die einzubringende Verlegenut eine Fräsbreite von 7 bis 10 mm ausreicht. Eine derartige Verlegenut ist mit handelsüblichen Fräsmaschinen zu bewerkstelligen, wobei eine Einfrästiefe von ca. 70 mm durchaus genügt. Das Rohr eines derartigen Mini- bzw. Mikrokabels kann aus Kunststoff, Stahl, Chromnickelmolybdänlegierungen, Kupfer, Kupferlegierungen (Messing, Bronze, etc.), Aluminium oder ähnlichen Materialien bestehen. Die Kabelmuffen gemäß der Erfindung sind vorzugsweise zylindrisch ausgebildet und werden senkrecht in eine dafür ausgeschnittene Kernbohrung mit einem der Kabelmuffe entsprechenden Durchmesser eingesetzt, wobei die Kernbohrung ca. 10 bis 30 mm größer sein sollte als der Durchmesser der Kabelmuffen. Die Muffenhöhe der Kabelmuffe beträgt etwa 200 mm, wobei sie vorzugsweise topfförmig ausgebildet ist und mit ihrer stirnseitigen Öffnung zur Oberfläche weist, die dann druckwasserdicht mit Hilfe eines Deckels und einer Dichtung abgeschlossen werden kann. Der Muffenkörper selbst wird beispielsweise bis zu 2/3 seiner Höhe in ein Betonbett eingesetzt und erhält dadurch eine ausreichende Verankerung. Der obere Teil der Kernbohrung wird dann mit Dünnbeton, Heißbitumen, Zweikomponentengußmasse oder schäumbaren Kunststoffmaterialien ausgegossen. Der Muffendeckel kann auch belastungssicher ausgebildet sein, doch ist auch eine separate Abdekkung mit einem zusätzlichen Schachtdeckel möglich. Es handelt sich somit um eine druckwasserdichte, jederzeit zu öffnende und wieder zu verschließende Kabelmuffe, die spezielle Kabeleinführungseinheiten für Mini- bzw. Mikrokabel aufweist. Im Muffenkörper selbst wird die Rangierüberlänge der Lichtwellenleiterfasern bzw. Lichtwellenleiterüberlänge zum Nachspleißen und alle Lichtwellenleiterspleiße aufgenommen, wobei diese auf einer entsprechenden Spleißkassette aufgebracht sind. Diese Spleißkassette kann in Achsrichtung der Kabelmuffe nach oben entnommen werden, so daß die Muffe selbst in ihrer Position verbleiben kann. Die Lichtwellenleiter werden durch einen flexiblen Schlauch geschützt, so daß die Gefahr des Ausknickens bei Servicearbeiten nicht gegeben ist. Beispielsweise können bis zu vier röhrchenförmige Mikrokabel in die Kabelmuffe eingeführt werden, wobei die Kabeleinführungseinheiten hierfür vorzugsweise auf einer Seite des Muffengehäuses so angeordnet sind, daß eine tangentiale Einführung der Lichtwellenleiter entlang der Muffeninnenwandung möglich ist. Der Radius der Kabelmuffe entspricht dabei mindestens dem minimal zulässigen Biegeradius der Lichtwellenleiter, so daß keine zusätzlichen Schutzvorrichtungen vorgesehen werden müssen. Die Kabeleinführungseinheiten bestehen beispielsweise aus dicht in die Muffenwandung eingesetzten Weichmetallröhrchen, dessen Enden durch Verkrimpen auf den eingeführten Mikrokabelenden plastisch so verformt werden, daß eine druckwasserdichte Abdichtung entsteht. Bei einer derartigen druckwasserdichten Verbindung ist zusätzlich das Mikrokabel mit seinem Rohr ausreichend gegen Zug-, Druck- und Torsionsspannungen fixiert. Um Toleranzen bei der Verlegung des Mikrokabels auffangen zu können, wird das Mikrokabel vor der Einführung in die Kabelmuffe jeweils mit einer Dehnungsschlaufe versehen, so daß hierdurch ein Längenausgleich stattfinden kann. Eine derartige Dehnungsschlaufe wird vor den Kabelmuffen oder vor Abbiegungen des Mikrokabels angebracht. Eine derartige Dehnungsschlaufe kann zusätzlich mit einem metallischen Schutzschlauch versehen werden, der nur knickfreie Ausbiegungen zuläßt, so daß bei der Installation auf weitere Biegewerkzeuge verzichtet werden kann. Diese Längenausgleichsschlaufen für Mikrokabel gleichen auch eventuell auftretende Längsdehnungen oder Schrumpfungen des Kabels, sowie Setzungen in der Straße bzw. im Erdreich aus. Sie bestehen ebenfalls aus leicht biegbaren Metallröhrchen, beispielsweise aus Kupfer und können durch vorherige Wärmebehandlung im Biegebereich biegeweich gemacht werden. Auch ist möglich, die verwendeten Röhrchen für die Längenausgleichsschlaufen durch entsprechende Wendelung flexibel zu machen. Metallröhrchen sichern auch die Querdruckstabilität und gewährleisten die Einhaltung von Mindestbiegeradien der Lichtwellenleiter. Außerdem können die Längenausgleichsschlaufen werksseitig bereits vorkonfektioniert werden und brauchen somit auf der Baustelle nicht mehr hergestellt werden. Bei der Verlegung können die Mikrokabel auch oberirdisch an die Muffe herangeführt und fixiert werden, wobei die Längenausgleichsschlaufe dann die Kabelüberlänge beim Absenken der Kabelmuffe aufnimmt. Je nach Ausführung und Bedarf kann eine derartige Verbindungs- oder Abzweigmuffe vor Ort hergestellt werden, wobei T-förmige oder auch kreuzförmige Abzweigungen möglich sind.

Für die Verwirklichung der Erfindung können schlanke, gestreckte Muffen verwendet werden, wenn es sich insbesondere um die Verlängerung und Reparatur eines Mikrokabels handelt. Bei derartigen Verbindungsmuffen können auch Anpassungen von Mikrokabeln verschiedener Durchmesser vorgenommen werden. So kann beispielsweise eine derartige Kabelmuffe auf der einen Einführungsseite ein Mikrokabel mit einem ersten Durchmesser dichtend eingeführt werden und auf der zweiten Seite der Kabelmuffe mit einem Mikrokabel eines zweiten, zum ersten Durchmesser unterschiedlichem Durchmesser verlängert werden. Die Anpassung an die Verschiedenen Durchmesser kann mit Hilfe von Einführungselementen verschiedener Durchmesser oder mit Hilfe von angepaßten Übergangsstücken bzw. Übergangsrohren erfolgen.

Besonders vorteilhaft sind jedoch in diesem Fall runde, zylindrische Muffenkörper, deren Achse jedoch senkrecht zur Achse der Verlegerichtung verläuft. Auf diese Weise können die Mikrokabel durch tangential angeordnete Kabeleinführungseinheiten in die Muffe eingeführt werden. Dadurch ist es auch möglich, Mikrokabel aus verschiedenen Verlegetiefen in einer einzigen Muffe zusammenzuführen. Innerhalb der Muffe kann beispielsweise auch die Anschneidtechnik für ungeschnittene Mikrokabel verwirklicht werden, wobei dann zweckmäßigerweise die Faserüberlängen in mehreren Schlaufen übereinander innerhalb der Muffe in übersichtlicher Weise abgelegt werden.

Bei derartigen Kabelmuffen gemäß der Erfindung ist auch von Vorteil, daß die Kabeleinführungseinheiten und damit die Abdichtungen der einzuführenden Kabel unabhängig von der stirnseitigen Zylinderabdichtung der Kabelmuffe sind. Außerdem wird jedes röhrchenförmige Mikrokabel einzeln abgedichtet und vorzugsweise werden die Kabeleinführungseinheiten im mittleren oder unteren Teil der Kabelmuffe angeordnet, damit keine Kreuzungen von Faserüberlängen oder Fasereinläufen entstehen. Vorzugsweise ist der Speicherraum für die Lichtwellenleiterüberlängen unmittelbar unter dem Deckel angeordnet, wobei zusätzlich Trennplatten eingesetzt werden können, um beispielsweise ankommende von abgehenden Lichtwellenleitern separieren zu können. Auf diese Weise kann auch der Spleißraum abgeteilt werden. Beim Herausnehmen der Spleiße für Servicearbeiten müssen jeweils immer zuerst die Lichtwellenleiterüberlängen herausgenommen werden, um Spleißarbeiten ausführen zu können. Die Spleiße können anschließend senkrecht oder waagerecht in einem Spleißraum untergebracht werden, wobei sie zweckmäßigerweise auf einer Spleißkassette angeordnet werden, auf der auch Lichtwellenleiterüberlängen übersichtlich angeordnet werden können.

Die Kabelmuffe gemäß der Erfindung kann auch aus mehreren Ringen bestehen, die übereinander je nach Größenbedarf aneinander gesetzt werden können. Die einzelnen Ringe werden dann beispielsweise mit normalen und an sich bekannten Dichtungsmaßnahmen gegeneinander abgedichtet. Bei einer derart teilbaren Kabelmuffe können auch ungeschnittene Kabel eingesetzt werden, wenn die Einführung in dieser Schnittebene erfolgt. Damit ist die Möglichkeit für die Anwendung der Anschneidetechnik gegeben.

Durch diese neue Technik ergeben sich nun verschiedene Besonderheiten. So können die Kabelmuffen gemäß der Erfindung in standardmäßigen Kernbohrungen in einfacher Weise in die Straßendecke eingebracht werden, wobei der Verbund der Fahrbahndecke durch diese Kernbohrung nicht zerstört wird. Die Verlegung der Mini- bzw. Mikrokabel und der dazugehörigen Muffen können in einfacher Weise in beliebigen Bereichen des Erdreichs bzw. der Straße, vorzugsweise längs einer Naht zwischen den Fahrbahnen in Nuten bzw. Kernbohrungen eingebracht werden. Bei einer derartigen Verlegetechnik wird die Fahrbahndecke im Grundaufbau nicht gestört. Erdreich wird nicht entnommen. Eine Verdichtung des Erdreiches ist nicht erforderlich. Das Absenken der Reparaturstelle durch Nachverdichtung ist nicht zu erwarten. So ist ein Auf- oder Weiterreißen nicht zu erwarten. Das Verlegen in eine mit üblichen Fräsmaschinen eingebrachten Verlegenut gestaltet sich einfach und das Verschließen wird beispielsweise durch Eingießen von Heißbitumen oder anderen Füllmitteln vorgenommen. Durch den kompakten Aufbau und durch den relativ kleinen Durchmesser der Kabelmuffe ist ausreichende Tragfähigkeit gegeben, wobei die Abdichtung des runden Muffenverschlusses keine Schwierigkeiten bereitet, da die Deckelabdichtung von den Kabelabdichtungen getrennt ist. Das sogenannte Faserhandling und der Fasereinlauf können in mehreren voneinander getrennten Ebenen erfolgen, so daß eine bessere Ausnützung des Muffenvolumens erzielt werden kann. Der Radius der Muffeninnenwand ist so abgestimmt, daß er die einlaufenden Lichtwellenleiter stützt, wobei eine Ausknickung nicht möglich ist.

Langgestreckte Kabelmuffen für die Anschlußtechnik mit den verwendeten Mikrokabeln eignen sich besonders für Durchverbindungen oder bei Verlängerung von Mikrokabeln mit unterschiedlichen Materialien oder unterschiedlichen Rohrdurchmessern. An langgestreckten Muffen können beispielsweise auch bei der Hausverkabelung sogenannte "Blown fiber - Adern" angeschlossen werden.

Runde, zylindrische Muffen eignen sich besonders für Richtungsänderungen im Kabelverlauf, zum Rangieren, Spleißen, Messen, Abzweigen, Aufteilen, Anschneiden, zum Überwinden von Höhenunterschieden bei verlegten Mikrokabeln zur Aufnahme von optischen Schaltern und der Elektronik für die Übertragungstechnik.

Sonstige Weiterbildungen der Erfindung sind in Unteranspruchen wiedergegeben.

Die Erfindung wird nun anhand von 32 Figuren näher erläutert.
- Figur 1: zeigt den Längsschnitt durch eine langgestreckte Muffe für Mikrokabel mit gleichen Durchmessern,
- Figur 2: zeigt eine langgestreckte Muffe für Mikrokabel verschiedener Durchmesser,
- Figur 3: zeigt einen Längsschnitt durch eine langgestreckte Muffe mit einem einseitig aufgesteckten Mikrokabel,
- Figur 4: zeigt eine zylindrische Muffe,
- Figur 5: zeigt eine zylindrische Muffe mit einem Speicherraum für Lichtwellenleiterüberlängen und Ablage bzw. Befestigung der Spleiße,
- Figur 6: zeigt eine zylindrische Muffe im Längsschnitt,
- Figur 7: zeigt eine zylindrische Muffe mit herausgezogenen Lichtwellenleiterüberlängen,
- Figur 8: zeigt eine runde Muffe mit Kabeleinführungseinheiten in verschiedenen Ebenen,
- Figur 9: zeigt eine runde Muffe, die in Einführungsrichtung geschnitten ist und sich für die Anschneidtechnik eignet,
- Figur 10: zeigt eine erweiterbare runde Muffe,
- Figur 11: zeigt eine zylindrische Muffe mit Ausgleichsschlaufen und tangentialen Kabeleinführungseinheiten,
- Figur 12: zeigt eine runde Kabelmuffe mit Schutzröhrchen für die Lichtwellenleiter in einer Ansicht von oben,
- Figur 13: zeigt eine runde Muffe mit ins Muffeninnere vorgeschobenen Mikrokabeln in einer Ansicht von oben,
- Figur 14: zeigt eine zylindrische Kabelmuffe, die in die Straßenoberfläche eingesetzt ist,
- Figur 15: zeigt eine zylindrische Kabelmuffe, mit einem Betonschutzgehäuse,
- Figur 16: zeigt eine Kabelmuffe in einfacher Ausführung
- Figur 17: zeigt in die Straßenoberfläche eingebaute Verbindungsmuffe, deren Deckel einen umlaufenden Kragen aufweist,
- Figur 18: zeigt in einer Skizze die Anordnung einer Muffe bei einer Durchverbindung,
- Figur 19: zeigt skizzenhaft eine Anordnung der Kabelmuffe bei einem T-Abzweig,
- Figur 20: zeigt in einer Skizze die Anordnung bei einer kreuzförmigen Abzweigung,
- Figur 21: zeigt eine langgestreckte Kabelmuffe mit Durchmesseranpassungen in Form von rohrförmigen Übergangsstücken bzw. Anpassungshülsen.
- Figur 22: zeigt die Kabelmuffe gemäß der Erfindung in einem Längsschnitt.
- Figur 23: zeigt einen Dichtkopf im Querschnitt.
- Figur 24: zeigt eine hintereinander liegende Spleißanordnung.
- Figur 25: zeigt eine Nebeneinanderanordnung von Lichtwellenleiter-Spleißen.
- Figur 26: zeigt eine Verteilungs- oder Abzweigmuffe.
- Figur 27: zeigt eine Montagevorrichtung für das Installieren der Kabelmuffe.
- Figur 28: zeigt die Zusammenführung der verschiedenen Lichtwellenleiter-Übertragungssysteme.
- Figur 29: zeigt die Zusammenführung, wenn sich der Kabelschacht im freien Erdreich befindet.
- Figur 30: zeigt eine offene Kernbohrung mit einer eingelegten Dehnungsschlaufe eines Mikrokabels.
- Figur 31: zeigt die eingesetzte Schutzvorrichtung.
- Figur 32: zeigt eine von oben zugängliche Kabelmuffe.

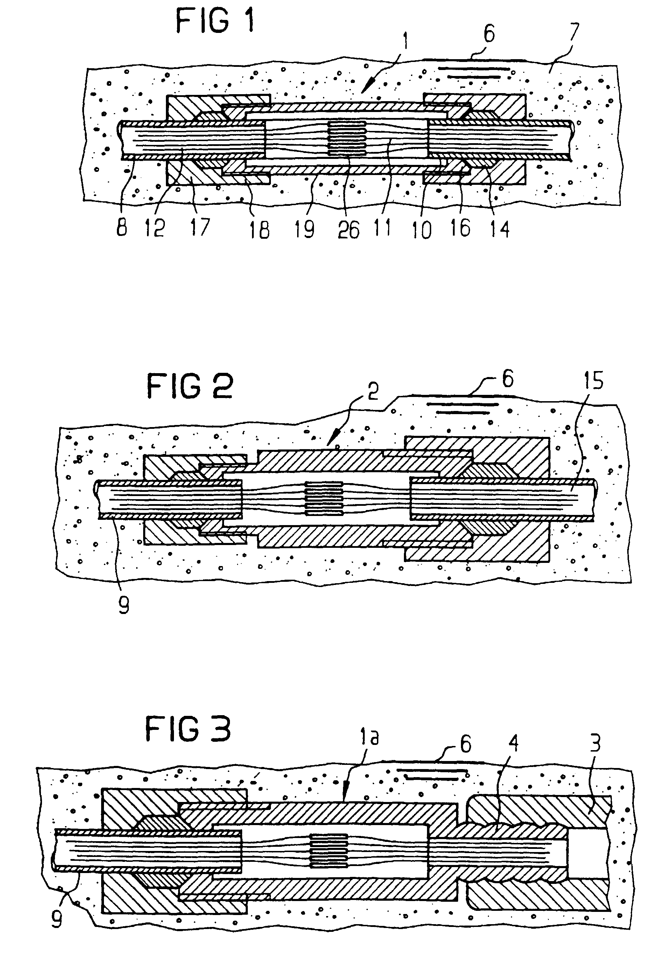

In Figur 1 ist eine schlanke, langgestreckte Kabelmuffe gemäß der Erfindung dargestellt, mit der eine Verbindung von röhrenförmigen Mini- bzw. Mikrokabeln ermöglicht wird. Die Mini- bzw. Mikrokabel bestehen jeweils aus einem Rohr 8 bzw. 10 - hier mit gleichem Durchmesser-, in dem die Lichtwellenleiter 11 eingezogen, eingeblasen oder vor dem Fügeverfahren des Rohres eingelegt werden. Innerhalb der Kabelmuffe 1 werden die Lichtwellenleiter 11 über Spleiße 26 miteinander verbunden. Die Verbindungsmuffe 1 besteht aus einem rohrförmigen Mittelteil 19 mit stirnseitigen Enden 16, auf denen Außengewinde angeordnet sind. Die eingeführten Rohre 8 bzw. 10 der Mini- bzw. Mikrokabel werden mit Hilfe von Dichtungseinlagen 14 und/oder Schneidklemmringen dichtend eingeführt, wobei der nötige Dichtungsdruck in den Kabeleinführungseinheiten 17 - 18 mit Hilfe von übergreifenden Überwurfmuttern 17 erfolgt, die an ihren freien Enden jeweils ein Innengewinde 18 aufweisen. Die gesamte Kabelmuffe 1 wird unterhalb der Straßenoberfläche 6 in das Erdreich 7 oder in eingeschnittene Verlegenuten eingesenkt. Da sie einen hohen mechanischen Schutz für Spleiße 26 darstellt, kann sie auch oberirdisch z.B. auf Mauerputz eingesetzt werden.

In Figur 2 wird eine langgestreckte Verbindungsmuffe 2 dargestellt, bei der Mikrokabel 9 und 15 mit verschiedenen Durchmessern miteinander verbunden werden. Dabei wird die gleiche Verbindungs- und Abdichttechnik wie bei der Kabelmuffe 1 nach Figur 1 verwendet, wobei lediglich die Einführungsdurchmesser an den Stirnseiten der Kabelmuffen verschieden sind und in jeweils eingeführten Mikrokabel 9 bzw. 15 angepaßt sind.

In Figur 3 wird eine Verbindungsmuffe la gezeigt, deren linke Einführungsseiten dem Ausführungsbeispiel nach Figur 1 entspricht, während die rechte Einführungsseite einen profilierten Eingangsstutzen 4 aufweist, auf den das weitergehende Mikrokabel 3 aufgesteckt und entsprechend abgedichtet ist. Die Abdichtung kann durch Verklebung oder durch Aufkrimpen des Mikrokabelrohres auf dem Einführungsstutzen erfolgen. Dieses Ausführungsbeispiel kann besonders bei der "Blown-Fiber"-Technik eingesetzt werden, bei der in einem verlegten Hohlrohr Lichtwellenleiter nachträglich eingeblasen werden. An den Einführungsstutzen 4 der Kabelmuffe la läßt sich leicht das betreffende Hohlrohr 3, z.B. aus Kunststoff ansetzen.

Die in den Figuren 1 bis 3 bzw. 21 gezeigten Ausführungsbeispiele eignen sich als reine Verbindungsmuffen, bei denen keine Überlängen von Lichtwellenleitern vorhanden sind, so daß sie als reine Reparatur- und Verbindungsglieder zwischen den Mini- bzw. Mikrokabeln gebraucht werden.

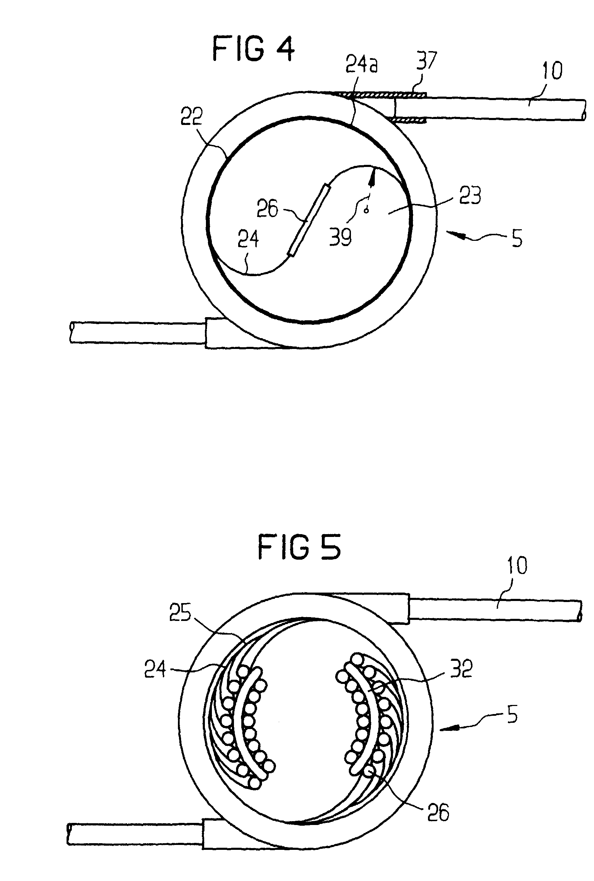

In Figur 4 ist eine runde, zylindrische Kabelmuffe 5 dargestellt, die beispielsweise senkrecht in eine Kernbohrung des Erdreiches bzw. des Straßenaufbaus eingesenkt werden kann. Die Kabeleinführungseinheiten 37 sind an der Muffenwandung tangential angeordnet, so daß die Lichtwellenleiter 24 der angesetzten Mikrokabel 10 an der Muffeninnenwandung 22 weitergeführt werden können. In dieser Weise können beispielsweise die Überlängen der Lichtwellenleiter in geordneter Weise abgelegt werden. Für erforderliche Spleiße 26 werden die Lichtwellenleiter 24 aus dem Überlängenverbund herausgenommen und gespleißt. Dabei ist zu beachten, daß bei der Spleißablage der zulässige Mindestbiegeradius 39 der Lichtwellenleiter nicht unterschritten wird. Der zylindrische Innenraum 23 der Kabelmuffe 5 kann in entsprechender Weise für die einzelnen Funktionen in entsprechende Abteilungen abgegrenzt werden, wobei bei diesem Ausführungsbeispiel die Spleiße 26 in einer waagrechten Ebene abgelegt werden.

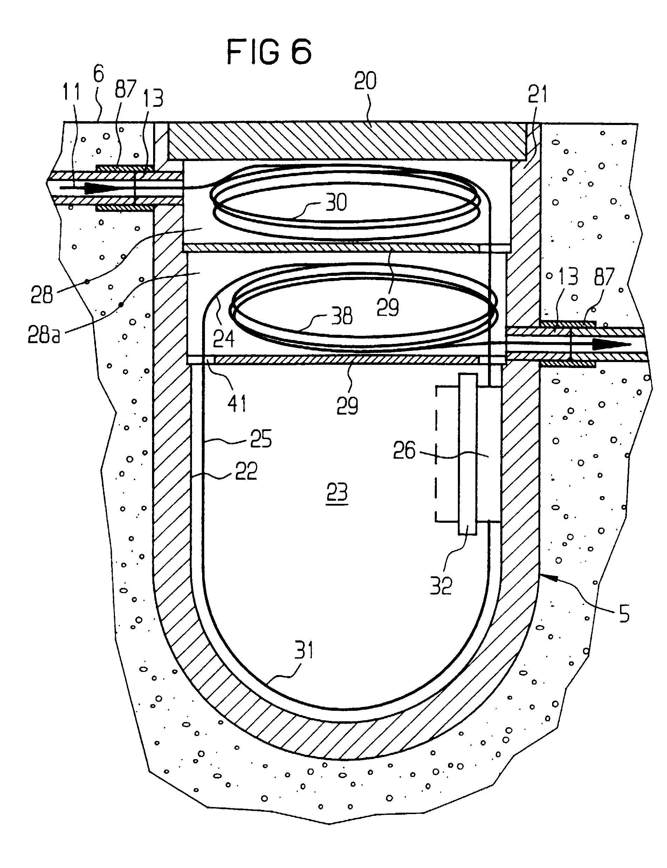

Figur 5 zeigt ein Ausführungsbeispiel für eine zylindrische Muffe 5, bei der die Lichtwellenleiterspleiße 26 senkrecht im zylindrischen Muffenraum angeordnet sind. Dabei werden hierfür beispielsweise sichelförmige Spleißkassetten 32 verwendet, die senkrecht nach oben für Servicearbeiten herausgenommen werden können. Die eingeführten Lichtwellenleiter 24 werden über angedeutete Führungen 25 so ausgelenkt, daß die minimal zulässigen Biegeradien nicht unterschritten werden können.

In Figur 6 ist eine zylindrische Kabelmuffe 5 für Mikrokabel dargestellt, die zur Erdreichseite hin haubenförmig abgeschlossen ist und die über einen Deckel 20 von der Oberfläche 6 her zugänglich ist. Der Deckel 20 ist hoch belastbar und schließt die Kabelmuffe 5 über ein Dichtungssystem 21 druckwasserdicht ab. Bei dieser gezeigten Ausführungsform ist die Kabeleinführungseinheit 13 im Muffenoberteil untergebracht, an dem das Rohr des Mikrokabels mit Hilfe einer Anpassungshülse 87 druckdicht angeschlossen ist. Die Lichtwellenleiter 11 werden durch diese Kabeleinführungseinheit 13 eingeführt und in Überlängen innerhalb des Muffenraums in mehreren Ebenen in Überlängen abgelegt. Im oberen Deck 28 werden hier die Lichtwellenleiterüberlängen 30 der eingeführten Lichtwellenleiter und im unteren Deck 28a die Überlängen 38 der abgehenden Lichtwellenleiter gespeichert. Die Durchführungen 41 in den jeweiligen Trennplatten 29 ermöglichen die Durchführungen der Lichtwellenleiter von einer Ebene zur anderen. Der untere Bereich der Kabelmuffe dient als Spleißraum 23, in dem die Spleiße 26 an herausnehmbaren Spleißkassetten 32 befestigt sind. Wenn Service- oder Spleißarbeiten notwendig sind, werden nach Abnahme des Deckels 20 die Überlängenpakete 30 und 38 herausgenommen, so daß schließlich die Spleißkassetten entnommen werden können. Der haubenförmige Abschluß der Innenwandung 22 der Kabelmuffe 5 ist so gewölbt, daß er als Führung für die zu den Spleißen führenden Lichtwellenleiter 31 dienen kann. Durch die Markierung 25 soll angedeutet werden, daß auch im Spleißraum entsprechende Führungen für Lichtwellenleiter bzw. Lichtwellenleitergruppen eingesetzt werden können, wobei sich die Übersichtlichkeit verbessern läßt. Die Abführung der Lichtwellenleiter in das angeschlossene Rohr des abgehenden Mikrokabels erfolgt wiederum über eine Kabeleinführungseinheit 13, die hier in der Ebene des Speicherraumes 28a für die abgehenden Lichtwellenleiter 38 angeordnet ist. Die hülsenförmigen Kabeleinführungseinheiten 13 sind hier schematisch als krimpbare Durchführungen gezeichnet, sie können aber gemäß der besonderen Ausführung nach der Erfindung auch tangential angesetzt werden, so daß auch hier die oben beschriebenen Vorteile zum Tragen kommen.

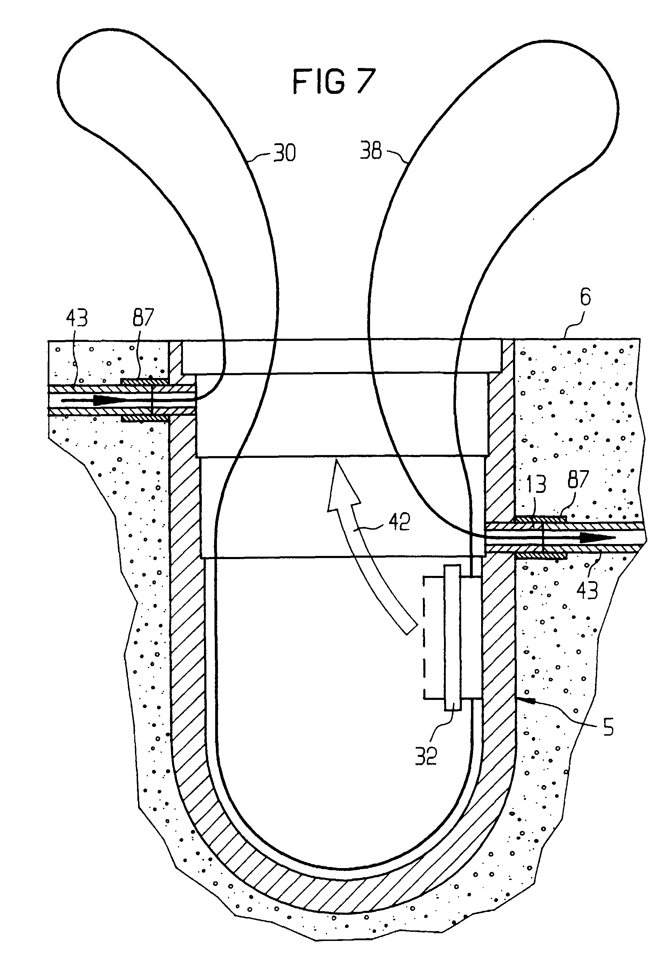

In Figur 7 wird dargestellt, wie die Entnahme der einzelnen Einheiten aus der Kabelmuffe 5 nach Figur 6 für Servicearbeiten vor sich geht. So werden zunächst die Überlängen 30 der ankommenden Lichtwellenleiter und dann die Überlängen 38 der abgehenden Lichtwellenleiter nach oben entnommen, so daß dann der Zugang zum Spleißraum und damit zu den dort befindlichen Spleißkassetten 32 frei ist. Wie der Pfeil 42 andeutet, können dann die Spleißkassetten 32 nach oben herausgenommen und in entsprechenden Spleißgeräten abgelegt werden.

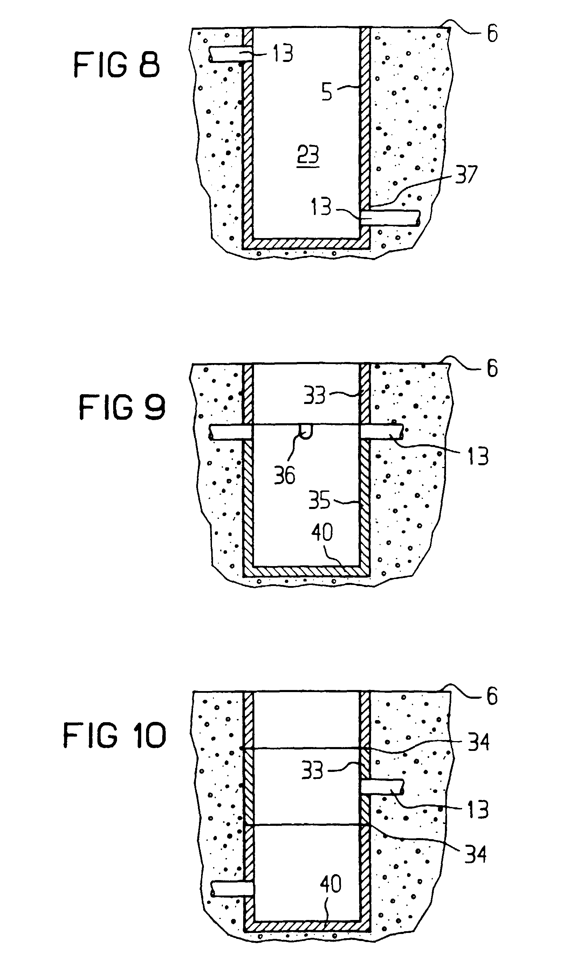

Die Figuren 8 bis 10 zeigen Grundeinheiten, aus denen die Kabelmuffen gemäß der Erfindung zusammengestellt werden können. Diese Grundeinheiten werden in entsprechende Kernbohrungen der Erd- bzw. Straßenoberfläche 6 eingelassen.

Vorteilhaft ist dabei die zylindrische Form der Muffe, die einseitig durch einen flachen Boden abgeschlossen wird. Dadurch werden bei einer statischen Belastung von oben die Kräfte gleichmäßig auf eine große Fläche verteilt. Ein Absinken in den Straßenboden ist auch bei hohem Verkehrsaufkommen nicht zu erwarten.

Figur 8 zeigt eine einfache Form der Kabelmuffe 5, wobei die Kabeleinführungseinheiten 13 in verschiedenen Ebenen angeordnet sind. Dadurch können Höhenunterschiede zwischen den Kabeltrassen überwunden werden, wie sie zwischen Straßenverlegung (ca. 7 - 15 cm) und Erdverlegung (ca. 70 cm) auftreten. Diese Ausführungsform besteht aus einem einzigen Gehäuse des Innenraums 23 mit den vorher beschriebenen Einzelheiten ausgestattet werden kann. Die Kabeleinführungseinheiten 13 können beispielsweise mit Dichtnippeln, die an der Stelle 37 eingesetzt werden, abgedichtet werden.

In Figur 9 wird ein Ausführungsbeispiel vorgestellt, das aus mehreren Abschnitten 33 und 35 besteht, die übereinander angeordnet werden. Hier sind die Kabeleinführungseinheiten 13 und 36 in der Trennebene zwischen den beiden Abschnitten 33 und 35 angeordnet, so daß es möglich ist, auch ungeschnittene Mikrokabel bzw. ungeschnittene Lichtwellenleiteradern einzuführen. Auf diese Weise kann hier die Anschneidetechnik angewandt werden. Bei einer zylindrisch ausgeführten Kabelmuffe handelt es sich bei den Abschnitten 33 und 35 um einzelne Ringe, die in der Trennebene geeignete Dichtungssysteme enthalten. Als Abschluß wurde hier ein ebener Boden 40 gewählt.

Die Figur 10 zeigt, daß eine zylindrische Kabelmuffe beispielsweise auch aus drei einzelnen Abschnitten, gegebenenfalls Ringen, zusammengestellt werden kann, wobei durch Verdrehen der einzelnen Abschnitte die Richtung der Kabeleinführungseinheiten 13 geändert werden kann. So kann beispielsweise mit einer derartigen Kabelmuffe auch eine rechtwinklige Abzweigung verwirklicht werden. Auch hier sind in den Trennebenen 34 zwischen den einzelnen Abschnitten entsprechende Dichtungssysteme eingesetzt.

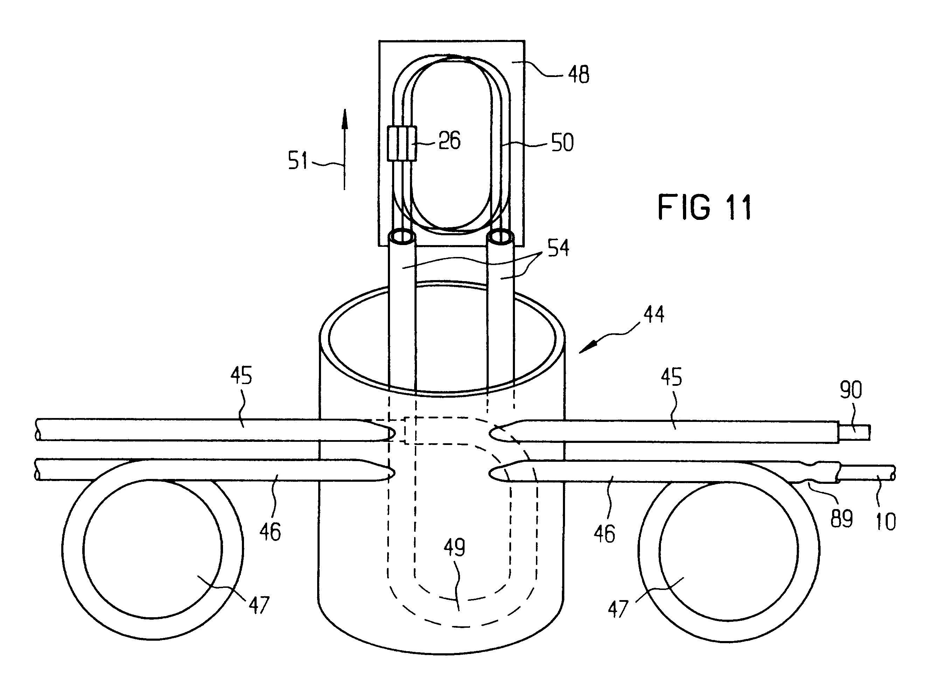

In Figur 11 wird ebenfalls in schematischer Weise der Aufbau einer zylindrischen Kabelmuffe 44 gezeigt, bei der die Kabeleinführungseinheiten 45 in Form von rohrförmigen Ansätzen tangential in den Muffenkörper eingeführt werden. Auf diese Weise können die Lichtwellenleiter im Inneren der Kabelmuffe entlang der inneren Muffenwandung ohne Knickgefahr weitergeführt werden. Weiterhin wird gezeigt, daß die Kabeleinführungseinheiten 46, die ebenfalls bei diesem Beispiel tangential eingeführt werden, mit sogenannten Ausgleichsschlaufen 47 versehen sind. Diese Ausgleichsschlaufen 47 dienen zum Ausgleich von Toleranzen beim Verlegen der Mikrokabel und Installation der Muffen oder auch für den Ausgleich von Längsbewegungen bei unterschiedlichen Wärmeausdehnungskoeffizienten. Der Durchmesser dieser Ausgleichsschlaufen ist so bemessen, daß auf jeden Fall der minimal zulässige Biegeradius der Lichtwellenleiter nicht unterschritten wird, wobei gewährleistet sein muß, daß der Ausgleich bei normaler Belastung knickfrei erfolgt. In dieser Skizze ist auch angedeutet, daß die Spleißkassette 48 mit entsprechender Spleißreserve 50 infolge der Lichtwellenleiterüberlängen 49 in Richtung 51 aus der Muffe in Servicestellung herausgenommen werden kann. In Schutzröhrchen 54 werden die Lichtwellenleiter innerhalb und außerhalb der Muffe vor mechanischer Belastung geschützt und sichern ein knickfreies Handling, ohne den Mindestbiegeradius zu unterschreiten. Die Schutzröhrchen 54 führen die Lichtwellenleiter von der Kabeleinführungseinheit 45, 46 bis zur Spleißkassette 48. Die Ablage der Rangierüberlänge 49 im Muffeninnenraum im geschlossenen Zustand ist gestrichelt angedeutet. Der Anschluß an die Mikrokabel an die Kabeleinführungseinheiten 45 bzw. 46 werden im folgenden näher erläutert. Oben rechts ist eine nicht benutzte Kabeleinführung 45 mit einem Blindstopfen 90 abgedichtet. Im Bild rechts unten wurde eine Krimpverbindung 89 zum Mikrokabel 10 prinzipiell dargestellt.

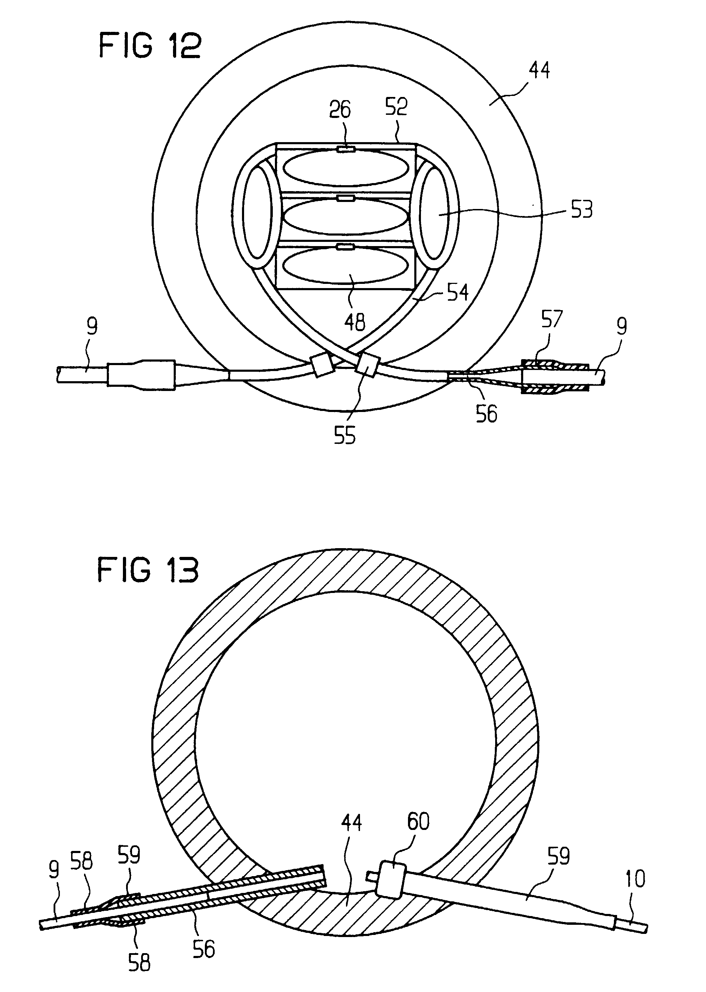

In Figur 12 wird eine zylindrische Kabelmuffe 44 in einer Ansicht von oben skizziert, bei der die Kabeleinführungseinheiten aus Mikrokabeldurchführungen 56 bestehen, durch die die Lichtwellenleiter ins Innere der Kabelmuffe eingeführt werden. Die Einführungen sind dabei nahezu tangential zur Gehäuseinnenwand angeordnet, wobei das freie, nach außen weisende Ende in dieser Darstellung düsenförmig erweitert ist, um die Lichtwellenleiter in das flexible Schutzröhrchen 54 einfädeln zu können. Diese Schutzröhrchen 54 werden auf die Innenseite der Kabeleinführungseinheiten 56 aufgesteckt 55. Zum Anschluß der Rohre 9 der Mikrokabel wird meistens eine Krimphülse verwendet. Desgleichen kann jedoch auch, wie hier dargestellt ist, ein Schrumpfschlauchstück 57 verwendet werden. Die Lichtwellenleiter der Mikrokabel werden durch die Kabeleinführungseinheiten und durch die flexiblen Schutzrohre 54 über Ausgleichsschlaufen 53 den einzelnen Bereichen, z.B. den Spleißkassetten 48 zugeführt. Der Übergang kann mit dem sogenannten Maxibündeladaptern erfolgen. Damit können bei Bedarf LWL auf mehrere Schutzrohre aufgeteilt werden. Es besteht auch die Möglichkeit, Lichtwellenleiter innerhalb der Spleißkassetten 52 auf mehrere Kassetten 48 aufzuteilen. Dazu werden die Lichtwellenleiter durch den Boden der Kassetten 48 geführt.

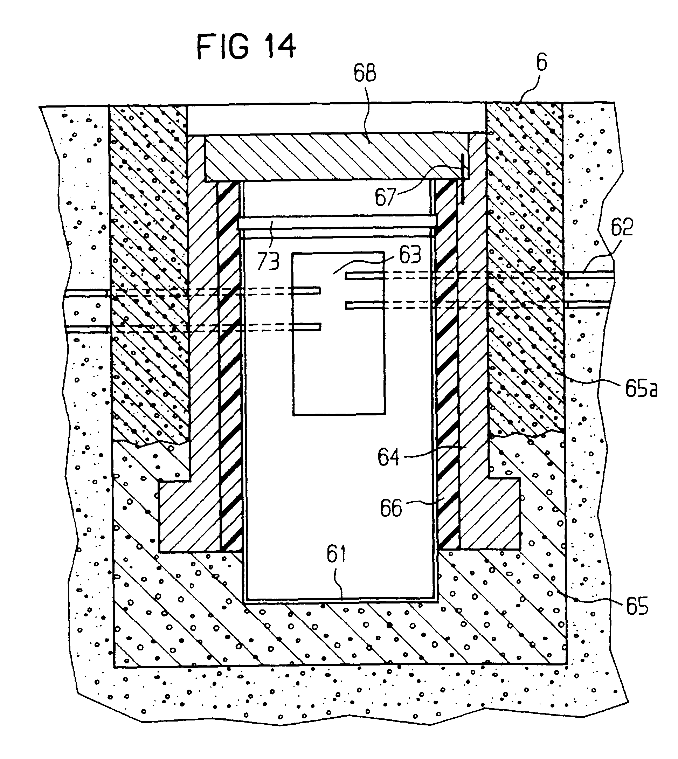

Die Figur 13 zeigt in einer Skizze eine in die Straßenoberfläche eingebaute Verbindungmuffe in einer Ansicht von oben. So können die einzelnen Mikrokabel 9 auch bis in das Muffeninnere vorgeschoben werden. Die Zugentlastung und die Abdichtung erfolgt ebenfalls durch Krimpung an den Stellen 58. Es kann jedoch auch wie hier in der linken Bildhälfte dargestellt ist, ein zusätzlicher Schrumpfschlauch 59 oder eine dauerelastische ringförmige Dichtung verwendet werden, mit dessen Hilfe die Abdichtung zur Kabeleinführungseinheit 56 erfolgt. Weiterhin könnte auch eine Abdichtung im Inneren Kabelmuffe 44 am Ende der Durchführung mit entsprechenden Dichtungsmitteln 60 erfolgen. Hierzu eignet sich beispielsweise eine ringförmige Lippendichtung 60, die im Prinzip als Simmerring in der rechten Bildhälfte dargestellt ist.

In Figur 14 ist eine in die Straßenoberfläche 6 eingebaute Verbindungsmuffe 61 gezeigt, die in einem metallischen Schutzgehäuse 64 gegen mechanische Belastungen gesichert eingesetzt ist. Ein Gußeisendeckel 68 ist unverlierbar mit einem Drehbolzen 67 am Schutzgehäuse 64 befestigt. Das Schutzgehäuse 64 hat eine Öffnung 63 in der Wandung für die Einführung der Mikrokabel 62. Das Schutzgehäuse 64 wird in die Kernbohrung der Straßenoberfläche 6 im unteren Bereich wie die Position 65 zeigt einbetoniert, um ein Absenken zu vermeiden. Der restliche Ringspalt wird mit Heißbitumen oder 2-komponentiger Vergußmasse 65a geschlossen. Der Deckel 68 ist leicht gegenüber der Fahrbahndecke versenkt und jederzeit für Servicearbeiten zugänglich. Der Dichtdeckel 73 wird weiter unten beschrieben. Das Schutzgehäuse 64 und die Kabelmuffe 61 sind konzentrisch zueinander angeordnet, wobei der Zwischenraum mit einer weichen Ausschäumung 66 versehen werden kann.

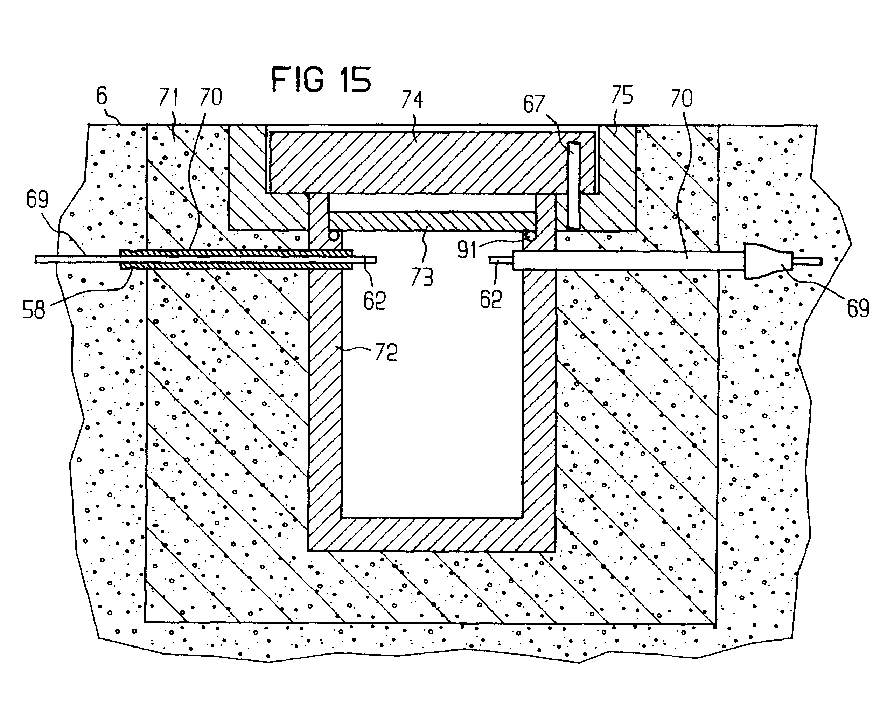

Die Figur 15 vermittelt eine Skizze über eine in die Straßenoberfläche 6 eingebaute Verbindungsmuffe mit einem Beton-Schutzgehäuse 71, das die Verbindungsmuffe gegen mechanische Belastungen schützt. Ein derartiges Schutzgehäuse aus Fertigbeton eignet sich besonders für die Einsenkung in eine gepflasterte Straßenfläche. Auch hier ist ein hochbelastbarer Deckel 74 vorgesehen, der in einen Ring 75 eingelassen wird. Auch hier ist ein Drehbolzen 67 vorgesehen. Die Kabeleinführungseinheiten 70 sind hier nicht flexibel und müssen wegen der Mikrokabel 62 geradlinig in die Kabelmuffe 72 eingeführt werden. Die Kabelabdichtung erfolgt außerhalb des Beton-Schutzgehäuses 71 durch Krimpung 58 (linke Seite) oder mit Hilfe eines Schrumpfschlauchstückes 69 (rechte Seite). Eventuelle Ausgleichsschlaufen müssen außerhalb des Beton-Schutzgehäuses 71 gesetzt werden und sind hier nicht dargestellt. Die Kabelmuffe 72 ist nach oben hin unterhalb des belastungssicheren Deckels 74 mit einem Dichtdeckel 73 verschlossen. Dieser dichtet den Muffenraum nach unten mit einem O-Ring 91 ab. Der Dichtdeckel 73 wird in dieser Skizze z.B. mit einer ringförmigen Schraube gesichert und fixiert.

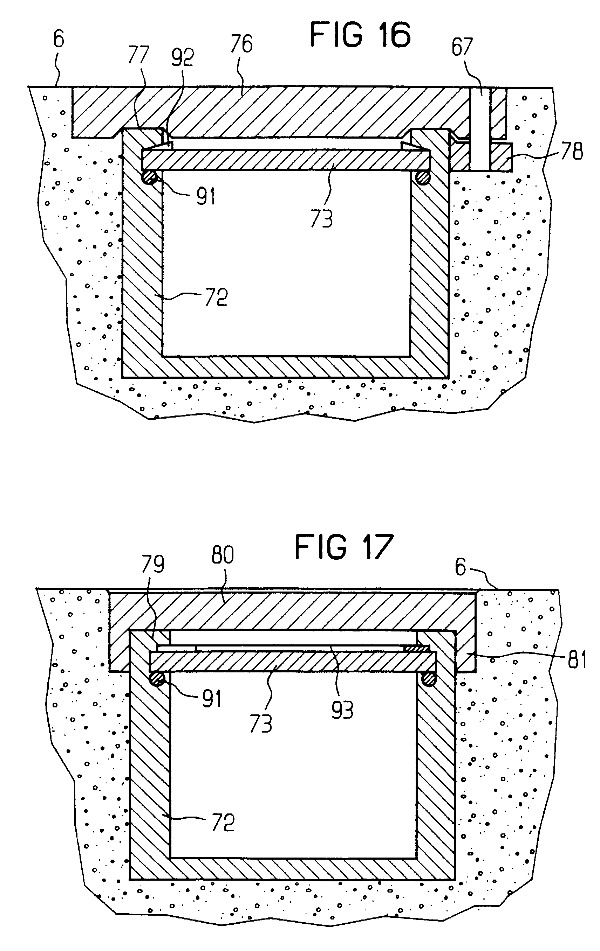

Figur 16 verdeutlicht in einer Skizze eine in die Straßenoberfläche 6 eingebaute Verbindungsmuffe 72, wobei es sich hier um eine einfache mechanische Kabelmuffe für Mikrokabel handelt. Aus Gründen der Übersichtlichkeit wurden die bereits vorher erläuterten Kabeleinführungseinheiten nicht dargestellt. Der Gußdeckel 76 nimmt die mechanischen Belastungen auf und leitet diese direkt in das Muffengehäuse 72 ein. Der Gußdeckel 76 ist mit einer Zentriernut 77 versehen, die eine verrutschungssichere Auflage gewährleistet. Für die Führung des Gußdeckels 76 sind seitlich Scharniereinrichtungen 67 und 78 vorgesehen, durch die eine ausreichende Positionierung gesichert ist. Die Kabelmuffe 72 ist wiederum mit einem dichten Deckel 73 nach oben hin unterhalb des Gußdeckels 76 separat abgedichtet. Die Abdichtung erfolgt z.B. durch einen O-Ring 91. Der Deckel 73 wird in dieser Skizze durch Sicherungskeile oder Sicherungsstifte 92 fixiert, die für eine ausreichende Deckelpressung auf den O-Ring sorgen.

In Figur 17 wird eine Kabelmuffe 72 gezeigt, die der aus Figur 16 entspricht, wobei hier der Belastungsdeckel 80 einen umlaufenden Kragen 81 aufweist. Durch diesen umlaufenden Kragen 81 wird der Gußdeckel 80 auf der umlaufenden Wandung 79 der Kabelmuffe 72 ausreichend gegen Verschieben fixiert. Der Deckel 73 wird in diesem Fall durch einen Sprengring (Seegerring) fixiert, der in einen Ringnut einrastet. Das Öffnen erfolgt mit einer Spezialzange. Die Muffe ist vor unautorisiertem Zugriff gesichert.

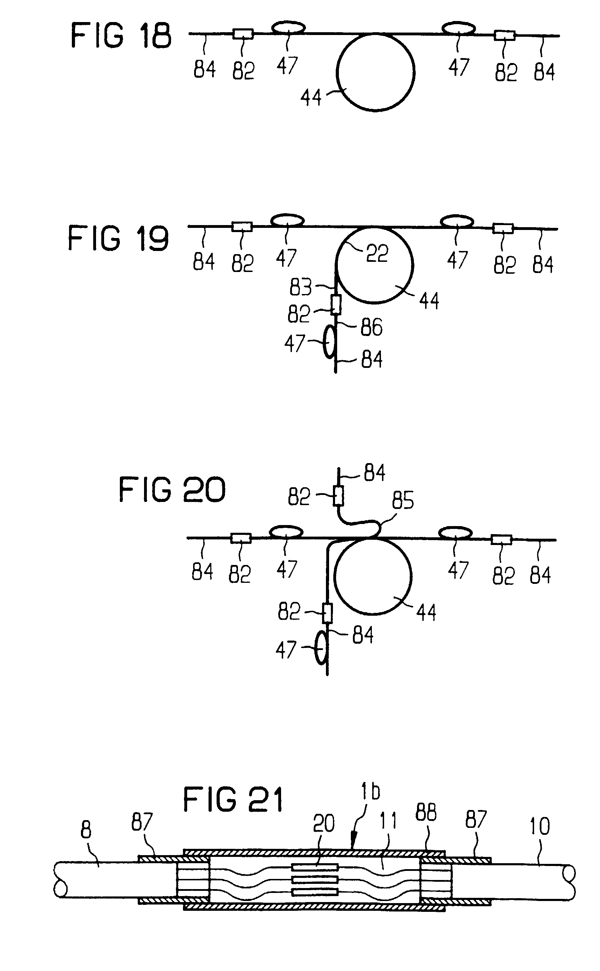

Figur 18 vermittelt in einer Skizze die Verhältnisse bei einer Durchverbindung von Mikrokabeln 84, die über Anschlußeinheiten 82 und Ausgleichsschlaufen 47 an die Kabeleinführungseinheiten der Kabelmuffen 44 angeschlossen werden. Um die Typenvielfalt zu reduzieren, sind die Muffen möglichst serienmäßig mit 4 Kabeleinführungseinheiten versehen. Werden nicht alle Kabeleinführungen benötigt, so sind nicht belegte Kabeleinführungen mit Blindstopfen druckwasserdicht abzuschließen.

Die Figur 19 vermittelt hingegen das Prinzip bei einer T-Abzweigung von Mikrokabeln 84. Hier werden ebenfalls zwei der Mikrokabel 84 in der oben beschriebenen Weise in die Kabelmuffe 44 eingeführt, wobei ein weiteres Mikrokabel 84 senkrecht zu dieser ersten Trassenführung tangential aus der Kabelmuffe 44 ausgeführt wird. Dabei ist das abgezweigte Mikrokabel 84 über eine Kabeleinführungseinheit 83 direkt ohne Ausgleichsschlaufe eingeführt. Die Ausgleichsschlaufe 47 ist in diesem Fall an das Kabelende des Mikrokabel 84 angebracht worden. Nicht benutzte Kabeleinführungen sind mit einem Blindstopfen druckwasserdicht verschlossen.

In der Figur 20 wird eine kreuzförmige Abzweigung skizziert, bei der die in den Figuren 18 und 19 gezeigten Grundprinzipien angewandt werden. Dabei kann es zweckmäßig sein, daß die Ausgleichsschlaufen für die abzweigenden Mikrokabel 84 bogenförmig aufgezogen sind, wie es an der Stelle 85 angedeutet ist. Ausgleichsschlaufen 47 werden direkt an den Mikrokabelenden angebracht.

Aus den skizzenhaft aufgezeigten Grundprinzipien in den Figuren 18, 19 und 20 läßt sich erkennen, daß eine zylindrische Kabelmuffe gemäß der Erfindung für die Verlegung von Mini- bzw. Mikrokabeln besonders vorteilhaft ist. Aufgrund der Möglichkeit zur tangentialen Einführung der relativ starren Rohre der Mikrokabel lassen sich problemlos Richtungsänderungen in der Trassenführung gestalten.

In Figur 21 ist eine Variante der schlanken Verbindungsmuffe 1b abgebildet. Bei dieser werden die eingeführten Rohre 8 und 10 durch plastische Verkrimpung eines weicheren Metalles bleibend festgelegt. Dazu werden Übergangsstücke 87 aus Weichmetall druckwasserdicht und dauerhaft auf die Rohrenden aufgekrimpt. Ein Außenrohr 88, welches an beiden Enden auf die Übergangsstücke 87 aufgekrimpt wird, schützt die Spleiße 26. Die Innenbohrung der Übergangsstücke 87 kann auf den Außendurchmesser des jeweiligen Mikrokabels 8 oder 10 abgestimmt werden.

Die Ausgleichsschlaufen 47 können sowohl an den Kabeleinführungen bzw. Kabeleinführungseinheiten als auch direkt an den Enden der Mikrokabel angebracht werden.

Die Kabeleinführungseinheiten der Kabelmuffe können auch als Flanscheinheiten ausgebildet werden, wobei dicht eingesetzte Steckereinheiten für die Anschlüsse der Lichtwellenleiter vorgesehen sind. Die Lichtwellenleiter sind ebenfalls mit Steckereinheiten versehen, so daß ein problemloser Anschluß erfolgen kann, wobei die Mini- bzw. Mikrokabelenden mit angepaßten Flanscheinheiten zur dichten Ankopplung versehen sind.

Weiterhin kann die gesamte Kabelmuffe, bestehend aus Muffenkörper, Deckel, Spleißkassette, Schutzschlauch für Lichtwellenleiterüberlängen, Kabeleinführungseinheiten, Dichtungssystemen, Krimpverbindungen und Ausgleichsschlaufen werksseitig vorkonfektioniert werden.

Einer Weiterbildung der Erfindung liegt die Aufgabe zugrunde, schlanke Verbindungs- oder Aufteilungsmuffen für Mikrokabel zu schaffen, deren Durchmesser nur geringfügig größer ist als der Durchmesser des Mikrokabels und bei der mit einfachen Dichtungsverfahren die Mikrokabeleingänge abgedichtet werden können. Die gestellte Aufgabe wird mit einer Kabelmuffe der eingangs erläuterten Art dadurch gelöst, daß Dichtköpfe aus verformbarem Material, vorzugsweise aus einem Metall, auf die Rohre der Lichtwellenleiter-Kabel dichtend an umlaufenden Krimpstellen aufgekrimpt sind, daß das Muffenrohr ebenfalls aus verformbarem Material, vorzugsweise aus einem Metall, besteht und an seinen Stirnseiten auf die Dichtköpfe an umlaufenden Krimpstellen aufgekrimpt ist, daß das Muffenrohr in der Länge so bemessen ist, daß ausreichende Lichtwellenleiter-Überlangen in wellenförmiger Ausdehnung und Lichtwellenleiter-Spleiße angeordnet werden können.

Weiterhin ist Aufgabe einer Weiterbildung der Erfindung, daß mit einer derartigen Verbindungs- oder Aufteilungsmuffe eine dichte Spleißverbindung hergestellt wird. Diese Aufgabe wird gelöst nach den Merkmalen des Anspruchs 51.

Die schlanke Verbindungsmuffe gemäß der Erfindung für die beschriebenen Mikrokabel besteht im wesentlichen aus zwei Dichtköpfen und einem Muffenrohr. Die Dichtköpfe sind auswechselbar für die verschiedenen Mikrokabeldurchmesser in ihrem Innendurchmesser gestuft und optimiert. Die Verbindung zwischen den Dichtköpfen und dem Ende des Rohres des Mikrokabels erfolgt durch einen Krimpvorgang. Bei diesem wird das weiche Material, insbesondere Metall, des konzentrischen Dichtkopfes bleibend verformt und auf das Rohr des Mikrokabels dicht aufgepreßt. Zur Erhöhung der Dichtwirkung können die Dichtköpfe in den Krimpbereichen mit umlaufenden Riefen versehen werden. Die gleiche Wirkung ist auch erreichbar, wenn mehrere Krimpungen hintereinander liegend durchgeführt werden. Innerhalb der Kabelmuffe können nun mehrere Spleiße gemeinsam in einem Mehrfaserschrumpfspleißschutz abgelegt werden. Durch Wärmeeinwirkung wird eine Versiegelung der Spleiße geschaffen. Zum Spleißen können an sich bekannte Mehrfaserspleißgeräte, wie zum Beispiel das Spleißgerät X120 der Firma RXS, verwendet werden. Es können jedoch auch herkömmliche Thermospleißgeräte für Einzelfasern eingesetzt werden, zum Beispiel das Gerät X75 der Firma RXS. Um Kreuzungen und Überschläge der Spleiße im Spleißschutz zu vermeiden, sind die Einzel-Lichtwellenleiter zu beiden Seiten des Spleißschutzes mit einem Klebeband zu fixieren. Vorzugsweise erfolgt eine parallele Ausrichtung der Einzel-Lichtwellenleiter und deren Befestigung in einer Planarhalterung für Lichtwellenleiter, wie sie an sich bekannt sind. Abschließend sind alle Spleiße gemeinsam mit einem Spleißschutz zu versiegeln. Bei wenigen Fasern können statt dem Mehrfaserspleißschutz auch mehrere Krimpspleißschutzteile eingesetzt werden. Die Spleiße können hintereinander oder auch nebeneinander in der Kabelmuffe angeordnet werden. Damit das Muffenrohr ohne Beschädigung der Lichtwellenleiter über die Spleiße geschoben werden kann, müssen die Lichtwellenleiter an den Spleißen geführt werden, so daß eine Befestigung an den Spleißen empfehlenswert ist. Der Spleißvorgang wird zweckmäßig auf einem Arbeitstisch ausgeführt, auf dem die zu spleißenden Lichtwellenleiter-Enden in teilbaren Befestigungen geklemmt werden. Nach dem Spleißvorgang wird das Spleißgerät wieder entnommen, z.B. in den Arbeitstisch versenkt. Anschließend wird auf jedes Rohrende der Mikrokabel der jeweilige Dichtkopf aufgeschoben und über den gesamten Umfang durch Krimpen dichtend fixiert. Für die weitere Montage wird dann eine der Mikrokabelbefestigungen entfernt und das Muffenrohr mit Hilfe einer Führung über die Spleiße geschoben bis der zweite Dichtkopf vom Muffenrohr erfaßt wird. Die erforderliche Lichtwellenleiter-Überlänge innerhalb der Muffe wird nun durch Verschieben mindestens eines Muffenkopfes erreicht. Dazu sind die Befestigungen der Rohrenden der Mikrokabel zu verschieben. Danach werden beide Enden des Muffenrohres mit einer Krimpvorrichtung, zum Beispiel einer Krimpzange radial auf die Dichtköpfe gekrimpt. Alle Arbeitsvorgänge bei der Montagevorrichtung sind wegen der besseren Reproduzierbarkeit mit Längsanschlägen oder zumindest optischen Markierungen versehen.

Eine Lichtwellenleiter-Aufteilung auf verschiedene Verzweigungskabel kann mit speziell gestalteten Dichtköpfen, die mit mehreren Kabeldurchführungen versehen sind, erreicht werden. Die Festlegung und Dichtung an diesen Kabeldurchführungen, die mit Kabeleinführungsstutzen erfolgt, wird außerhalb der Kabelmuffe durch Krimpung vorgenommen. Alternativ kann auf eine Krimpung zwischen dem Muffenrohr und dem Muffenkopf verzichtet werden, wenn stattdessen beide Teile miteinander verschraubt oder durch einen Schrumpfschlauch dichtend fixiert werden.

Der Kabelmuffeninnenraum kann bei Bedarf auch mit Füllmasse ausgefüllt werden. Dazu ist das Muffenrohr mit Füllbohrungen versehen, die beispielsweise mit Klemmringen oder mit einem Heiß- oder Kaltschrumpfschlauch verschlossen werden.

So ergeben sich bei einem Aufbau gemäß der Erfindung folgende Vorteile gegenüber dem bisherigen Stand der Technik.
- Es handelt sich um eine schlanke, nicht mehr zu öffnende Kabelmuffe aus plastisch verformbarem Metall.
- Die Muffe ist querdruckstabil, zugfest, torsionssteif und druckwasserdicht.
- Die Montage der aus wenig Einzelteilen bestehenden Kabelmuffe gestaltet sich schnell und einfach.
- Bei den metallischen Dichtungen handelt es sich um druckwasserdichte Abdichtungen, die temperatur- und alterungsbeständig zugleich sind.
- Bei der Abdichtung sind keinerlei Kunststoff- oder Gummidichtungen vorhanden, so daß kein Fließen von Materialien auftritt.
- Es werden nur wenige, ringförmige und konzentrische Dichtungen mit großer Dichtfläche verwendet.
- Längsdichtungen entfallen.
- Durch Krimpung wird eine dauerhafte, zug-, druck- und tor sionskraftstabile, druckwasserdichte Lichtwellenleiterkabel-Dichtkopf-Verbindung hergestellt.
- Durch Krimpung wird eine dauerhafte, druckwaserdichte Dichtkopf-Muffenrohr-Verbindung hergestellt.
- Die Dichtköpfe bestehen beispielsweise aus plastisch ver formbarem Metall, z.B. Kupfer, Aluminium.
- Für den Krimpvorgang ist eine einfache Standard-Krimpzange mit entsprechenden Einsätzen ausreichend, die die Vorformung plastisch durchführt.
- Mehrere Krimpungen hintereinander erhöhen die Dichtheit und Auszugskraft der Mikrokabelenden.
- Durch umlaufende Riefen auf dem Dichtkopf kann die Dichtwirkung erhöht werden.
- Die Kabelmuffe kann aufgrund des geringen Durchmessers in Achsrichtung der Mikrokabel verlegt werden, so daß eine Aufweitung der Verlegenut ausreicht, wobei die Verlegetiefe des Mikrokabels ebenfalls ausreichend ist.
- Durch das metallische Muffenrohr und die metallischen Dichtköpfe ist eine elektrische Durchverbindung des Mikrokabels gegeben.
- Das Krimpen duktiler Kupfermikrokabel als auch harter, federnder Stahlröhrchen ist möglich.
- Die Kabelmuffe ist knicksteif und sichert somit die Einhaltung der Lichtwellenleiter-Biegeradien bei der Verlegung.
- Die Dichtköpfe der Kabelmuffe mit verschiedenem Innendurchmesser sind austauschbar, haben jedoch gleiche Außendurchmesser.
- Die Muffenköpfe verfügen in der Längsbohrung über einen Längenanschlag für das Mikrokabel, so daß ein Eindringen des Mikrokabels in das Kabelmuffeninnere verhindert wird. Die Bohrungen der Muffenköpfe sind angefast und erleichtern die Montage beim Einführen der Mikrokabel.
- Durch diesen Aufbau ist eine Standardgröße der Muffe vorgegeben für alle Durchmesser von in Frage kommenden Mikrokabeln.
- Durch die Austauschbarkeit der Dichtköpfe ist auch ein Verbinden von Mikrokabeln verschiedener Außendurchmesser möglich.
- Es können Mikrokabel mit niedriger wie auch mit hoher Lichtwellenleiter-Anzahl miteinander verspleißt werden.
- Durch einen Schrumpfspleißschutz können mehrere Lichtwellenleiter-Spleiße geschützt werden.
- Es können sowohl Einzel-Lichtwellenleiter als auch Lichtwellenleiter-Bändchen in der Muffe untergebracht werden.
- Die Lichtwellenleiter-Spleiße können je nach Muffenrohrweite hintereinander oder auch nebeneinander angeordnet werden.
- Für die Spleißung können Standardwerkzeuge verwendet werden wie Spleißschutz und Thermospleißgerät für Lichtwellenleiter.
- Durch die Länge der Muffe können zu beiden Seiten der Lichtwellenleiter-Spleiße ausreichend Lichtwellenleiter-Überlängen aufgenommen werden.
- Die Lichtwellenleiter-Spleiße sind innerhalb der Kabelmuffe frei beweglich.

Als verformbare Materialien können zum Beispiel verwendet werden: Kupfer, Knetlegierungen auf Kupferbasis, Aluminium, kaltverformbare Aluminiumlegierungen oder plastisch verformbarer, nicht gehärteter, rostfreier Stahl.

Weiterhin kann die Abdichtung zwischen dem Dichtkopfaußenmantel und dem Muffenrohr und/bzw. zwischen der Dichtkopfbohrung und dem Rohrende des Mikrokabels alternativ auch durch eine Schneidklemmverbindung erfolgen, wie an sich aus der Sanitär-Installationstechnik bekannt ist. Die hierzu verwendeten Schneidklemmringe werden durch Überwurfmuttern plastisch verformt und dichten dadurch die konzentrischen, rohrförmigen Muffenteile gegeneinander ab. Hierzu müssen jedoch Innen- bzw. Außengewinde an den entsprechenden Dichtköpfen angebracht werden.

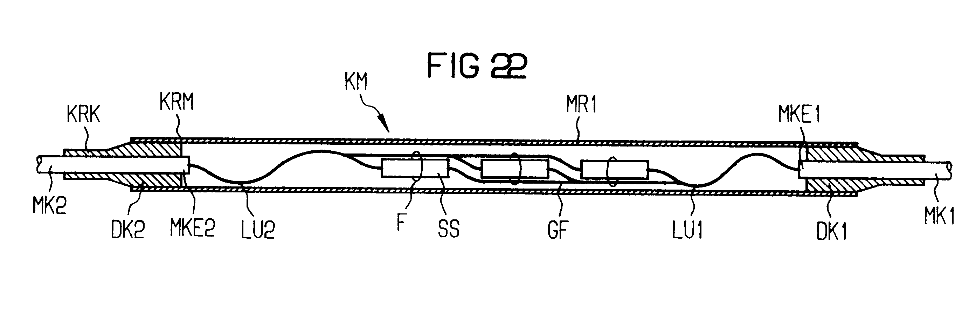

In Figur 22 wird im Längsschnitt eine schlanke Kabelmuffe KM als Verbindungsmuffe für zwei Mikrokabel MK1 und MK2 mit hintereinander im Inneren der Kabelmuffe KM liegenden Schutzspleißen SS dargestellt. Mehrere Lichtwellenleiter-Einzelspleiße werden in einem Mehrfachspleißschutz SS zusammengefaßt und gemeinsam geschützt. Zu beiden Seiten der Schutzspleiße SS ist ausreichend freie Rohrlänge vorhanden, um die Lichtwellenleiter-Überlängen LU1 bzw. LU2 aufzunehmen. Die Schutzspleiße SS sind innerhalb der Kabelmuffe KM frei beweglich. Die Enden der Rohre der Mikrokabel MK1 und MK2 werden durch Verkrimpen an den Krimpstellen KRK der beiden Dichtköpfe DK1 und DK2 dicht festgelegt, wobei gleichzeitig die erforderliche Zug-, Torsions- und Druckfestigkeit erreicht wird. Das über die beiden Dichtköpfe geschobene Muffenrohr MR1 wird zu beiden Seiten an den Krimpstellen KRM auf die beiden Dichtköpfe DK1 bzw. DK2 druckwasserdicht aufgekrimpt und verschlossen. Die einzelnen Lichtwellenleiter werden mit Hilfe von Fixierungen F im Bereich der Schutzspleiße mit diesen fixiert, um die Montage des Muffenrohres MR1 zu erleichtern. In diesem Fall sind die Enden MKE1 bzw. MKE2 der Rohre der Mikrokabel MK1 bzw. MK2 durch den jeweiligen Dichtkopf DK1 bzw. DK2 bis ins Muffeninnere hindurchgeführt.

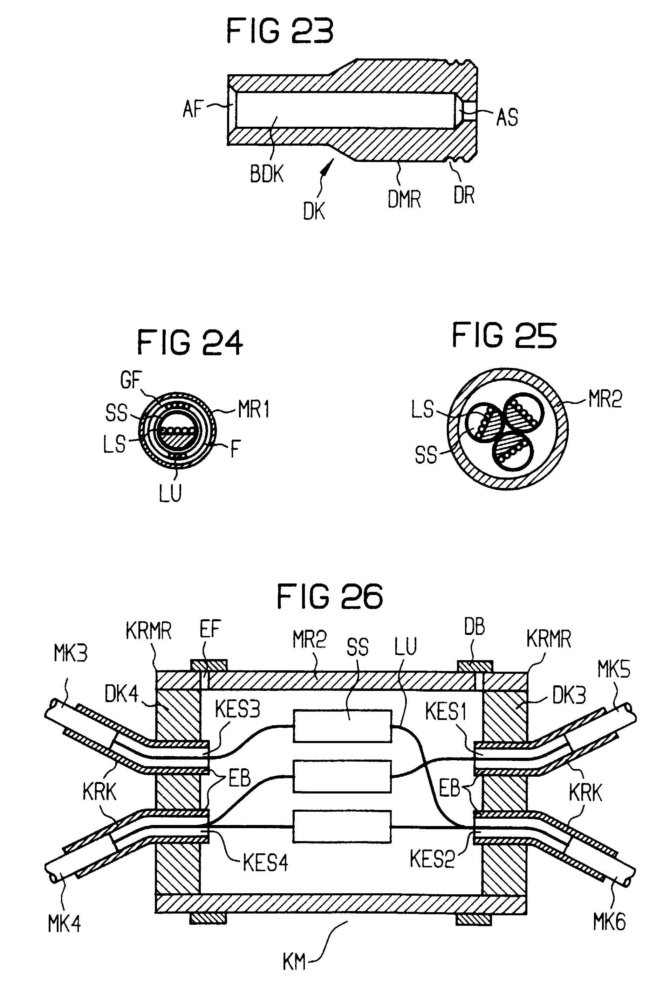

In Figur 23 ist ein Dichtkopf DK dargestellt, der eine Innenbohrung BDK aufweist, deren Durchmesser auf das jeweils einzuführende Mikrokabel abgestimmt ist. Am inneren Ende dieser Bohrung BDK befindet sich ein Anschlag AS für das eingeführte Kabel. Am Eingang der Bohrung BDK ist der Bohrungsrand mit einer Anfasung AF versehen, um das Einführen des Mikrokabels zu erleichtern. Auf der Außenfläche des Dichtkopfes DK können umlaufende Dichtungsriefen angeordnet sein, durch die die Dichtwirkung verbessert wird.

Figur 24 zeigt einen Querschnitt durch die Kabelmuffe im Spleißbereich des Muffenrohres MR1. Innerhalb eines Schutzspleißes SS, von denen bei diesem Ausführungsbeispiele mehrere hintereinander liegend angeordnet sind, beinhalten mehrere Lichtwellenleiter-Spleiße LS, die nebeneinanderliegend fixiert sind. Ein solcher Spleißschutz ist schließlich noch mit einer Fixierung F versehen, mit dem die vorbeigeführten Lichtwellenleiter-Überlängen LU im Muffenraum lose gehalten werden.

Die Figur 25 verdeutlicht, daß mehrere Spleißschutzeinheiten SS mit den darin befindlichen Lichtwellenleiter-Spleißen LS nebeneinander liegend angeordnet sein können, wobei dann allerdings der Querschnitt des Muffenrohres MR2 größer sein muß als beim Ausführungsbeispiel nach Figur 3.

In Figur 26 ist die Kabelmuffe KM als Verzweigungsmuffe ausgebildet, wobei auch hier Dichtköpfe DK3 und DK4 verwendet werden auf die an den Krimpstellen KRMR das Muffenrohr MR2 festsitzend und dicht aufgekrimpt wird. Bei diesem Ausführungsbeispiel sind noch zusätzlich Einfüllöffnungen EF vorgesehen, die mit Hilfe von Dichtungsbändern DB verschlossen werden können. In den Dichtköpfen DK3 bzw. DK4 sind Kabeleinführungsstutzen KS1 bis KS4 angeordnet, die den Dichtköpfen DK1 und DK2 der vorher beschriebenen Verbindungsmuffe entsprechen, das heißt auch sie sind aus plastisch verformbarem Material und dienen zum dichten Anschluß der Mikrokabel MK3 bis MK6. An den Krimpstellen KRK der in den Einführungsbohrungen EB des Dichtkopfes DK3 bzw. DK4 eingesetzten Kabeleinführungsstutzen KES1-KES4 erfolgt die mechanische Abfangung und Abdichtung der eingeführten Mikrokabel MK1-MK4. Im Inneren der Kabelmuffe sind die Schutzspleiße SS enthalten, in denen die Einzel-Lichtwellenleiter-Spleiße gruppenweise untergebracht sind.

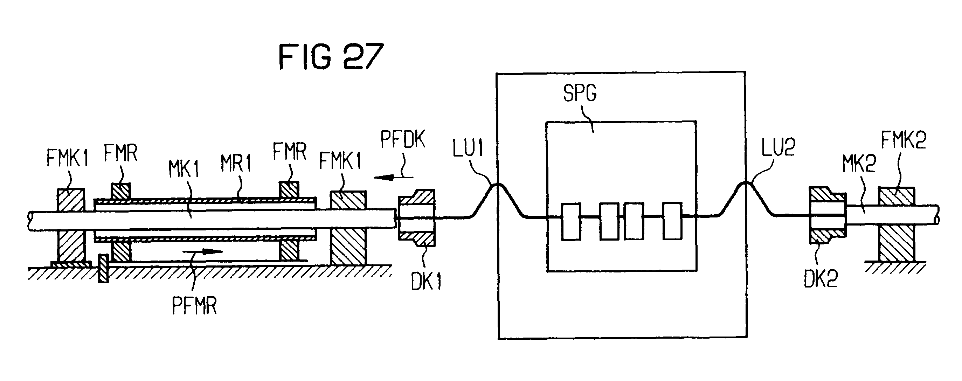

Die Figur 27 zeigt schließlich eine Montageanordnung für den Zusammenbau der erfindungsgemäßen Kabelmuffe nachdem die Spleißarbeiten mit Hilfe eines Spleißgerätes SPG durchgeführt wurden. Zu beiden Seiten des Spleißgerätes SPG befinden sich abnehmbare Fixierungen FMK1 bzw. FMK2 zur Fixierung der zu verbindenden Mikrokabel MK1 bzw. MK2. Auf die Enden der Mikrokabel MK1 bzw. MK2 werden die Dichtköpfe DK1 bzw. DK2 der zu montierenden Kabelmuffe aufgeschoben und durch Krimpen fixiert. Zuvor ist jedoch das Muffenrohr MR1 über das Mikrokabel MK1 geschoben und fixiert worden. Nachdem nun die Spleißarbeiten mit Hilfe des Spleißgerätes SPG beendet sind, wird die am Dichtkopf DK1 liegende Fixierung FMK1 gelöst und entnommen. Dadurch kann das zuvor aufgeschobene und für die Montage fixierte Muffenrohr MR1 in Richtung des angegebenen Pfeiles PFMR über die beiden Dichtungskörper DK1 und DK2 geschoben werden. Durch entsprechende Verschiebung der Dichtungskörper DK1 bzw. DK2 können nun die im Inneren befindlichen Überlängen LU1 und LU2 ausgebildet werden. Anschließend wird das Muffenrohr MF1 auf die Dichtköpfe DK1 und DK2 durch Krimpen dichtend fixiert.

Die Erfindung betrifft ein Verfahren zum Anschluß eines Mikrokabels aus einem Rohr mit eingeführten Lichtwellenleitern, das in einer Verlegenut eines festen Verlegegrundes eingebracht ist, an ein bestehendes Lichtwellenleiter-Übertragungssystem herkömmlicher Art.

Lichtwellenleiter-Übertragungssysteme aus an sich bekannten Lichtwellenleiter-Kabeln sind hinreichend bekannt und bereits verlegt, wobei Teilstrecken mit den herkömmlichen Anschlußeinheiten zusammengekoppelt werden. Das Lichtwellenleiter-Übertragungssystem aus röhrchenförmigen Mikrokabeln, die aus homogenen und druckwasserdichten Rohren bestehen, in die Lichtwellenleiter eingebracht werden, kann jedoch nicht in der bisher üblichen Weise an ein bestehendes optisches Lichtwellenleiter-System angeschlossen werden, da sich die Mikrokabel erheblich im Aufbau wie auch durch die Verlegeart von den herkömmlichen Lichtwellenleiter-Kabeln unterscheiden.

Weiterhin ist Aufgabe einer Weiterbildung der Erfindung, Verfahren zum Anschluß eines Mikrokabels mit Hilfe von Kabelmuffen der beschriebenen Art an herkömmliche Lichtwellenleiter-Übertragungssysteme zu finden, wobei der Anschluß im gleichen Verlegegrund oder in Verlegegründen unterschiedlicher Aufbauweise erfolgen soll. Die gestellte Aufgabe wird nun mit Hilfe eines Verfahrens der eingangs erläuterten Art beim Zusammenschluß im gleichen Verlegegrund mit Kabelmuffen dadurch gelöst, daß das Mikrokabel durch eine Kabeleinführung eines im gleichen Verlegegrund eingebrachten Kabelschachtes des bestehenden Lichtwellenleiter-Übertragungssystems in eine Übergangsmuffe für die Aufnahme von Mikrokabeln eingeführt wird, daß Lichtwellenleiter eines flexiblen Rangierkabels innerhalb der Übergangsmuffe an die Lichtwellenleiter des Mikrokabels angespleißt werden und daß das Rangierkabel zum Anschluß an die optischen Kabel des bestehenden Lichtwellenleiter-Übertragungssystems in eine herkömmliche Spleißmuffe für Lichtwellenleiter eingeführt wird, wobei der Zusammenschluß innerhalb der Spleißmuffe ausgeführt wird.

Weiterhin wird die gestellte Aufgabe mit Hilfe eines Verfahrens der eingangs erläuterten Art beim Zusammenschluß in verschiedenen Verlegegründen auch dadurch gelöst, daß das Mikrokabel am Ende des festen Verlegegrundes in eine Übergangsmuffe in der Höhe der Verlegenut eingeführt und an ein Erdkabel angespleißt wird, daß das Erdkabel im Erdreich in der Höhe der Einführungsebene des im Erdreich eingesetzten Kabelschachtes verlegt, in den Kabelschacht eingeführt und dort innerhalb einer Spleißmuffe an das bestehende Lichtwellenleiternetz angespleißt wird.

Mit Hilfe des Verfahrens gemäß der Weiterbildung der Erfindung ist es nun möglich, ein mit Mikrokabeln aufgebautes Lichtwellenleiter-Übertragungssystem an ein Lichtwellenleiter-Übertragungssystem mit herkömmlichen Lichtwellenleiter-Kabeln anzukoppeln. Die Ankopplung von rohrförmigen Mikrokabeln an das vorhandene Netz erfolgt dabei mit Kabelmuffen, deren Kabeleinführungen auf die Verhältnisse der Mikrokabel abgestimmt sind. Hierfür werden Kabelmuffen aus Metall verwendet, deren stutzenförmige Kabeleingänge auf die Rohre der Mikrokabel aufgekrimpt werden. Dieses Verfahren ist mit Hilfe herkömmlicher Kabelmuffen nicht möglich. Von einer derartigen Übergangsmuffe ausgehend wird nun ein Rangierkabel herkömmlicher Art zu einer herkömmlichen Spleißmuffe geführt, in die auch die herkömmlichen Lichtwellenleiter-Kabel eingeführt werden. Dort wird die Spleißung der Lichtwellenleiter des Mikrokabels, bzw. Rangierkabels mit den Lichtwellenleitern der herkömmlichen optischen Kabel vorgenommen. Dies hat den Vorteil, daß das rohrförmige Mikrokabel in einer speziellen Übergangsmuffe endet, von der aus ein flexibles Lichtwellenleiter-Kabel in eine herkömmliche Spleißmuffe geführt wird, wo dann eventuelle Servicearbeiten vorgenommen werden können. Dabei kann das knickempfindliche Mikrokabel an der Schachtwandung starr fixiert werden, so daß eine Knickung des Rohres ausgeschlossen werden kann. In der herkömmlichen Spleißmuffe hingegen können Rangierüberlängen von Fasern zum Nachspleißen und alle Spleiße aufgenommen werden. In der Übergangsmuffe selbst wird lediglich das Mikrokabel aufgenommen und an das flexible Rangierkabel angeschlossen.

Falls eine spezielle Übergangsmuffe nicht eingesetzt werden kann, muß das Mikrokabel mit speziellen Maßnahmen direkt in die Spleißmuffe eingeführt werden, wobei entsprechende Schutzmaßnahmen für das knickempfindliche Rohr zu ergreifen sind. Hierfür eignet sich beispielsweise ein querkraftstabiler Schlauch, der das Metallrohr des Mikrokabels vor Ausknickung und Beschädigung schützt. Der Schutzschlauch dickt das Mikrokabel zudem beträchtlich auf, so daß es im Kabelschacht besser zu erkennen ist.

Der Zugang zu einem bereits bestehenden Kabelschacht, in dem schon optische Kabel herkömmlicher Art eingeführt sind, wird dadurch erreicht, daß die Verlegenut, in der das Mikrokabel eingelegt ist, bis in unmittelbare Nähe des Kabelschachtes in den festen Verlegegrund eingefräst wird. Die normale Verlegetiefe einer derartigen Trasse ist 70 bis 150 mm. Von der Straßenoberfläche aus wird nun eine Kernbohrung bis zur Trasse des Mikrokabels an der Außenwand des Kabelschachtes eingebracht. Anschließend wird die Schachtwand im oberen Kabelschachtbereich durchbohrt und das Mikrokabel von außen her eingeführt. Die eingebrachte Kernbohrung außerhalb des Kabelschachtes dient dabei als Einführhilfe, zur Kompensation von Verlegeungenauigkeiten und für die Aufnahme der Kabelüberlängenschlaufe des Mikrokabels sowie zur Schachtabdichtung von außen. Der Kabelschacht wird mit einer herkömmlichen Mauerdurchführung abgedichtet wie zum Beispiel mit an sich bekannten Durchführungsdichtungen für Kabelschächte. Im Inneren des Kabelschachtes wird dann das Mikrokabel horizontal an der Schachtwandung entlang bis zur Übergangsmuffe geführt.

Wenn sich der Kabelschacht für die herkömmlichen Lichtwellenleitersysteme nicht im festen Verlegegrund, in dem das Mikrokabel verläuft, eingesetzt ist, ergeben sich Schwierigkeiten bei der Fortführung des Mikrokabels bis zum Kabelschacht; denn das relativ starre Mikrokabel könnte beispielsweise abgeschert werden. In solchen Fällen wird dann am Ende der Verlegenut im festen Verlegegrund, zum Beispiel eines Straßenbelags, eine Übergangsmuffe gesetzt, in die das Mikrokabel eingeführt wird. Hier wird dann ein flexibles Erdkabel angespleißt, das in einer tieferen Verlegeebene im Erdreich bis zur Einführung des Kabelschachtes verlegt wird. Hier erfolgt dann die Anspleißung ans bestehende Netz in einer Spleißmuffe.

Die Einführung in einen Kabelschacht eröffnet außerdem die Möglichkeit, daß Mikrokabel, die in verschiedenen Höhen verlegt sind, zusammengeführt werden können.

Folgende Besonderheiten und Vorteile des Verfahrens ergeben sich gemäß der Erfindung:
- Die übliche Lichtwellenleiter-Montagetechnik kann beibehalten werden.
- Die Zusammenführung der neuen und alten Lichtwellenleiter-Systeme kann in bereits herkömmlichen Lichtwellenleiter-Garnituren erfolgen.
- Durch die geringe Verlegetiefe des Mikrokabels kann auch der vorhandene Freiraum im oberen Kabelschachtbereich genutzt werden.
- Eine Kernbohrung an der Außenwand des Kabelschachtes für die Einführung des Mikrokabels genügt, so daß kein Aufstemmen des umgebenden Erdreichs nötig ist.
- Auf eine derartige Weise können Trassen unterschiedlicher Verlegehöhen zusammengeführt werden.

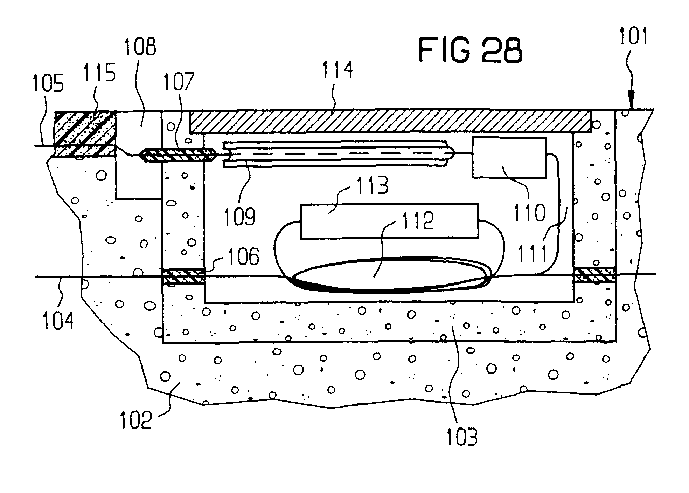

Der in der Figur 28 gezeigte Kabelschacht 103, der unter der Straßenoberfläche 101 des Verlegegrundes 102 angeordnet und mit einem Deckel 114 abgedeckt ist, beinhaltet zunächst ein Lichtwellenleiter-Übertragungssystem 104 aus herkömmlichen optischen Lichtwellenleiterkabeln. Dabei ist in diesem System bereits eine herkömmliche Spleißmuffe 113 vorgesehen, wobei in der üblichen Weise eingelegte Lichtwellenleiterkabel-Überlangen 112 eine gewisse Beweglichkeit der Spleißmuffe für Spleißarbeiten zuläßt. Diese optischen Kabel des herkömmlichen Systemes 104 sind meist in Rohrzügen und relativ tief im unteren Bereich des Kabelschachtes über Einführungsdichtungen 106 eingeführt. Das neu hinzugekommene Mikrokabel 105 aus einem Rohr und darin geführten Lichtwellenleitern wird dagegen im oberen Bereich des Kabelschachtes über eine Kabeleinführung 107 in den Kabelschacht 103 eingeführt, da die Verlegenut nur eine Tiefe von 70 bis 150 mm aufweist. Hierzu wird außerhalb des Kabelschachtes 103 eine Kernbohrung 108 eingebracht, um genügenden Freiraum zum Einführen des Mikrokabels zu haben. In diese Kernbohrung 108 kann beispielsweise auch eine schlaufenförmige Überlänge des Mikrokabels 105 eingebracht werden, mit der Längentoleranzen ausgeglichen werden können. Die Verlegenut ist nach Einbringen des Mikrokabels 105 mit einer Füllmasse 115, wie zum Beispiel Bitumen aufgefüllt. Innerhalb des Kabelschachtes 103 wird das eingeführte Mikrokabel 105 zunächst mit Hilfe eines Schutzschlauches oder Schutzrohres 109 mechanisch geschützt und abgefangen und anschließend in eine Übergangsmuffe 110, die für das Einführen von Mikrokabeln geeignet ist, eingeführt. In dieser Übergangsmuffe 110 werden die Lichtwellenleiter an ein flexibles Rangierkabel 111 angeschlossen. Dieses flexible Rangierkabel 111 wird dann nach dem Austritt aus der Übergangsmuffe 110 in die Spleißmuffe 113 des bereits bestehenden Lichtwellenleiter-Übergangssystems eingeführt und über Lichtwellenleiterspleiße angekoppelt. Auch das flexible Rangierkabel 111 ist im Kabelschacht mit entsprechenden Überlangen 112 abgelegt, so daß auch nach dem Einführen des Rangierkabels eine Entnahme der Spleißmuffe 113 für Servicearbeiten aus dem Schacht möglich ist.

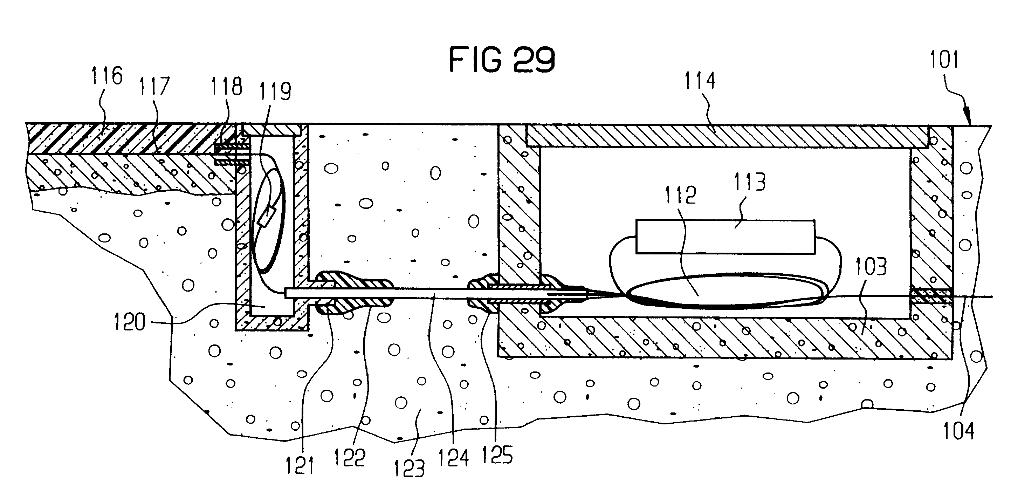

Figur 29 zeigt, wie verfahren wird, wenn sich der Kabel-Schacht nicht im Bereich des festen Verlegegrundes befindet, in dem das Mikrokabel verlegt ist, sondern im benachbarten, relativ weichen Erdreich. Das relativ starre Mikrokabel könnte im Übergangsbereich beschädigt werden. Falls sich also der Kabelschacht 103 im Erdreich 123 befindet, kann das Mikrokabel 117 nur bis zum Ende des festen Verlegegrundes, zum Beispiel der Fahrbahn 116 gelegt werden. Von dort aus muß ein Erdkabel 124 bis zur Kabeldurchführung 125 des Schachts geführt werden. Die Standardverlegetiefe beträgt ca. 60 bis 70 cm im Erdreich. Der Höhenunterschied kann mit einer Übergangsmuffe 120 überwunden werden. Das Mikrokabel 117 wird im oberen Bereich durch die Einführung 118 eingeführt und abgedichtet. Das Erdkabel 124 wird durch einen Stutzen 121 geführt und abgedichtet, zum Beispiel durch einen Schrumpfschlauchstutzen 122. Für die Einführung in den Kabelschacht 103 muß das Erdkabel 124 eingegraben und die Außenwand des Kabelschachtes 103 freigelegt werden. Das Erdkabel wird nun innerhalb des Kabelschachtes 103 in die dort installierte Spleißmuffe eingeführt, wo die Lichtwellenleiter angeschlossen werden.

Bei der Verlegung von Mikrokabeln, die aus einem Rohr und darin lose eingebrachten Lichtwellenleiter bestehen, ist es nötig, vor Abzweigungen, Muffen oder nach größeren Kabellängenabschnitten Kabelüberlängen anzuordnen, um erforderliche Längenausgleiche möglich zu machen. Derartige Setzungen, Dehnungen und auch temperaturbedingte Längenänderungen beim Zusammenwirken der Materialien mit unterschiedlichen Wärmeausdehnungskoeffizienten werden durch sogenannte Dehnungsschlaufen ausgeglichen. Bei der Verlegung in Verlegenuten, die in einem festen Verlegegrund eingebracht sind, werden diese Dehnungsschlaufen bisher senkrecht in entsprechend vertiefte Verlegenuten senkrecht zur Oberfläche des Verlegegrundes eingebracht. Dies führt jedoch zu Schwierigkeiten wenn der Verlegegrund, wie zum Beispiel ein Fahrbahnbelag, nicht genügende Stärke aufweist.

Eine weitere Aufgabe der Erfindung ist nun, eine Schutzvorrichtung zum Abschluß von Kernbohrungen zu schaffen, in denen die Dehnungsschlaufen von Mikrokabeln waagerecht eingelegt werden. Die gestellte Aufgabe wird mit einer Schutzvorrichtung der eingangs erläuterten Art dadurch gelöst, daß sie aus einem Schutzdeckel und einem einseitig zentrisch angebrachten Einschlagstiel zum Fixieren in einer zentrischen Bohrung im Grunde der Kernbohrung besteht, daß der Durchmesser des Schutzdeckels dem Durchmesser der Kernbohrung entspricht und daß oberhalb des Schutzdeckels Füllmaterial zum dichten Abschluß und zur Ausfüllung der restlichen Kernbohrung angeordnet ist.

Der Vorteil von Schutzvorrichtungen gemäß der Erfindung besteht darin, daß Dehnungsschlaufen von Mikrokabeln in Kernbohrungen, die einen Durchmesser aufweisen, der mindestens dem minimal zulässigen Biegeradius eines Mikrokabels entspricht, waagerecht eingelegt bzw. eingeformt werden können, da durch sie die in Frage kommende mechanische Belastung aufgenommen wird und da ein solcher Abschluß auch die nötige Dichtigkeit aufweist. Weiterhin ist von Vorteil, daß nun nur eine geringe Tiefe der Kernbohrungen erforderlich ist, so daß ein Durchtrennen des festen Verlegegrundes, wie zum Beispiel des Untergrundes einer Fahrbahn, nicht mehr zustande kommen kann. Ein derartiger Eingriff in die Mechanik des festen Verlegegrundes, zum Beispiel eines Straßenbelages ist somit unkritisch. Der erforderliche Durchmesser für eine derartige Kernbohrung bewegt sich in der Größenordnung von 150 mm, so daß diese Kernbohrungen noch mit herkömmlichen Werkzeugmaschinen ohne Problem einzubringen sind. Mit dem gleichen Werkzeug können somit Kernbohrungen für Dehnungsschlaufen, Kabelabzweigungen oder Setzlöcher für zylindrische Kabelmuffen hergestellt werden, wie sie bei der Verwendung von Mikrokabeln gebräuchlich sind.

Die Schutzvorrichtung gemäß der Erfindung besteht aus einer etwa pilzförmigen Halterung, die in die Kernbohrung des festen Verlegegrundes eingesetzt wird und diese nach oben hin so abdeckt, daß die ursprüngliche Festigkeit des Verlegegrundes, zum Beispiel eines befahrbaren Belages wieder hergestellt ist. Innerhalb der Kernbohrung wird die aufgespulte Überlänge bzw. Dehnungsschlaufe des Mikrokabels niedergehalten. Außerdem wird die Kernbohrung zur Oberfläche des festen Verlegegrundes hin abgedichtet und das Mikrokabel vor mechanischer Belastung von oben geschützt. Dieses Problem ist besonders wichtig, wenn durch erhöhte Klimabedingungen, zum Beispiel bei Temperaturanstieg über 30° C das Bitumen des Straßenbelages erweicht und die mechanische Belastbarkeit reduziert ist. So werden zum Beispiel im Hochsommer selbst in unseren gemäßigten Zonen Temperaturen von über 60° C im Asphalt gemessen. Der Hohlraum der Kernbohrung, in dem sich die Dehnungsschlaufe befindet, kann mit einem Füllmaterial ausgefüllt werden, das jedoch die Beweglichkeit des Mikrokabels nicht einschränken darf. Die Schutzvorrichtung schließt die Kernbohrung nach oben ab und darüber wird der Bereich mit Heißbitumen versiegelt. Feststoffzusatzteile wie Split erhöhen die Festigkeit des Vergußbitumens, so daß damit annähernd die Festigkeit des Asphalts erreicht wird.

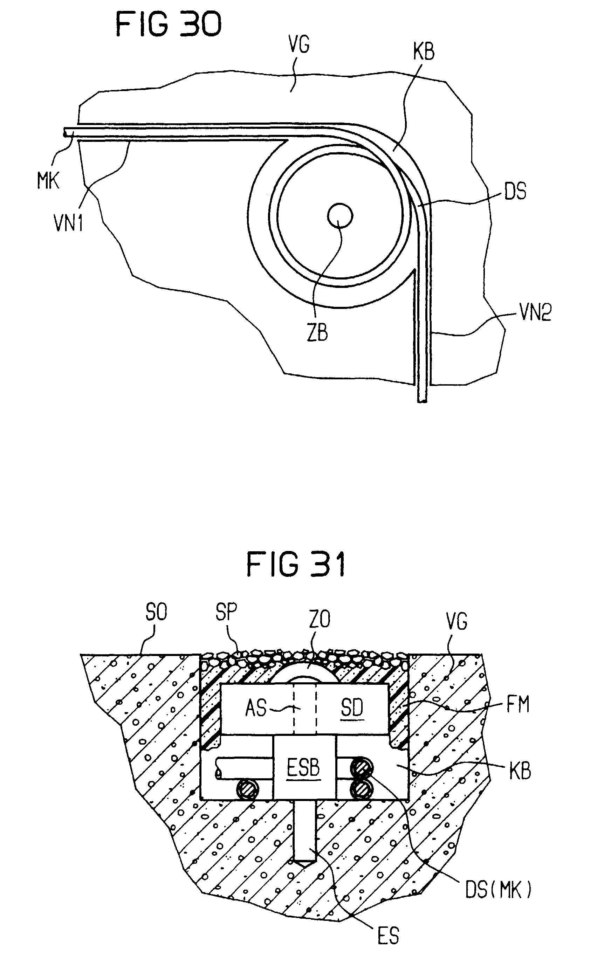

In Figur 30 ist eine Kernbohrung KB in einem festen Verlegegrund VG dargestellt, in der tangential zwei Verlegenuten VN1 und VN2 einlaufen. Die Kernbohrung KB hat einen Durchmesser der ausreicht die Überlänge bzw. Dehnungsschlaufe DS eines Mikrokabels MK in horizontaler Lage für den zu erwartenden Dehnungsbereich aufzunehmen. Eine Zentralbohrung ZB dient zur Aufnahme und Arretierung der Schutzvorrichtung gemäß der Erfindung. Der Hohlraum der Kernbohrung KB kann bei Bedarf mit einem Füllmittel ausgefüllt werden, das jedoch die Beweglichkeit der Dehnungsschlaufe DS kaum beeinflussen darf. Die Einführung der Verlegenuten in die Kernbohrung kann unter verschiedenen Versetzungswinkeln erfolgen, so daß praktisch jede Abwinkelung für den weiteren Verlauf einer Verlegetrasse durchgeführt werden kann. Neben der Zentralbohrung ZB können weitere Bohrungen in den Verlegegrund eingebracht werden, die beispielsweise als Abfluß für Kondenswasser in der Kernbohrung KB oder einer der Verlegenuten VN1 oder VN2 dienen. Bei der Einlegung der Dehnungsschlaufe DS ist darauf zu achten, daß das Mikrokabel MK die Kernbohrungswandung nicht berührt, so daß bei einer Dehnung das eingelegte Mikrokabel auch nach auswärts ausweichen kann. Damit werden Druckspannungen im Mikrokabel abgebaut ohne es zu stauchen und ohne ein Ausknicken zu riskieren. Beim Verkürzen des Mikrokabels kann sich die Dehnungsschlaufe zusammenziehen ohne daß das Kabel auf Zugspannung beansprucht wird. In dieser Figur ist eine Umlenkung des Mikrokabels MK von 90° gezeigt, wobei dann die Überlänge bzw. Dehnungsschlaufe DS in einer 450° Schlaufe gespeichert ist. Eine derartige Anordnung kann unabhängig von den Ein- bzw. Ausgangswinkeln zur Umlenkung einer Trassenführung oder auch als Vorsatz für eine nachfolgende Kabelmuffe angewendet werden.

Figur 31 zeigt in einer Schnittdarstellung durch die Kernbohrung KB die Lage der Dehnungsschlaufe BS eines Mikrokabels MK und die pilzförmige Schutzvorrichtung, bestehend aus dem Schutzdeckel SD und einem Einschlagstiel ES, der zum Beispiel im Bereich der Dehnungsschlaufe DS als minimale Durchmesserbegrenzung ESB einen Durchmesser aufweist, der dem minimal zulässigen Biegeradius des eingeführten Kabels MK entspricht. Auf diese Weise besteht keine Gefahr, daß das Mikrokabel K zu stark abgebogen bzw. abgeknickt werden könnte. Der Freiraum oberhalb des Schutzdeckels SD ist mit einem Füllmittel FM, vorzugsweise einem Heißbitumen gefüllt, wodurch eine Versiegelung der Kernbohrung KB stattfindet. Bei Verwendung von Heißbitumen ist eine Mischung mit Split SP zweckmäßig, da dadurch eine Anpassung an den Straßenbelag SO erreicht werden kann. Weiterhin ist in dieser Figur 31 gezeigt, daß zum Heben des Schutzdeckels SD eine Zugöse ZO vorgesehen werden kann. Die Schutzvorrichtung gemäß der Erfindung kann jedoch auch mehrteilig ausgeführt werden, wobei dann zweckmäßigerweise der Einschlagstift ES einen Aufnahmestift AS nach oben hin aufweist, auf den der Schutzdeckel SD aufgesetzt bzw. aufgeschraubt werden kann. Die darunter liegende Durchmesserbegrenzung ESB bildet dabei für den Schutzdeckel ESD eine umlaufende Auflage. Auch die Durchmesserbegrenzung ESB kann als Extrateil in Form einer Hülse aufgesteckt werden. Mit dem Einschlagstift ES wird die gesamte Vorrichtung in einer Zentralbohrung des Verlegegrundes innerhalb der Kernbohrung KB durch Einschlagen fixiert.

Zusammenfassend werden noch besondere Vorteile der Schutzvorrichtung aufgelistet:

Es handelt sich um eine temperaturunabhängige Schutzvorrichtung für Kernbohrungen, da der Schutzdeckel die Wärmeunterschiede im Asphalt ausgleicht und die Wärme über den Stiel ins Erdreich ableitet. Dadurch entsteht auch kein Setzen oder Fließen des Asphalts oberhalb des Schutzdeckels.

Die Dehnungsschlaufe des Mikrokabels kann sich unterhalb des Schutzdeckels frei bewegen und zwar auch dann, wenn lose Füllmittel, wie Riesel, Bitumen, vorgefertigte Profile aus Polystyrol oder Montageschaum eingefüllt werden. Damit ist der Hohlraum weitgehend gegen Bildung von Kondenswaser geschützt, da auch durch zusätzliche Bohrungen in der Kernbohrung, die bis in die Frostschutzschicht des Verlegegrundes reichen, ein Versickern des etwa auftretenden Kondenswassers gewährleistet wird.

Der Schutzdeckel nimmt die Belastung von oben auf und leitet diese über den Einschlagstiel in den festen Verlegegrund. Dadurch ist eine hohe Dauerbelastung ohne Absenkung möglich. Das gleiche gilt bei hoher Flächenbelastung oder auch bei punktförmiger Belastung, wie sie durch Reifen von Fahrzeugen bzw. durch spitze Gegenstände wie Stützen, Werkzeuge, Meißel, Messer, Stifte oder Pfennigabsätzen erfolgen kann.

Bei Bedarf von großer Dehnungslänge kann eine entsprechend große Kernbohrung gesetzt werden, wobei die Radien der Dehnungsschlaufen einfach und ohne Werkzeug eingeformt werden können. Ein Ausknicken ist dabei kaum möglich.

Die Oberfläche des Schutzdeckels kann angerauht werden, damit eine bessere Haftung zum Vergußmaterial erreicht wird.

Durch den Schutzdeckel wird weiterhin gewährleistet, daß die Dehnungsschlaufe nicht nach oben auskippt bzw. auswandert, wenn ein Dehnungsvorgang abläuft.

Durch das Auffüllen des Hohlraumes der Kernbohrung über dem Schutzdeckel wird gewährleistet, daß bei Erneuerung des Straßenbelages nur das über dem Schutzdeckel befindliche Füllmittel abgefräst und erneuert wird, so daß die Schutzvorrichtung davon unbehelligt bleibt.

Weitere Aufgabe der Erfindung ist, eine Kabelmuffe für Lichtwellenleiter zu schaffen, die in einem festen Verlegegrund eingesetzt ist, von oben zugänglich ist und Einführungsmöglichkeiten für tief verlegte Kabel aufweist. Die gestellte Aufgabe wird nun mit Hilfe einer Kabelmuffe der eingangs erläuterten Art dadurch gelöst, daß die Kabelmuffe aus einem mechanisch hochbelastbaren Außenkörper und einem im Außenkörper eingesetzten Kabelmuffendichtkörper besteht, daß der Außenkörper einen abnehmbaren Außendeckel aufweist, der mit der Oberfläche des Verlegegrundes in gleicher Höhe liegt, daß der darunter liegende Kabelmuffendichtkörper mit einem von oben abnehmbaren Dichtdeckel abgeschlossen ist, daß Kabelanschlußeinheiten in Rohrform von unten her durch den Außenkörper in den Kabelmuffendichtkörper eingeführt sind und daß die Enden der Kabel in diese Kabelanschlußeinheiten eingeführt und abgedichtet sind.

Bei der Kabelmuffe gemäß der Erfindung handelt es sich um eine von oben zugängliche Muffe, wodurch ermöglicht ist, daß Spleiß- und Rangierarbeiten sowie Einmessungen von Fasern oder Kupferdoppeladern vorgenommen werden können ohne die Muffe freizulegen. Bisher sind Fasern, Kupferdoppeladern von Orts- und Verbindungskabeln nur zugänglich, wenn die gesamte Muffe freigelegt und der Muffenkörper entfernt wird. Dabei befinden sich die Muffen meist auf der gleichen Verlegehöhe wie die Kabel. Grabarbeiten sind jedoch meist aufwendig, so daß für die durchzuführenden Reparatur- und Servicearbeiten zusätzlich viel Zeit beansprucht wird. Bei der Ausführungsarbeit gemäß der Erfindung entfallen die Grabarbeiten, da die Muffenoberseite bündig mit der Oberfläche des Verlegegrundes abschließt. Eine solche Muffe eignet sich besonders zur Einführung von Mikrokabeln, die in relativ geringer Höhe in Verlegenuten eines festen Verlegegrundes angeordnet werden. Zusätzlich ergibt sich nun bei der Kabelmuffe gemäß der Erfindung auch die Möglichkeit zur Einführung von standardmäßigen Erdkabeln, die üblicherweise in größerer Verlegetiefe verlaufen. Hierfür sind Kabelanschlußeinheiten vorgesehen, die von unten her in die Kabelmuffe eingeführt werden, wobei die Einführungshöhe dieser Kabelanschlußeinheiten der Verlegehöhe der Erdkabel angepaßt sind. Auf diese Weise können auch tiefer verlegte Erdkabel von der Oberfläche des Verlegegrundes aus erreicht werden, ohne daß besondere Maßnahmen, wie Grabarbeiten, nötig sind.

Derartige Kabelmuffen können als Abzweig- und/oder Verbindungsmuffen im Orts- und Verzweigungsnetz eingesetzt werden. Dies ist besonders günstig, da im Ortsnetz immer wieder Schalt- und Rangierarbeiten nötig werden. Aufgrund des einfachen Aufbaus der Kabelmuffe gemäß der Erfindung kann sie in unkomplizierter Weise in Fuß-, Geh- und Radwegen besonders im Stadtbereich eingesetzt werden. Hierzu sind lediglich befestigte Plätze, Straßen oder Wege erforderlich, wobei für den Zugang zur Kabelmuffe lediglich der belastungsfähige Deckel abgenommen werden muß, um sich Zugang zu den Fasern oder Doppeladern von der Oberfläche her zu verschaffen. Bei der Verwendung der Kabelmuffe gemäß der Erfindung ergeben sich nun aufgrund der kompakten Bauweise und der guten Zugänglichkeit besonders Vorteile bezüglich einer konsequenten Nutzung der vorhandenen Infrastruktur.

Bei der Ausführung gemäß der Erfindung werden durch den Außenkörper, der vorzugsweise aus Grauguß besteht, die mechanischen Belastungen aufgenommen, während der Kabelmuffendichtkörper im Inneren dieses Außenkörpers dicht verschlossen werden kann und die nachrichtentechnischen Einzelteile beinhaltet. Zweckmäßigerweise sind der Dicht- und der Außendeckel gegen unbefugtes Öffnen gesichert und gegebenenfalls verschließbar. Insgesamt ist der Außenkörper mechanisch hoch belastbar bis zu einer Brückenklasse von 30 und mehr, so daß der Kabelmuffendichtkörper nur die Bedingungen bezüglich der Dichtigkeit erfüllen muß. Der Hohlraum zwischen dem Außenkörper und des Kabelmuffendichtkörpers kann zweckmäßigerweise mit einem Füllstoff aufgefüllt bzw. ausgegossen werden, so daß beide Körper schmutz- und wasserdicht miteinander als Einheit verbunden sind. Der Muffendichtkörper ist druckwasserdicht und gut abdichtbar und besteht aus Kunststoff, Druckguß oder Metall. Vorzugsweise ist für den Verschluß ein Dichtdeckel vorgesehen, dessen Verschlußmechanismus als Dreh- oder Bajonettverschluß ausgebildet ist. Eine derartige Muffe kann auch nachträglich in bestehende Trassen von Geh- und Radwegen eingebaut werden, da sie sich aufgrund der Gestaltung gut in die örtlichen Gegebenheiten einpassen läßt. Der Aufbau der Kabelmuffe läßt auch zu, daß nachträglich noch weitere Kabel eingeführt werden können, wenn zu Beginn Kabelanschlußeinheiten zusätzlich vorgesehen wurden. Zur leichten Erkennung kann die Kabelmuffe infolge ihrer leichten Zugänglichkeit durch Beschriftung oder Codierung leicht zugeordnet werden, so daß langwierige Such- und Koordinierungsmaßnahmen entfallen.

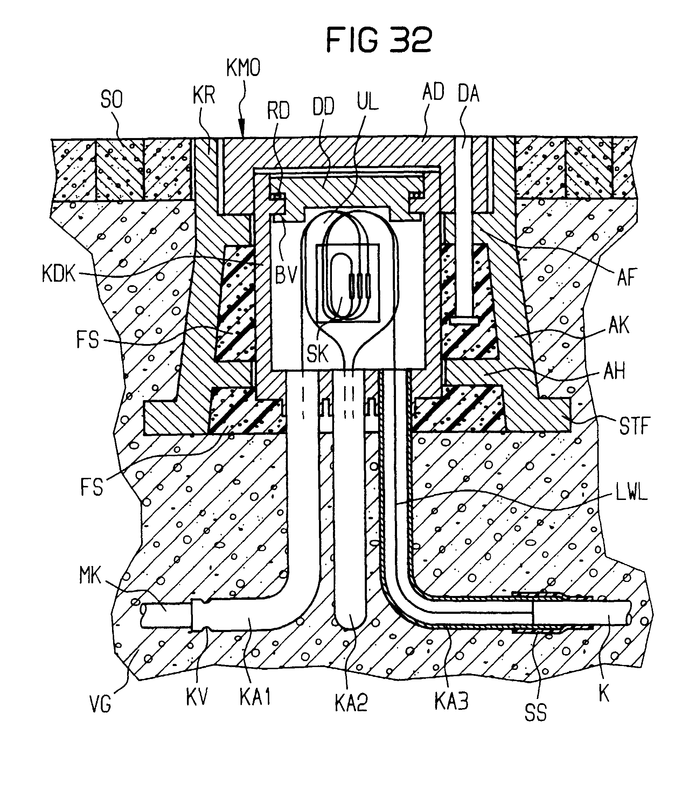

Die Figur 32 zeigt die von oben zugängliche Kabelmuffe KMO gemäß der Erfindung, die aus dem mechanisch hochbelastbaren Außenkörper AK und dem inneren Kabelmuffendichtkörper KDK besteht. Der Außenkörper AK schließt zum unteren Verlegegrund VG mit einem Standflansch STF und nach oben mit einem umlaufenden Kragen KR ab. Innerhalb des Kragens KR wird der Außendeckel AD eingesetzt, der entlang einer Drehachse DA hochgehoben und seitlich ausgeschwenkt werden kann, so daß dann der darunter liegende Dichtdeckel DD des Kabelmuffenkörpers KDK zugänglich ist. Dieser Dichtdeckel DD dichtet über eine Runddichtung RD und mit Hilfe eines Verschlusses, vorzugsweise eines Bajonettverschlusses BV, den Kabelmuffendichtkörper KDK ab. Der Zwischenraum zwischen dem Außenkörper AK und dem Kabelmuffendichtkörper KDK ist hier mit einem Füllstoff, zum Beispiel einem Kunststoffschaum FS, ausgefüllt. Durch einen Abstandshalter AH und den Auflageflansch AF für den Außendeckel wird der Kabelmuffendichtkörper KDK zentrisch im Außenkörper AK gehalten. Die Oberfläche des Verlegegrundes VG, zum Beispiel eine Straßenoberfläche SO, schließt bündig mit der Oberfläche des Außendeckels AD ab, so daß ein stufenloser Übergang gewährleistet ist. Im Inneren des Kabelmuffendichtkörpers KDK ist eine Spleißkassette SK gezeigt, auf der die eingeführten Lichtwellenleiter LWL gespeist sind. Diese Spleißkassette SK ist nach dem Öffnen des Außen- und Dichtdeckels von oben zugänglich, ohne daß die Kabelmuffe entnommen werden muß. Die Spleißkassette SK kann jedoch infolge der Lichtwellenleiterüberlängen für Servicearbeiten herausgezogen werden. Die Kabel K oder auch Mikrokabel MK werden durch die nach unten an die Kabelmuffe KMO angeschlossenen Kabelanschlußeinheiten KA eingeführt, wobei diese Kabelanschlußeinheiten KA in der Verlegehöhe der Kabel K bzw. MK abgewinkelt bzw. abgebogen sind, so daß die Einführung ohne Knick erfolgen kann. Die Abdichtung zwischen dem Kabel K und einer Kabelanschlußeinheit KA kann zum Beispiel mit Hilfe eines Schrumpfschlauchstückes SS vorgenommen werden. Die Abdichtung zwischen einem Mikrokabel MK, das aus einem Rohr mit eingebrachten Lichtwellenleitern besteht, erfolgt beispielsweise mit Hilfe einer umlaufenden Krimpverbindung KV.

Bei dieser Kabelmuffe gemäß der Erfindung können jedoch auch zusätzliche Kabelanschlußeinheiten von der Seite her im oberen Bereich der Seitenwandung der Kabelmuffe KMO vorgesehen werden, die dann meist zum Einführen von weniger tief liegenden Mikrokabeln herangezogen werden, wie bereits beschrieben wurde. Dies ist jedoch hier nicht eingezeichnet. Solche Einführungen können radial oder tangential erfolgen.

Damit können Kabel je nach Aufbauart und Verlegetiefe in einer Kabelmuffe zusammengeführt werden, wobei dann alle Kabelenden und die zugehörigen Abschlüsse von oben her mühelos zugänglich sind, ohne daß die Kabelmuffe selbst ausgegraben werden muß.

Falls die statische Belastung z.B. im Fußwegbereich nur gering ist, kann auf den Außenkörper verzichtet werden. Der abnehmbare oder schwenkbare Außendeckel wird dann direkt an den Muffendichtkörper angebracht.

## Patentansprüche

1. Lichtwellenleiter-Übertragungssystem aus einer Kabelmuffe für Lichtwellenleiter mit Spleißkassetten und Lichtwellenleiter-Überlängenablagen für Lichtwellenleiter-Überlängen und aus mindestens einem Lichtwellenleiter-Kabel, wobei Kabeleinführungseinheiten in Form von Kabeleinführungsstutzen in die Kabelmuffe senkrecht zur Achse des Muffenkörpers der Kabelmuffe angeordnet sind, die Lichtwellenleiter-Überlängen und die Spleißkassetten innerhalb des Muffenkörpers in Achsrichtung des Muffenkörpers entnehmbar angeordnet sind und mindestens eine Stirnseite des Muffenkörpers mit einem von außen zugänglichen Deckel dichtend abgeschlossen ist,
dadurch gekennzeichnet,
daß die Kabeleinführungseinheiten als Einführungsstutzen (13) in Form von dicht angesetzten Rohren (45, 46) ausgebildet sind, daß die Lichtwellenleiter-Kabel (10) in Form von Lichtwellenleiter-Minikabeln bzw. Lichtwellenleiter-Mikrokabeln, bestehend jeweils aus einem Rohr (8, 9, 15) und darin lose eingebrachten Lichtwellenleitern (12), Lichtwellenleiter-Bändchen bzw. Lichtwellenleiter-Bündeln in den in Rohrverbindungstechnik für die Aufnahme und Abdichtung der Rohre (8, 9, 15) der Lichtwellenleiter-Kabel (10) ausgebildeten Kabeleinführungseinheiten (13, 17 - 18, 45, 46, 56, 70) angeordnet sind, wobei die dichtende Verbindung der Rohrverbindungstechnik eine Schweiß-, Löt- oder Klebeverbindung zwischen dem Rohr (8, 9, 15) des Lichtwellenleiter-Kabels (10) und der Kabeleinführungseinheit (13) ist.

2. Lichtwellenleiter-Übertragungssystem aus einer Kabelmuffe für Lichtwellenleiter mit Spleißkassetten und Lichtwellenleiter-überlängenablagen für Lichtwellenleiter-Überlängen und aus mindestens einem Lichtwellenleiter-Kabel, wobei Kabeleinführungseinheiten in Form von Kabeleinführungsstutzen in die Kabelmuffe senkrecht zur Achse des Muffenkörpers der Kabelmuffe angeordnet sind, die Lichtwellenleiter-Überlängen und die Spleißkassetten innerhalb des Muffenkörpers in Achsrichtung des Muffenkörpers entnehmbar angeordnet sind und mindestens eine Stirnseite des Muffenkörpers mit einem von außen zugänglichen Deckel dichtend abgeschlossen ist,
**dadurch gekennzeichnet,**
daß die Kabeleinführungseinheiten als Einführungsstutzen (13) in Form von dicht angesetzten Rohren (45, 46) ausgebildet sind, daß die Lichtwellenleiter-Kabel (10) in Form von Lichtwellenleiter-Minikabeln bzw. Lichtwellenleiter-Mikrokabeln, bestehend jeweils aus einem Rohr (8, 9, 15) und darin lose eingebrachten Lichtwellenleitern (12), Lichtwellenleiter-Bändchen bzw. Lichtwellenleiter-Bündeln in den in Rohrverbindungstechnik für die Aufnahme und Abdichtung der Rohre (8, 9, 15) der Lichtwellenleiter-Kabel (10) ausgebildeten Kabeleinführungseinheiten (13, 17 - 18, 45, 46, 56, 70) angeordnet sind, wobei die dichtende Verbindung der Rohrverbindungstechnik eine Preßverbindung mit Dichtungsmittel und einem Preßelement mit einer Überwurfmutter, zwischen dem Rohr (8, 9, 15) des Lichtwellenleiter-Kabels (10) und der Kabeleinführungseinheit (13) ist.

3. Lichtwellenleiter-Übertragungssystem aus einer Kabelmuffe für Lichtwellenleiter mit Spleißkassetten und Lichtwellenleiter-Überlängenablagen für Lichtwellenleiter-Überlängen und aus mindestens einem Lichtwellenleiter-Kabel, wobei Kabeleinführungseinheiten in Form von Kabeleinführungsstutzen in die kabelmuffe senkrecht zur Achse des Muffenkörpers der Kabelmuffe angeordnet sind, die Lichtwellenleiter-Überlangen und die Spleißkassetten innerhalb des Muffenkörpers in Achsrichtung des Muffenkörpers entnehmbar angeordnet sind und mindestens eine Stirnseite des Muffenkörpers mit einem von außen zugänglichen Deckel dichtend abgeschlossen ist,
**dadurch gekennzeichnet**,
daß die Kabeleinführungseinheiten als Einführungsstutzen (13) in Form von dicht angesetzten Rohren (45, 46) ausgebildet sind, daß die Lichtwellenleiter-Kabel (10) in Form von Lichtwellenleiter-Minikabeln bzw. Lichtwellenleiter-Mikrokabeln, bestehend jeweils aus einem Rohr (8, 9, 15) und darin lose eingebrachten Lichtwellenleitern (12), Lichtwellenleiter-Bändchen bzw. Lichtwellenleiter-Bündeln in den in Rohrverbindungstechnik für die Aufnahme und Abdichtung der Rohre (8, 9, 15) der Lichtwellenleiter-Kabel (10) ausgebildeten Kabeleinführungseinheiten (13, 17 - 18, 45, 46, 56, 70) angeordnet sind, wobei die dichtende Verbindung der Rohrverbindungstechnik eine plastische Krimpverbindung (58, 89) oder eine dauerelastische, ringförmige Dichtung zwischen dem Rohr (8, 9, 15) des Lichtwellenleiter-Kabels (10) und der Kabeleinführungseinheit (13) ist.

4. Lichtwellenleiter-Übertragungssystem nach Anspruch 1,
**dadurch gekennzeichnet,**
daß der Muffenkörper (5, 44) zylindrische Form aufweist.

5. Lichtwellenleiter-Übertragungssystem nach Anspruch 1,
**dadurch gekennzeichnet,**
daß der Muffenkörper ovale Form aufweist.

6. Lichtwellenleiter-Übertragungssystem nach einem der Ansprüche 1 bis 5,
**dadurch gekennzeichnet,**
daß die Einführungsstutzen (13) tangential an der Muffenwandung des Muffenkörpers (5, 44) eingeführt sind.

7. Lichtwellenleiter-Übertragungssystem nach einem der Ansprüche 1 bis 5,
**dadurch gekennzeichnet,**
daß die Einführungsstutzen (13) radial an der Muffenwandung des Muffenkörpers (5, 44) eingeführt sind.

8. Lichtwellenleiter-Übertragungssystem nach einem der vorhergehenden Ansprüche,
**dadurch gekennzeichnet,**
daß die Kabeleinführungseinheiten (13) für Eingangs- und Ausgangsrichtung auf gleicher Ebene liegen.

9. Lichtwellenleiter-Übertragungssystem nach einem der Ansprüche 1 bis 8,
**dadurch gekennzeichnet,**
daß die Kabeleinführungseinheiten (13) für Eingangs- und Ausgangsrichtung auf verschiedenen Ebenen liegen.

10. Lichtwellenleiter-Übertragungssystem nach einem der vorhergehenden Ansprüche,
**dadurch gekennzeichnet,**
daß die Kabeleinführungseinheiten (13) in gleiche Richtung weisen.

11. Lichtwellenleiter-Übertragungssystem nach einem der Ansprüche 1 bis 9,
**dadurch gekennzeichnet,**
daß die Kabeleinführungseinheiten (13) in verschiedene Richtungen weisen.

12. Lichtwellenleiter-Übertragungssystem nach einem der vorhergehenden Ansprüche,
**dadurch gekennzeichnet,**
daß die Lichtwellenleiter-Überlängen (24) an der inneren Wandung des Muffenkörpers (5) kreisförmig anliegend angeordnet sind.

13. Lichtwellenleiter-Übertragungssystem nach einem der vorhergehenden Ansprüche,
**dadurch gekennzeichnet,**
daß die Lichtwellenleiter-Überlängen (30, 38) in Gruppen auf verschiedenen Ebenen im Muffenkörper (5) angeordnet sind.

14. Lichtwellenleiter-Übertragungssystem nach einem der vorhergehenden Ansprüche,
**dadurch gekennzeichnet,**
daß die Überlängen durch einen flexiblen knickunempfindlichen Schlauch (54) geschützt sind, der in mehreren Schlaufen unter Einhaltung des Mindestbiegeradius im inneren Muffenkörper abgelegt wird.

15. Lichtwellenleiter-Übertragungssystem nach Anspruch 3,
**dadurch gekennzeichnet,**
daß für die Krimpverbindung zwischen dem Mikrokabel und der Kabeleinführungseinheit (13) ein plastisch verformbares Weichmetallröhrchen (87) eingesetzt ist.

16. Lichtwellenleiter-Übertragungssystem nach einem der vorhergehenden Ansprüche,
**dadurch gekennzeichnet,**
daß eine Ausgleichsschlaufe (47) des Rohres des Lichtwellenleiter-Kabels (10) vor der Einführung in eine Kabeleinführungseinheit (13) angeordnet ist.

17. Lichtwellenleiter-Übertragungssystem nach Anspruch 16,
**dadurch gekennzeichnet,**
daß die Ausgleichsschlaufe (47) als Ansatz an der Kabeleinführungseinheit (13) angeordnet ist.

18. Lichtwellenleiter-Übertragungssystem nach einem der vorhergehenden Ansprüche,
**dadurch gekennzeichnet,**
daß das Muffengehäuse (5, 44) und der Deckel (20, 73, 74) mechanisch hoch belastbar für den Einsatz in ein Kernbohrloch einer Verlegetrasse im Erdboden, vorzugsweise in einem Straßenbelag, ausgebildet ist.

19. Lichtwellenleiter-Übertragungssystem nach einem der vorhergehenden Ansprüche,
**dadurch gekennzeichnet,**
daß die Kabeleinführungseinheiten (13) für Dreifachabzweigungen in T-Form am Muffengehäuse (5, 44) angesetzt sind.

20. Lichtwellenleiter-Übertragungssystem nach einem der Ansprüche 1 bis 18,
**dadurch gekennzeichnet,**
daß Kabeleinführungseinheiten (13) für Vierfachabzweigungen in Kreuzform am Muffengehäuse (5, 44) angesetzt sind.

21. Lichtwellenleiter-Übertragungssystem nach einem der vorher angegebenen Ansprüche,
**dadurch gekennzeichnet,**
daß die Einführungsöffnungen der Kabeleinführungseinheiten (13) trichterförmig ausgebildet sind und vorzugsweise einen Längenanschlag für das Mikrokabel (10) aufweisen.

22. Lichtwellenleiter-Übertragungssystem nach einem der vorhergehenden Ansprüche,
**dadurch gekennzeichnet,**
daß die Kabelmuffe (61) in einem Schutzgehäuse (64) angeordnet ist, wobei das Schutzgehäuse (64) Durchführungsöffnungen (63) für die Lichtwellenleiter-Kabel (62) aufweist und daß der Zwischenraum zwischen der Kabelmuffe (61) und der Innenwandung des Schutzgehäuses (64) aufgefüllt ist, vorzugsweise mit einer weichen Ausschäumung (66) aus Kunststoff.

23. Lichtwellenleiter-Übertragungssystem nach Anspruch 22,
**dadurch gekennzeichnet,**
daß das Schutzgehäuse (64) aus Beton besteht und einen abnehmbaren, belastbaren Deckel (68) aufweist.

24. Lichtwellenleiter-Übertragungssystem nach einem der vorhergehenden Ansprüche,
**dadurch gekennzeichnet,**
daß der Durchmesser der Kabelmuffe 70 bis 100 mm und die Höhe 150 bis 250 mm beträgt.

25. Lichtwellenleiter-Übertragungssystem aus einer Kabelmuffe für Lichtwellenleiter mit Spleißkassetten und Lichtwellenleiter-Überlängenablagen für Lichtwellenleiter-Überlängen und aus mindestens einem Lichtwellenleiter-Kabel, wobei Kabeleinführungseinheiten der Kabelmuffe in Achsrichtung des Muffenkörpers der Kabelmuffe angeordnet sind und die Kabelmuffe (1, 2, 1a, 1b) aus einem erweiterten Muffenrohr (19) besteht,
daß die Lichtwellenleiter-Kabel (10) in Form von Lichtwellenleiter-Minikabeln bzw. Lichtwellenleiter-Mikrokabeln, bestehend jeweils aus einem Rohr (8, 9, 15) und darin lose eingebrachten Lichtwellenleitern (12), Lichtwellenleiter-Bändchen bzw. Lichtwellenleiter-Bündeln ausgebildet sind,
**dadurch gekennzeichnet,**
daß das Muffenrohr (19) an den Enden dem Durchmesser des Rohres des Lichtwellenleiterkabels (8, 9, 10, 15) angepaßt ist, daß die Einführung der Rohre der Lichtwellenleiterkabel in Achsrichtung des Muffenrohres (19) erfolgt und daß die Abdichtungen zwischen dem Muffenrohr (19) und den Lichtwellenleiter-Kabeln (8, 9, 10, 15) in den Durchmessern der Lichtwellenleiter-Kabel in Rohrverbindungstechnik angepaßten Kabeleinführungseinheiten (17 - 18) erfolgen, wobei die dichtende Verbindung der Kabeleinführungseinheit (17 - 18) in Rohrverbindungstechnik aus umlaufenden Preßdichtungen besteht.

26. Lichtwellenleiter-Übertragungssystem aus einer Kabelmuffe für Lichtwellenleiter mit Spleißkassetten und Lichtwellenleiter-Überlängenablagen für Lichtwellenleiter-Überlängen und aus mindestens einem Lichtwellenleiter-Kabel, wobei Kabeleinführungseinheiten der Kabelmuffe in Achsrichtung des Muffenkörpers der Kabelmuffe angeordnet sind und die Kabelmuffe (1, 2, 1a, 1b) aus einem erweiterten Muffenrohr (19) besteht,
daß die Lichtwellenleiter-Kabel (10) in Form von Lichtwellenleiter-Minikabeln bzw. Lichtwellenleiter-Mikrokabeln, bestehend jeweils aus einem Rohr (8, 9, 15) und darin lose eingebrachten Lichtwellenleitern (12), Lichtwellenleiter-Bändchen bzw. Lichtwellenleiter-Bündeln ausgebildet sind,
**dadurch gekennzeichnet,**
daß das Muffenrohr (19) an den Enden dem Durchmesser des Rohres des Lichtwellenleiter-Kabels (8, 9, 10, 15) angepaßt ist, daß die Einführung der Rohre der Lichtwellenleiter-Kabel in Achsrichtung des Muffenrohres (19) erfolgt und daß die Abdichtungen zwischen dem Muffenrohr (19) und den Lichtwellenleiter-Kabeln (8, 9, 10, 15) in den Durchmessern der Lichtwellenleiter-Kabel in Rohrverbindungstechnik angepaßten Kabeleinführungseinheiten (17 - 18) erfolgen, und die Enden des erweiterten Muffenrohres (19) in Rohrverbindungstechnik mit einem Außengewinde versehen sind, daß die Dichtungen aus Überwurfmuttern (17 - 18) und elastischen Dichtungseinlagen (14) gebildet sind.

27. Lichtwellenleiter-Übertragungssystem aus einer Kabelmuffe für Lichtwellenleiter mit Spleißkassetten und Lichtwellenleiter-überlängenablagen für Lichtwellenleiter-Überlängen und aus mindestens einem Lichtwellenleiter-Kabel, wobei Kabeleinführungseinheiten der Kabelmuffe in Achsrichtung des Muffenkörpers der Kabelmuffe angeordnet sind und die Kabelmuffe (1, 2, 1a) 1b) aus einem erweiterten Muffenrohr (19) besteht,
daß die Lichtwellenleiter-Kabel (10) in Form von Lichtwellenleiter-Minikabeln bzw. Lichtwellenleiter-Mikrokabeln, bestehend jeweils aus einem Rohr (8, 9, 15) und darin lose eingebrachten Lichtwellenleitern (12), Lichtwellenleiter-Bändchen bzw. Lichtwellenleiter-Bündeln ausgebildet sind,
**dadurch gekennzeichnet,**
daß das Muffenrohr (19) an den Enden dem Durchmesser des Rohres des Lichtwellenleiterkabels (8, 9, 10, 15) angepaßt ist, daß die Einführung der Rohre der Lichtwellenleiter-Kabel in Achsrichtung des Muffenrohres (19) erfolgt und daß die Abdichtungen zwischen dem Muffenrohr (19) und den Lichtwellenleiter-Kabeln (8, 9, 10, 15) in den Durchmessern der Lichtwellenleiter-Kabel in Rohrverbindungstechnik angepaßten Kabeleinführungseinheiten (17 - 18) erfolgen, und daß die Dichtungen an den Enden des erweiterten Muffenrohres (19, KM) in Rohrverbindungstechnik durch Krimpverbindungen (87) gebildet sind.

28. Lichtwellenleiter-Übertragungssystem nach einem der Ansprüche 25 bis 27,
**dadurch gekennzeichnet,**
daß die Enden des erweiterten Muffenrohres der Kabelmuffe (2) zur Anpassung an verschiedene Durchmesser von Rohren verschiedener Lichtwellenleiterkabel (9, 15) unterschiedliche Durchmesser aufweisen.

29. Lichtwellenleiter-Übertragungssystem nach einem der Ansprüche 25 bis 27,
**dadurch gekennzeichnet**,
daß die Kabelmuffe aus mehreren dicht aneinandersetzbaren Ringen (33, 35) besteht.

30. Lichtwellenleiter-Übertragungssystem nach einem der Ansprüche 25 bis 37,
**dadurch gekennzeichnet,**
daß der Muffenkörper (33 - 35) bzw. das erweiterte Muffenrohr (19) vorzugsweise in der Ebene der Kabeleinführungseinheiten (13, 36) längsgeteilt ist.

31. Lichtwellenleiter-Übertragungssystem nach Anspruch 2 oder 25,
**dadurch gekennzeichnet,**
daß Schneidklemmringe in den Kabeleinführungseinheiten (13) angeordnet sind.

32. Lichtwellenleiter-Übertragungssystem nach Anspruch 29,
**dadurch gekennzeichnet,**
daß Dichtungssysteme in den Trennebenen zwischen den einzelnen Ringen (33, 35) eingelagert sind.

33. Lichtwellenleiter-Übertragungssystem nach Anspruch 29,
**dadurch gekennzeichnet,**
daß Kabeleinführungseinheiten (13) in den Trennebenen zwischen den einzelnen Ringen (33, 35) bzw. Abschnitten angeordnet sind.

34. Lichtwellenleiter-Übertragungssystem nach einem der vorhergehenden Ansprüche,
**dadurch gekennzeichnet,**
daß der Innenraum der Kabelmuffe (5) durch Trennplatten (29) in mehrere Abschnitte unterteilt ist.

35. Lichtwellenleiter-Übertragungssystem nach einem der Ansprüche 1 bis 3,
**dadurch gekennzeichnet,**
daß die Kabelmuffe zwei übereinander angeordnete Deckel (68, 73,76, 80) aufweist, wobei der innere Deckel (73) dichtet und der äußere Deckel (68,76, 80) mechanische Belastungen aufnimmt.

36. Lichtwellenleiter-Übertragungssystem nach einem der Ansprüche 3 oder 27,
**dadurch gekennzeichnet,**
daß die Krimpverbindung das röhrchenförmige Mikrokabel (1) an der Kabeleinführung der Kabelmuffe gegen Zug-, Druck- und Torsionsbeanspruchung sichert.

37. Lichtwellenleiter-Übertragungssystem nach einem der Ansprüche 16 oder 17,
**dadurch gekennzeichnet,**
daß durch Ausgleichsschlaufen (47) Unterschiede in der Längenausdehnung des Mikrokabels (10) zum umgebenden Bitumen ausgleichbar sind.

38. Lichtwellenleiter-Übertragungssystem nach einem der Ansprüche 3, 27, 36 oder 37,
**dadurch gekennzeichnet,**
daß die gesamte Kabelmuffe bestehend aus Muffenkörper, Deckel, Spleißkassette, Schutzschlauch, Kabeleinführungseinheiten, Dichtungssystemen, Krimpverbindungen und Ausgleichsschlaufen werksseitig vorkonfektioniert sind.

39. Lichtwellenleiter-Übertragungssystem nach einem der Ansprüche 2 oder 26,
**dadurch gekennzeichnet,**
daß für eine elastische Abdichtung Kalt- oder Heißschrumpfschläuche, O-Ringe, ringförmige Lippendichtungen oder dauerelastische Dichtungen verwendet werden können.

40. Lichtwellenleiter-Übertragungssystem nach Anspruch 27,
**dadurch gekennzeichnet,**
daß Dichtköpfe (DK1-DK4) aus plastisch verformbarem Material, vorzugsweise aus einem Metall, auf die Rohre der Lichtwellenleiter-Kabel (MK1-MK6) dichtend an umlaufenden Krimpstellen (KRK) aufgekrimpt sind, daß das Muffenrohr (MR1, MR2) ebenfalls aus verformbarem Material, vorzugsweise aus einem Metall, besteht und an seinen Stirnseiten auf die Dichtköpfe (DK1-DK4) an den umlaufenden Krimpstellen (KRMR) aufgekrimpt ist, daß das Muffenrohr (MR1, MR2) in der Länge so bemessen ist, daß ausreichende Lichtwellenleiter-Überlängen (LU1, LU2) in wellenförmiger Ausdehnung und Lichtwellenleiter-Spleiße LS) angeordnet werden können.

41. Lichtwellenleiter-Übertragungssystem nach Anspruch 27 oder 40,
**dadurch gekennzeichnet,**
daß die Lichtwellenleiter-Spleiße (LS) hintereinander liegend innerhalb der Kabelmuffe (KM) angeordnet sind.

42. Lichtwellenleiter-Übertragungssystem nach Anspruch 40,
**dadurch gekennzeichnet,**
daß die Lichtwellenleiter-Spleiße (LS) nebeneinander liegend innerhalb der Kabelmuffe (KM) angeordnet sind.

43. Lichtwellenleiter-Übertragungssystem nach einem der Ansprüche 40 bis 42,
**dadurch gekennzeichnet,**
daß die Bohrung (BDK) im Dichtkopf (DK1, DK2) jeweils dem Durchmesser des Rohres des Lichtwellenleiter-Kabels (MK1-MK6) angepaßt ist und daß innerhalb der Bohrung (BDK) ein umlaufender Anschlag (AS) für das Rohr des entsprechenden Lichtwellenleiter-Kabels (MK1-MK6) angeordnet ist.

44. Lichtwellenleiter-Übertragungssystem nach einem der Ansprüche 40 bis 42,
**dadurch gekennzeichnet,**
daß der Dichtkopf (DK3, DK4) mehrere Einführungsbohrungen (EB) aufweist, daß in den Einführungsbohrungen (EB) krimpbare Kabeleinführungsstutzen (KES1 - KES4) dicht eingesetzt sind, wobei die Abdichtungen zwischen den Rohren der Lichtwellenleiter-Kabel (MK1-MK6) und den Kabeleinführungsstutzen (KE1-KE4) an den umlaufenden Krimpstellen (KRK) erfolgt.

45. Lichtwellenleiter-Übertragungssystem nach einem der Ansprüche 40 bis 44,
**dadurch gekennzeichnet,**
daß die Dichtköpfe (DK1-DK4) und/oder das Muffenrohr (MR1, MR2) aus Kupfer oder ähnlich plastisch verformbarem Metall oder Knetlegierungen auf Kupferbasis bestehen.

46. Lichtwellenleiter-Übertragungssystem nach einem der Ansprüche 40 bis 44,
**dadurch gekennzeichnet,**
daß die Dichtköpfe (DK1 bis DK4) und/oder das Muffenrohr (MR1, MR2) aus Aluminium oder kaltformbaren, nicht härtbaren Aluminium-Legierungen bestehen.

47. Lichtwellenleiter-Übertragungssystem nach einem der Ansprüche 40 bis 44,
**dadurch gekennzeichnet,**
daß die Dichtköpfe (DK1 bis DK4) und/oder das Muffenrohr (MR1, MR2) aus plastisch verformbarem, nicht gehärteten, rostfreien Stahl bestehen.

48. Lichtwellenleiter-Übertragungssystem nach einem der Ansprüche 40 bis 47,
**dadurch gekennzeichnet,**
daß die elektrisch leitenden Rohre der Mikrokabel (MK1) durch das Muffenrohr (MR1) und die aufgekrimpten Dichtköpfe (DK1) elektrisch leitend miteinander durchkontaktiert sind.

49. Lichtwellenleiter-Übertragungssystem nach einem der Ansprüche 2 oder 26,
**dadurch gekennzeichnet,**
daß die Dichtköpfe an ihren Enden Gewinde aufweisen, daß verformbare Schneidklemmringe an den Dichtstellen zwischen den Dichtkopfaußenmänteln und dem Muffenrohr und zwischen den Dichtkopfbohrungen und den Rohrenden der Mikrokabel eingesetzt sind, daß Überwurfmuttern über den Schneidklemmringen auf die Gewinde der Dichtköpfe aufgeschraubt sind.

50. Lichtwellenleiter-Übertragungssystem nach einem der vorhergehenden Ansprüche,
**dadurch gekennzeichnet,**
daß das Mikrokabel (105) in einer Verlegenut des Verlegegrundes geführt ist und durch eine Kabeleinführung (107) eines im gleichen Verlegegrund eingebrachten Kabelschachtes (103) in eine als Übergangsmuffe (110) dienende Kabelmuffe für die Aufnahme von Mikro kabeln eingeführt ist und daß die Lichtwellenleiter des Mikrokabels (105) an die Lichtwellenleiter eines flexiblen Rangierkabels (111) zum Anschluß an die optischen Kabel eines bereits bestehenden Lichtwellenleiter-Übertragungssystems (104) anspleißbar sind.

51. Verfahren nach Anspruch 50,
**dadurch gekennzeichnet,**
daß das in den Kabelschacht (103) eingeführte Mikrokabel (105) durch ein Schutzrohr (109) bis zur Übergangsmuffe (110) mechanisch geschützt wird.

52. Verfahren nach einem der Anspruche 50 oder 51,
**dadurch gekennzeichnet,**
daß eine Kernbohrung (108) an der Außenseite der Wandung des Kabelschachtes (103) im vorgesehenen Einführungsbereich in den Verlegegrund (102) eingebracht wird, daß die Einführung des Mikrokabels (105) über die Kernbohrung (108) hinweg mit Abdichtungen (107) dicht in den Kabelschacht (103) eingeführt wird.

53. Verfahren nach einem der Ansprüche 50 bis 52,
**dadurch gekennzeichnet,**
daß Mikrokabel in verschiedenen Verlegehöhen in einen Kabelschacht (103) eingeführt werden.

54. Lichtwellenleiter-Übertragungssystem nach einem der Ansprüche 16, 17 oder 37,
**dadurch gekennzeichnet,**
daß eine Schutzvorrichtung für Dehnungsschlaufen von Lichtwellenleiter-Kabeln, insbesondere von Mikrokabeln zum Abbschluß einer Kernbohrung in einem festen Verlegegrund, angeordnet ist, daß die Schutzvorrichtung aus einem Schutzdeckel (SD) und einem einseitig zentrisch angebrachten Einschlagstiel (ES) zum Fixieren in einer zentrischen Bohrung im Grunde der Kernbohrung (KB) besteht, daß der Durchmesser des Schutzdeckels (SD) dem Durchmesser der Kernbohrung (KB) entspricht und daß oberhalb des Schutzdeckels (SD) Füllmaterial zum dichten Abschluß und zur Ausfüllung der restlichen Kernbohrung (KB) angeordnet ist.

55. Lichtwellenleiter-Übertragungssystem nach Anspruch 54,
**dadurch gekennzeichnet,**
daß Verlegenuten (VN1, VN2) tangential in die Kernbohrung (KB) ein- bzw. auslaufen.

56. Lichtwellenleiter-Übertragungssystem nach einem der Ansprüche 54 oder 55,
**dadurch gekennzeichnet,**
daß der Schutzdeckel (SD) auf seiner nach oben weisenden Seite eine Zugöse (ZO) aufweist.

57. Lichtwellenleiter-Übertragungssystem nach einem der Ansprüche 54 bis 56,
**dadurch gekennzeichnet,**
daß der Einschlagstiel (ES) im Freiraum der Kernbohrung (KB) als Durchmesserbegrenzung (ESB) für die Dehnungsschlaufe (DS) einen Durchmesser aufweist, der dem minimal zulässigen Biegeradius des eingeführten Kabels (MK) entspricht.

58. Lichtwellenleiter-Übertragungssystem nach einem der Ansprüche 54 bis 57,
**dadurch gekennzeichnet,**
daß das Füllmaterial (FM) aus Bitumen besteht.

59. Lichtwellenleiter-Übertragungssystem nach Anspruch 58,
**dadurch gekennzeichnet,**
daß dem Füllmaterial (FM) zerkleinerte Feststoffe, zum Beispiel Split, zugeführt ist.

60. Lichtwellenleiter-Übertragungssystem nach einem der Ansprüche 54 bis 59,
**dadurch gekennzeichnet,**
daß der Freiraum der Kernbohrung (KB) unterhalb des Schutzdeckels (SD) mit einem Füllmittel aufgefüllt ist, das die freie Bewegung des Mikrokabels (MK) nicht behindert.

61. Lichtwellenleiter-Übertragungssystem nach einem der Ansprüche 1 bis 24,
**dadurch gekennzeichnet,**
daß die Kabelmuffe (KMO) aus einem mechanisch hochbelastbaren Außenkörper (AK) und einem im Außenkörper (AK) eingesetzten Kabelmuffendichtkörper (KDE) besteht, daß der Außenkörper (AK) einen abnehmbaren Außendeckel (AD) aufweist, der mit der Oberfläche (SO) des Verlegegrundes (VG) in gleicher Höhe liegt, daß der darunter liegende Kabelmuffendichtkörper (KDK) mit einem von oben abnehmbaren Dichtdeckel (DD) abgeschlossen ist, daß Kabelanschlußeinheiten (KA1, KA2, KA3) in Rohrform von unten her durch den Außenkörper (AK) in den Kabelmuffendichtkörper (KDK) eingeführt sind und daß die Enden der Kabel (K, MK) in diese Kabelanschlußeinheiten (KA1, KA2,KA3) eingeführt und abgedichtet sind.

62. Lichtwellenleiter-Übertragungssystem nach Anspruch 61,
**dadurch gekennzeichnet,**
daß die Enden der Kabel in Form von Mikrokabeln (MK), bestehend jeweils aus einem Rohr und darin geführten Lichtwellenleitern, an den Kabelanschlußeinheiten (KA) durch Krimpverbindungen (KV) dicht angeschlossen sind.

63. Lichtwellenleiter-Übertragungssystem nach Anspruch 61,
**dadurch gekennzeichnet,**
daß ein Schrumpfschlauchstück (SS) am Ende einer Kabelanschlußeinheit (KA3) zur dichten Einführung eines Kabels (K) angeordnet ist.

64. Lichtwellenleiter-Übertragungssystem nach einem der Ansprüche 61 bis 63,
**dadurch gekennzeichnet,**
daß die Einführungsstellen der Kabelanschlußeinheiten, (KA1, KA2, KA3) in der Verlegehöhe der im Verlegegrund (VG) eingebrachten Kabel (K, MK) in waagerechter Richtung abgebogen sind.

65. Lichtwellenleiter-Übertragungssystem nach einem der Ansprüche 61 bis 63,
**dadurch gekennzeichnet,**
daß die Kabelmuffe (KMO) zusätzliche Kabelanschlußeinheiten an der Seitenwandung aufweist, die in der Höhe von Verlegenuten für Mikrokabel angesetzt sind.

66. Lichtwellenleiter-Übertragungssystem nach einem der Anspruche 61 bis 63,
**dadurch gekennzeichnet,**
daß der Zwischenraum zwischen dem Kabelmuffendichtkörper (KDK) und dem Außenkörper (AK) mit einem Füllstoff (FS), vorzugsweise einem schäumbaren Kunststoffschaum, ausgefüllt ist.

## Claims

1. Optical-fibre transmission system comprising a cable closure for optical waveguides with splice organizers and optical-waveguide excess-length depositories for excess lengths of optical waveguides and comprising at least one optical-fibre cable, cable lead-in units in the form of cable lead-in spigots into the cable closure being arranged perpendicularly with respect to the axis of the closure body of the cable closure, the excess lengths of optical waveguides and the splice organizers being arranged within the closure body removably in the axial direction of the closure body and at least one end face of the closure body being closed off in a sealing manner by an externally accessible cover, characterized in that the cable lead-in units are designed as lead-in spigots (13) in the form of seal-tightly attached pipes (45, 46), in that the optical-fibre cables (10) in the form of optical-fibre minicables or optical-fibre microcables, respectively comprising a pipe (8, 9, 15) and optical waveguides (12), optical waveguide strips or optical waveguides bundles loosely introduced therein, are arranged in the cable lead-in units (13, 17-18, 45, 46, 56, 70) designed in terms of pipe coupling technology for receiving and sealing off the pipes (8, 9, 15) of the optical-fibre cables (10), the sealing connection of pipe coupling technology being a welded, soldered or adhesively bonded connection between the pipe (8, 9, 15) of the optical-fibre cable (10) and the cable lead-in unit (13).

2. Optical-fibre transmission system comprising a cable closure for optical waveguides with splice organizers and optical-waveguide excess-length depositories for excess lengths of optical waveguides and comprising at least one optical-fibre cable, cable lead-in units in the form of cable lead-in spigots into the cable closure being arranged perpendicularly with respect to the axis of the closure body of the cable closure, the excess lengths of optical waveguides and the splice organizers being arranged within the closure body removably in the axial direction of the closure body and at least one end face of the closure body being closed off in a sealing manner by an externally accessible cover, characterized in that the cable lead-in units are designed as lead-in spigots (13) in the form of seal-tightly attached pipes (45, 46), in that the optical-fibre cables (10) in the form of optical-fibre minicables or optical-fibre microcables, respectively comprising a pipe (8, 9, 15) and optical waveguides (12), optical waveguide strips or optical waveguides bundles loosely introduced therein, are arranged in the cable lead-in units (13, 17-18, 45, 46, 56, 70) designed in terms of pipe coupling technology for receiving and sealing off the pipes (8, 9, 15) of the optical-fibre cables (10), the sealing connection of pipe coupling technology between a press connection with sealing means and a pressing element with a union nut, between the pipe (8, 9, 15) of the optical-fibre cable (10) and the cable lead-in unit (13).

3. Optical-fibre transmission system comprising a cable closure for optical waveguides with splice organizers and optical-waveguide excess-length depositories for excess lengths of optical waveguides and comprising at least one optical-fibre cable, cable lead-in units in the form of cable lead-in spigots into the cable closure being arranged perpendicularly with respect to the axis of the closure body of the cable closure, the excess lengths of optical waveguides and the splice organizers being arranged within the closure body removably in the axial direction of the closure body and at least one end face of the closure body being closed off in a sealing manner by an externally accessible cover, characterized in that the cable lead-in units are designed as lead-in spigots (13) in the form of seal-tightly attached pipes (45, 46), in that the optical-fibre cables (10) in the form of optical-fibre minicables or optical-fibre microcables, respectively comprising a pipe (8, 9, 15) and optical waveguides (12), optical waveguide strips or optical waveguides bundles loosely introduced therein, are arranged in the cable lead-in units (13, 17-18, 45, 46, 56, 70) designed in terms of pipe coupling technology for receiving and sealing off the pipes (8, 9, 15) of the optical-fibre cables (10), the sealing connection of pipe coupling technology being a plastic crimped connection (58, 89) or a permanently elastic, annular seal between the pipe (8, 9, 15) of the optical-fibre cable (10) and the cable lead-in unit (13).

4. Optical-fibre transmission system according to Claim 1, characterized in that the closure body (5, 44) has a cylindrical shape.

5. Optical-fibre transmission system according to Claim 1, characterized in that the closure body has an oval shape.

6. Optical-fibre transmission system according to one of Claims 1 to 5, characterized in that the lead-in spigots (13) are led in tangentially at the wall of the closure of the closure body (5, 44).

7. Optical-fibre transmission system according to on of Claims 1 to 5, characterized in that the lead-in spigots (13) are led in radially at the wall of the closure of the closure body (5, 44).

8. Optical-fibre transmission system according to one of the preceding claims, characterized in that the cable lead-in units (13) for the inlet direction and outlet direction lie on the same level.

9. Optical-fibre transmission system according to one of Claims 1 to 8, characterized in that the cable lead-in units (13) for the inlet direction and outlet direction lie at different levels.

10. Optical-fibre transmission system according to one of the preceding claims, characterized in that the cable lead-in units (13) point in the same direction.

11. Optical-fibre transmission system according to one of Claims 1 to 9, characterized in that the cable lead-in units (13) point in different directions.

12. Optical-fibre transmission system according to one of the preceding claims, characterized in that the excess lengths of optical waveguide (24) are arranged circular up against the inner wall of the closure body (5).

13. Optical-fibre transmission system according to one of the preceding claims, characterized in that the excess lengths of optical waveguide (30, 38) are arranged in groups at different levels in the closure body (5).

14. Optical-fibre transmission system according to one of the preceding claims, characterized in that the excess lengths are protected by a flexible buckle-resistant tube (54), which is deposited in a plurality of loops, maintaining the minimum bending radius, in the inner closure body.

15. Optical-fibre transmission system according to Claim 3, characterized in that a plastically deformable soft-metal tube (87) is used for the crimped connection between the microcable and the cable lead-in unit (13).

16. Optical-fibre transmission system according to one of the preceding claims, characterized in that a compensation loop (47) of the pipe of the optical-fibre cable (10) is arranged ahead of the lead-in into a cable lead-in unit (13).

17. Optical-fibre transmission system according to Claim 16, characterized in that the compensation loop (47) is arranged as an attachment to the cable lead-in unit (13).

18. Optical-fibre transmission system according to one of the preceding claims, characterized in that the closure housing (5, 44) and the cover (20, 73, 74) are designed to withstand high mechanical loading for fitting into a drilled core hole of a laying route in the ground, preferably in a road surfacing.

19. Optical-fibre transmission system according to one of the preceding claims, characterized in that the cable lead-in units (13) for triple branches are fitted in a T-shape on the closure housing (5, 44).

20. Optical-fibre transmission system according to one of Claims 1 to 18, characterized in that cable lead-in units (13) for quadruple branches are fitted in a cross shape on the closure housing (5, 44).

21. Optical-fibre transmission system according to one of the previously specified claims, characterized in that the lead-in openings of the cable lead-in units (13) are designed in a funnel shape and preferably have a length stop for the microcable (10).

22. Optical-fibre transmission system according to one of the preceding claims, characterized in that the cable closure (61) is arranged in a protective housing (64), the protective housing (64) having lead-through openings (63) for the optical-fibre cables (62) and in that the intermediate space between the cable closure (61) and the inner wall of the protective housing (64) is filled, preferably with a flexible foam filling (66) of plastic.

23. Optical-fibre transmission system according to Claim 22, characterized in that the protective housing (64) consists of concrete and has a removable, load-bearing cover (68).

24. Optical-fibre transmission system according to one of the preceding claims, characterized in that the diameter of the cable closure is 70 to 100 mm and the height is 150 to 250 mm.

25. Optical-fibre transmission system comprising a cable closure for optical waveguides with splice organizers and optical-waveguide excess-length depositories for excess lengths of optical waveguides and comprising at least one optical-fibre cable, cable lead-in units of the cable closure being arranged in the axial direction of the closure body of the cable closure and the cable closure (1, 2, la, 1b) comprising an extended closure pipe (19), characterized in that the optical-fibre cables (10) are designed in the form of optical-fibre minicables or optical-fibre microcables, respectively comprising a pipe (8, 9, 15) and optical waveguides (12), optical waveguide strips or optical waveguide bundles loosely introduced therein, in that the closure pipe (19) is adapted at the ends to the diameter of the pipe of the optical-fibre cable (8, 9, 10, 15), in that the leading in of the pipes of the optical-fibre cables takes place in the axial direction of the closure pipe (19) and in that the seals between the closure pipe (19) and the optical-fibre cables (8, 9, 10, 15) take place in cable lead-in units (17 - 18) adapted to the diameters of the optical-fibre cables in pipe coupling technology, the sealing connection of the cable lead-in unit (17-18) in pipe coupling technology comprising peripheral press seals.

26. Optical-fibre transmission system comprising a cable closure for optical waveguides with splice organizers and optical-waveguide excess-length depositories for excess lengths of optical waveguides and comprising at least one optical-fibre cable, cable lead-in units of the cable closure being arranged in the axial direction of the closure body of the cable closure and the cable closure (1, 2, la, 1b) comprising an extended closure pipe (19), characterized in that the optical-fibre cables (10) are designed in the form of optical-fibre minicables or optical-fibre microcables, respectively comprising a pipe (8, 9, 15) and optical waveguides (12), optical waveguide strips or optical waveguide bundles loosely introduced therein, in that the closure pipe (19) is adapted at the ends to the diameter of the pipe of the optical-fibre cable (8, 9, 10, 15), in that the leading in of the pipes of the optical-fibre cables takes place in the axial direction of the closure pipe (19) and in that the seals between the closure pipe (19) and the optical-fibre cables (8, 9, 10, 15) take place in cable lead-in units (17 - 18) adapted to the diameters of the optical-fibre cables in pipe coupling technology, and the ends of the extended closure pipe (19) are provided in pipe coupling technology with an external thread and in that the seals are formed by union nuts (17 - 18) and elastic sealing inserts (14).

27. Optical-fibre transmission system comprising a cable closure for optical waveguides with splice organizers and optical-waveguide excess-length depositories for excess lengths of optical waveguides and comprising at least one optical-fibre cable, cable lead-in units of the cable closure being arranged in the axial direction of the closure body of the cable closure and the cable closure (1, 2, la, 1b) comprising an extended closure pipe (19), characterized in that the optical-fibre cables (10) are designed in the form of optical-fibre minicables or optical-fibre microcables, respectively comprising a pipe (8, 9, 15) and optical waveguides (12), optical waveguide strips or optical waveguide bundles loosely introduced therein, in that the closure pipe (19) is adapted at the ends to the diameter of the pipe of the optical-fibre cable (8, 9, 10, 15), in that the leading in of the pipes of the optical-fibre cables takes place in the axial direction of the closure pipe (19) and in that the seals between the closure pipe (19) and the optical-fibre cables (8, 9, 10, 15) take place in cable lead-in units (17 - 18) adapted to the diameters of the optical-fibre cables in pipe coupling technology, and in that the seals are formed at the ends of the extended closure pipe (19, KM) in pipe coupling technology by crimped connections (87).

28. Optical-fibre transmission system according to one of Claims 25 to 27, characterized in that the ends of the extended closure pipe of the cable closure (2) have different diameters for adaptation to different diameters of pipes of various optical-fibre cables (9, 15).

29. Optical-fibre transmission system according to one of Claims 25 to 27, characterized in that the cable closure comprises a plurality of rings (33, 35) which can be placed closely against one another.

30. Optical-fibre transmission system according to one of Claims 25 to 27, characterized in that the closure body (33 - 35), or the extended closure pipe (19), is longitudinally divided, preferably in the plane of the cable lead-in units (13, 36).

31. Optical-fibre transmission system according to Claim 2 or 25, characterized in that cutting rings are arranged in the cable lead-in units (13).

32. Optical-fibre transmission system according to Claim 29, characterized in that sealing systems are incorporated in the separating planes between the individual rings (33, 35).

33. Optical-fibre transmission system according to Claim 29, characterized in that cable lead-in units (13) are arranged in the separating planes between the individual rings (33, 35) or sections.

34. Optical-fibre transmission system according to one of the preceding claims, characterized in that the interior space of the cable closure (5) is subdivided by separating plates (29) into a plurality of sections.

35. Optical-fibre transmission system according to one of Claims 1 to 3, characterized in that the cable closure has two covers (68, 73, 76, 80), arranged one above the other, the inner cover (73) sealing and the outer cover (68, 76, 80) absorbing mechanical loads.

36. Optical-fibre transmission system according to one of Claims 3 or 27, characterized in that the crimped connection protects the tubular microcable (1) at the cable lead-in of the cable closure against tensile, compressive and torsional stress.

37. Optical-fibre transmission system according to one of Claims 16 or 17, characterized in that differences in the elongation of the microcable (10) with respect to the surrounding bitumen can be compensated by compensation loops (47).

38. Optical-fibre transmission system according to one of Claims 3, 27, 36 or 37, characterized in that the complete cable closure, comprising closure body, cover, splice organizer, protective tube, cable lead-in units, sealing systems, crimped connections and compensation loops, is prefabricated at the factory.

39. Optical-fibre transmission system according to one of Claims 2 or 26, characterized in that cold- or hot-shrink tubes, O-rings, annular lip seals or permanently elastic seals may be used for an elastic sealing.

40. Optical-fibre transmission system according to Claim 27, characterized in that sealing heads (DK1-DK4) of plastically deformable material, preferably of a metal, are crimped onto the pipes of the optical-fibre cables (MK1-MK6) in a sealing manner at peripheral crimping points (KRK), in that the closure pipe (MR1, MR2) likewise consists of deformable material, preferably of a metal, and is crimped on at its end faces onto the sealing heads (DK1-DK4) at the peripheral crimping points (KRMR) and in that the closure pipe (MR1, MR2) is dimensioned in length such that adequate excess lengths of optical waveguide (LU1, LU2) can be arranged in waveform extent and optical-fibre splices (LS) can be arranged.

41. Optical-fibre transmission system according to Claim 27 or 40, characterized in that the optical-fibre splices (LS) are arranged in series one behind the other within the cable closure (KM).

42. Optical-fibre transmission system according to Claim 40, characterized in that the optical-fibre splices (LS) are arranged next to one another within the cable closure (KM).

43. Optical-fibre transmission system according to one of Claims 40 to 42, characterized in that the bore (BDK) in the sealing head (DK1, DK2) is adapted in each case to the diameter of the pipe of the optical-fibre cable (MK1-MK6) and in that a peripheral stop (AS) for the pipe of the corresponding optical-fibre cable (MK1-MK6) is arranged within the bore (BDK).

44. Optical-fibre transmission system according to one of Claims 40 to 42, characterized in that the sealing head (DK3, DK4) has a plurality of lead-in bores (EB), in that crimpable cable lead-in spigots (KES1-KES4) are inserted in a sealtight manner in the lead-in bores (EB), the seals between the pipes of the optical-fibre cables (MK1-MK6) and the cable lead-in spigots (KE1-KE4) taking place at the peripheral crimping points (KRK).

45. Optical-fibre transmission system according to one of Claims 40 to 44, characterized in that the sealing heads (DK1-DK4) and/or the closure pipe (MR1, MR2) consist of copper or similarly plastically deformable metal or copper-based wrought alloys.

46. Optical-fibre transmission system according to one of Claims 40 to 44, characterized in that the sealing heads (DK1 to DK4) and/or the closure pipe (MR1, MR2) consist of aluminium or cold-workable, non-hardenable aluminium alloys.

47. Optical-fibre transmission system according to one of Claims 40 to 44, characterized in that the sealing heads (DK1 to DK4) and/or the closure pipe (MR1, MR2) consist of plastically deformable, non-hardened, stainless steel.

48. Optical-fibre transmission system according to one of Claims 40 to 47, characterized in that the electrically conductive pipes of the microcables (MK1) are through-connected electrically conductively to one another by the closure pipe (MR1) and the crimped-on sealing heads (DK1).

49. Optical-fibre transmission system according to one of Claims 2 or 26, characterized in that the sealing heads have threads at their ends, in that deformable cutting rings are inserted at the sealing points between the sealing head outer facings and the closure pipe and between the sealing head bores and the pipe ends of the microcables and in that union nuts over the cutting rings are screwed onto the threads of the sealing heads.

50. Optical-fibre transmission system according to one of the preceding claims, characterized in that the microcable (105) is led in a laying channel of the laying ground and is led through a cable lead-in (107) of a manhole (103), made in the same laying ground, into a cable closure serving as an adapter closure (110) for receiving microcables and in that the optical waveguides of the microcable (105) can be spliced to the optical waveguides of a flexible cross-connecting cable (111) for connection to the optical cables of an already existing optical-fibre transmission system (104).

51. Method according to Claim 50, characterized in that the microcable (105) led into the manhole (103) is mechanically protected by a protective pipe (109) up to the adapter closure (110).

52. Method according to one of Claims 50 or 51, characterized in that a core hole (108) is made into the laying ground (102) on the outer side of the wall of the manhole (103) in the intended leading-in region and in that the lead-in of the microcable (105) is led via the core hole (108) and beyond into the manhole (103) in a sealtight manner by seals (107).

53. Method according to one of Claims 50 to 52, characterized in that microcables at different laying heights are led into a manhole (103).

54. Optical-fibre transmission system according to one of Claims 16, 17 or 37, charaterized in that a protective device for elongation loops of optical-fibre cables, in particular of microcables, is arranged for terminating a core hole in solid laying ground, in that the protective device comprises a protective cover (SD) and a driving-in peg (ES), provided centrally at one end, for fixing in a central hole at the bottom of the core hole (KB), in that the diameter of the protective cover (SD) corresponds to the diameter of the core hole (KB) and in that filling material is arranged above the protective cover (SD) for sealtight termination and for filling the remaining core hole (KB).

55. Optical-fibre transmission system according to Claim 54, characterized in that laying channels (VN1, VN2) run into and out of the core hole (KB) tangentially.

56. Optical-fibre transmission system according to one of Claims 54 or 55, characterized in that the protective cover (SD) has on its upwardly facing side a pulling eyelet (ZO).

57. Optical-fibre transmission system according to one of Claims 54 to 56, characterized in that the driving-in peg (ES) has in the free space of the core hole (KB), as a diameter limitation (EBS) for the elongation loop (DS), a diameter which corresponds to the minimum permissible bending radius of the led-in cable (MK).

58. Optical-fibre transmission system according to one of Claims 54 to 57, characterized in that the filling material (FM) consists of bitumen.

59. Optical-fibre transmission system according to Claim 58, characterized in that crushed solid materials, for example chippings, are added to the filling material (FM).

60. Optical-fibre transmission system according to one of Claims 54 to 59, characterized in that the free space of the core hole (KB) underneath the protective cover (SD) is filled with a filler, which does not hinder the free movement of the microcable (MK).

61. Optical-fibre transmission system according to one of Claims 1 to 24, characterized in that the cable closure (KMO) comprises an outer body (AK) which can withstand high mechanical loads and a cable-closure sealing body (KDK) fitted in the outer body (AK), in that the outer body (AK) has a removable outer cover (AD), which lies at the same height as the surface (SO) of the laying ground (VG), in that the cable-closure sealing body (KDK) lying thereunder is closed off by an upwardly removable sealing cover (DD), in that cable connection units (KA1, KA2, KA3) in pipe form are led in from below through the outer body (AK) into the cable-closure sealing body (KDK) and in that the ends of the cables (K, MK) are led into these cable connection units (KA1, KA2, KA3) and sealed off.

62. Optical-fibre transmission system according to Claim 61, characterized in that the ends of the cables in the form of microcables (MK), respectively comprising a pipe and optical waveguides led therein, are connected in a sealtight manner to the cable connection units (KA) by crimped connections (KV).

63. Optical-fibre transmission system according to Claim 61, characterized in that a shrink tube piece (SS) is arranged at the end of a cable connection unit (KA3) for the sealtight leading in of a cable (K).

64. Optical-fibre transmission system according to one of Claims 61 to 63, characterized in that the leading-in points of the cable connection units (KA1, KA2, KA3) are bent off in a horizontal direction at the laying height of the cables (K, MK) introduced in the laying ground (VG).

65. Optical-fibre transmission system according to one of Claims 61 to 63, characterized in that the cable closure (KMO) has additional cable connection units on the side wall, which are fitted on at the height of laying channels for microcables.

66. Optical-fibre transmission system according to one of Claims 61 to 63, characterized in that the intermediate space between the cable-closure sealing body (KDK) and the outer body (AK) is filled with a filler (FS), preferably an expandable plastics foam.

## Revendications

1. Système de transmission par câbles à fibres optiques comprenant un manchon de câble pour câble à fibres optiques avec cassettes à épissures et boucles de surlongueurs pour surlongueurs de câbles à fibres optiques et au moins un câble à fibres optiques, les unités d'introduction de câble étant disposées sous forme de tubulures d'introduction de câble dans le manchon de câble, perpendiculairement à l'axe du corps du manchon de câble, les surlongueurs de câbles à fibres optiques et les cassettes à épissures étant disposées dans le corps du manchon dans le sens de l'axe du corps du manchon, de sorte qu'elles peuvent être dégagées, et au moins un côté du corps de manchon étant fermé d'une façon étanche par un couvercle accessible de l'extérieur
**caractérisé par le fait**
que les unités d'introduction de câbles sont conçues comme tubulures d'introduction (13), sous forme de tubes (45, 46) mis en place d'une façon étanche, que les câbles à fibres optiques (10), sous forme de mini-câbles à fibres optiques ou de micro-câbles à fibres optiques, composés respectivement d'un tube (8, 9, 15) et de fibres optiques (12), de rubans de fibres optiques ou de faisceaux de fibres optiques qui y sont introduits sans y être fixés, sont disposés dans les unités d'introduction de câbles (13, 17- 18, 45, 46, 56, 70), conçues suivant la technique de raccordement des tubes pour la réception et l'étanchéité des tubes (8, 9, 15) des câbles à fibres optiques (10), le raccord étanche de la technique de raccordement des tubes étant un raccord soudé, brasé ou collé entre le tube (8, 9, 15) du câble à fibres optiques (10) et l'unité d'introduction de câbles (13).

2. Système de transmission par câbles à fibres optiques comprenant un manchon de câble pour câble à fibres optiques avec cassettes à épissures et boucles de surlongueurs pour surlongueurs de câbles à fibres optiques et au moins un câble à fibres optiques, les unités d'introduction de câble étant disposées sous forme de tubulures d'introduction de câble dans le manchon de câble, perpendiculairement à l'axe du corps du manchon de câble, les surlongueurs de câbles à fibres optiques et les cassettes à épissures étant disposées dans le corps du manchon dans le sens de l'axe du corps du manchon, de sorte qu'elles peuvent être dégagées, et au moins un côté du corps de manchon étant fermé d'une façon étanche par un couvercle accessible de l'extérieur
**caractérisé par le fait**
que les unités d'introduction de câbles sont conçues comme tubulures d'introduction (13), sous forme de tubes (45, 46) mis en place d'une façon étanche, que les câbles à fibres optiques (10), sous forme de mini-câbles à fibres optiques ou de micro-câbles à fibres optiques, composés respectivement d'un tube (8, 9, 15) et de fibres optiques (12), de rubans de fibres optiques ou de faisceaux de fibres optiques qui y sont introduits librement sans y être fixés, sont disposés dans les unités d'introduction de câbles (13, 17 - 18, 45, 46, 56, 70), conçues suivant la technique de raccordement des tubes pour la réception et l'étanchéité des tubes (8, 9, 15) des câbles à fibres optiques (10), le raccord étanche de la technique de raccordement des tubes étant un raccord serti avec des moyens d'étanchéité et un élément serti avec un écrou d'accouplement entre le tube (8, 9, 15) du câble à fibres optiques (10) et l'unité d'introduction de câbles (13).

3. Système de transmission par câbles à fibres optiques comprenant un manchon de câble pour câble à fibres optiques avec cassettes à épissures et boucles de surlongueurs pour surlongueurs de câbles à fibres optiques et au moins un câble à fibres optiques, les unités d'introduction de câble étant disposées sous forme de tubulures d'introduction de câble dans le manchon de câble, perpendiculairement à l'axe du corps du manchon de câble, les surlongueurs de câbles à fibres optiques et les cassettes à épissures étant disposées dans le corps du manchon dans le sens de l'axe du corps du manchon, de sorte qu'elles peuvent être dégagées, et au moins un côté du corps de manchon étant fermé d'une façon étanche par un couvercle accessible de l'extérieur
**caractérisé par le fait**
que les unités d'introduction de câbles sont conçues comme tubulures d'introduction (13), sous forme de tubes (45, 46) mis en place d'une façon étanche, que les câbles à fibres optiques (10), sous forme de mini-câbles à fibres optiques ou de micro-câbles à fibres optiques, composés respectivement d'un tube (8, 9, 15) et de fibres optiques (12), de rubans de fibres optiques ou de faisceaux de fibres optiques qui y sont introduits librement sans y être fixés, sont disposés dans les unités d'introduction de câbles (13, 17- 18, 45, 46, 56, 70), conçues suivant la technique de raccordement des tubes pour la réception et l'étanchéité des tubes (8, 9, 15) des câbles à fibres optiques (10), le raccord étanche de la technique de raccordement des tubes étant un raccord rétreint plastique (58, 89) ou un joint annulaire à élasticité permanente entre le tube (8, 9, 15) du câble à fibres optiques (10) et l'unité d'introduction de câbles (13).

4. Système de transmission par câbles à fibres optiques selon la revendication 1
**caractérisé par le fait**
que le corps du manchon a une forme cylindrique.

5. Système de transmission par câbles à fibres optiques selon la revendication 1
**caractérisé par le fait**
que le corps du manchon (5, 44) a une forme ovale.

6. Système de transmission par câbles à fibres optiques selon l'une des revendications 1 à 5
**caractérisé par le fait**
que la tubulure d'introduction (13) est introduite tangentiellement dans la paroi du corps de manchon (5, 44).

7. Système de transmission par câbles à fibres optiques selon l'une des revendications 1 à 5
**caractérisé par le fait**
que la tubulure d'introduction (13) est introduite radialement dans la paroi du corps de manchon (5, 44).

8. Système de transmission par câbles à fibres optiques selon l'une des revendications précédentes
**caractérisé par le fait**
que les unités d'introduction de câbles (13) pour la direction entrante et la direction sortante se trouvent dans le même plan.

9. Système de transmission par câbles à fibres optiques selon l'une des revendications précédentes
**caractérisé par le fait**
que les unités d'introduction de câbles (13) pour la direction entrante et la direction sortante se trouvent dans des plans différents.

10. Système de transmission par câbles à fibres optiques selon l'une des revendications précédentes
**caractérisé par le fait**
que les unités d'introduction de câbles (13) sont dirigées dans la même direction.

11. Système de transmission par câbles à fibres optiques selon l'une des revendications 1 à 9
**caractérisé par le fait**
que les unités d'introduction de câbles (13) sont dirigées dans des directions différentes.

12. Système de transmission par câbles à fibres optiques selon l'une des revendications précédentes
**caractérisé par le fait**
que les surlongueurs de câbles à fibres optiques (24) sont disposées en cercle, d'une façon adjacente, le long de la paroi intérieure du corps du manchon (5).

13. Système de transmission par câbles à fibres optiques selon l'une des revendications précédentes
**caractérisé par le fait**
que les surlongueurs de câbles à fibres optiques (30, 38) sont disposées en groupes sur différents niveaux dans le corps du manchon (5).

14. Système de transmission par câbles à fibres optiques selon l'une des revendications précédentes
**caractérisé par le fait**
que les surlongueurs sont protégées par une gaine (54), souple et qui ne peut pas être pliée, qui est déposée en plusieurs boucles dans le corps intérieur du manchon en respectant un rayon de courbure minimum.

15. Système de transmission par câbles à fibres optiques selon la revendication 3
**caractérisé par le fait**
que, pour le raccord rétreint entre le micro-câble et l'unité d'introduction de câbles (13), on utilise un tube fin en métal mou (87), façonnable plastiquement.

16. Système de transmission par câbles à fibres optiques selon l'une des revendications précédentes
**caractérisé par le fait**
qu'une boucle de compensation (47) du tube du câble à fibres optiques (10) est mise en place avant l'introduction dans une unité d'introduction de câbles (13).

17. Système de transmission par câbles à fibres optiques selon la revendication 16
**caractérisé par le fait**
que la boucle de compensation (47) est disposée comme rallonge sur l'unité d'introduction de câbles (13).

18. Système de transmission par câbles à fibres optiques selon l'une des revendications précédentes
**caractérisé par le fait**
que le boîtier du manchon (5, 44) et le couvercle (20, 73, 74) résistant à une charge mécanique élevée sont conçus pour être utilisés dans le sol, de préférence dans un revêtement routier, dans un trou de carottage d'un tracé de pose.

19. Système de transmission par câbles à fibres optiques selon l'une des revendications précédentes
**caractérisé par le fait**
que les unités d'introduction de câbles (13) sont mises en place sur le coffret du manchon (5, 44) pour des dérivations triples en forme de T.

20. Système de transmission par câbles à fibres optiques selon l'une des revendications précédentes
**caractérisé par le fait**
que les unités d'introduction de câbles (13) sont mises en place sur le coffret du manchon (5, 44) pour des dérivations quadruples en forme de croix.

21. Système de transmission par câbles à fibres optiques selon l'une des revendications précédentes
**caractérisé par le fait**
que les ouvertures d'introduction des unités d'introduction de câbles (13) ont une forme d'entonnoir et comportent, de préférence, une butée pour le micro-câble (10) dans le sens longitudinal.

22. Système de transmission par câbles à fibres optiques selon l'une des revendications précédentes
**caractérisé par le fait**
que le manchon de câble (61) est disposé dans un boîtier de protection (64), le boîtier de protection (64) comportant des ouvertures de traversée (63) pour les câbles à fibres optiques (62), et que l'espace intermédiaire entre le manchon de câble (61) et la paroi intérieure du boîtier de protection (64) est rempli, de préférence, avec une mousse molle (66) de matière plastique.

23. Système de transmission par câbles à fibres optiques selon la revendication 22
**caractérisé par le fait**
que le boîtier de protection (64) est en béton et comporte un couvercle (68) démontable et résistant.

24. Système de transmission par câbles à fibres optiques selon l'une des revendications précédentes
**caractérisé par le fait**
que le diamètre du manchon de câble est de 70 à 100 mm et sa hauteur de 150 à 250 mm.

25. Système de transmission par câbles à fibres optiques comprenant un manchon de câble pour câble à fibres optiques avec cassettes à épissures et boucles de surlongueurs pour surlongueurs de câbles à fibres optiques et au moins un câble à fibres optiques, les unités d'introduction de câble du manchon de câble étant disposées dans le sens axial du corps du manchon de câble et le manchon de câble (1, 2, la, 1b) étant constitué d'un tube de manchon (19) élargi
**caractérisé par le fait**
que les câbles à fibres optiques (10) sont conçus sous forme de mini-câbles et micro-câbles à fibres optiques composés respectivement d'un tube (8, 9, 15) et de fibres optiques (12), de rubans de fibres optiques ou de faisceaux de fibres optiques qui y sont introduits sans y être fixés, par le fait que le tube du manchon (19) est ajusté à ses extrémités au diamètre du tube du câble à fibres optiques (8, 9, 10, 15), par le fait que l'introduction des tubes des câbles à fibres optiques se fait dans la direction de l'axe du tube du manchon (19) et par le fait que les étanchéités entre le tube du manchon (19) et les câbles à fibres optiques (8, 9, 10, 15) se font dans des unités d'introduction de câbles (17 - 18) adaptées aux diamètres des câbles à fibres optiques réalisés en technique de raccordement de tubes, le raccord étanche de l'unité d'introduction de câbles (17 - 18), réalisé en technique de raccordement de tubes, étant constitué de joints circulaires serrés.

26. Système de transmission par câbles à fibres optiques comprenant un manchon de câble pour câble à fibres optiques avec cassettes à épissures et boucles de surlongueurs pour surlongueurs de câbles à fibres optiques et au moins un câble à fibres optiques, les unités d'introduction de câble du manchon de câble étant disposées dans le sens axial du corps du manchon de câble et le manchon de câble (1, 2, la, 1b) étant constitué d'un tube de manchon (19) élargi
**caractérisé par le fait**
que les câbles à fibres optiques (10) sont conçus sous forme de mini-câbles et micro-câbles à fibres optiques composés respectivement d'un tube (8, 9, 15) et de fibres optiques (12), de rubans de fibres optiques ou de faisceaux de fibres optiques qui y sont introduits sans y être fixés, par le fait que le tube du manchon (19) est ajusté à ses extrémités au diamètre du tube du câble à fibres optiques (8, 9, 10, 15), par le fait que l'introduction des tubes des câbles à fibres optiques se fait dans la direction de l'axe du tube du manchon (19) et par le fait que les étanchéités entre le tube du manchon (19) et les câbles à fibres optiques (8, 9, 10, 15) se font dans des unités d'introduction de câbles (17 - 18) adaptées aux diamètres des câbles à fibres optiques réalisés en technique de raccordement de tubes et par le fait que les extrémités du tube élargi du manchon (19), réalisé en technique de raccordement de tubes, sont munies d'un filetage mâle, par le fait que les étanchéités sont formées par des écrous d'accouplement (17 - 18) et des garnitures élastiques d'étanchéité (14).

27. Système de transmission par câbles à fibres optiques comprenant un manchon de câble pour câble à fibres optiques avec cassettes à épissures et boucles de surlongueurs pour surlongueurs de câbles à fibres optiques et au moins un câble à fibres optiques, les unités d'introduction de câble du manchon de câble étant disposées dans le sens axial du corps du manchon de câble et le manchon de câble (1, 2, 1a, 1b) étant constitué d'un tube de manchon (19) élargi
**caractérisé par le fait**
que les câbles à fibres optiques (10) sont conçus sous forme de mini-câbles et micro-câbles à fibres optiques composés respectivement d'un tube (8, 9, 15) et de fibres optiques (12), de rubans de fibres optiques ou de faisceaux de fibres optiques qui y sont introduits sans y être fixés, par le fait que le tube du manchon (19) est ajusté à ses extrémités au diamètre du tube du câble à fibres optiques (8, 9, 10, 15), par le fait que l'introduction des tubes des câbles à fibres optiques se fait dans la direction de l'axe du tube du manchon (19) et par le fait que les étanchéités entre le tube du manchon (19) et les câbles à fibres optiques (8, 9, 10, 15) se font dans des unités d'introduction de câbles (17 - 18) adaptées aux diamètres des câbles à fibres optiques réalisés en technique de raccordement de tubes et par le fait que les étanchéités aux extrémités du tube élargi du manchon (19, KM), réalisé en technique de raccordement de tubes sont formées par des raccords rétreints (87).

28. Système de transmission par câbles à fibres optiques selon l'une des revendications 25 à 27
**caractérisé par le fait**
que les extrémités du tube élargi du manchon de câble (2) ont des diamètres différents pour l'adaptation aux différents diamètres de tubes de différents câbles à fibres optiques (9, 15).

29. Système de transmission par câbles à fibres optiques selon l'une des revendications 25 à 27
**caractérisé par le fait**
que le manchon de câble est constitué de plusieurs anneaux (33, 35) pouvant être assemblés d'une façon étanche.

30. Système de transmission par câbles à fibres optiques selon l'une des revendications 25 à 27
**caractérisé par le fait**
que le corps du manchon (33 - 35) et le tube élargi du manchon (19) est partagé longitudalement de préférence dans le plan des unités d'introduction de câbles (13, 36).

31. Système de transmission par câbles à fibres optiques selon la revendication 2 ou 25
**caractérisé par le fait**
que des bagues à autoblocage sont disposées dans les unités d'introduction de câbles (13).

32. Système de transmission par câbles à fibres optiques selon la revendication 29
**caractérisé par le fait**
que des systèmes d'étanchéité sont logés dans les plans de séparation entre les différents anneaux (33, 35).

33. Système de transmission par câbles à fibres optiques selon la revendication 29
**caractérisé par le fait**
que les unités d'introduction de câbles (13) sont disposées dans les plans de séparation entre les différents anneaux (33, 35) ou entre différentes sections.

34. Système de transmission par câbles à fibres optiques selon l'une des revendications précédentes
**caractérisé par le fait**
que l'espace intérieur du manchon de câble (5) est partagé en plusieurs sections par des plaques de séparation (29).

35. Système de transmission par câbles à fibres optiques selon l'une des revendications 1 à 3
**caractérisé par le fait**
que le manchon de câble comporte deux couvercles disposés l'un au dessus de l'autre (68, 73, 76, 80), le couvercle intérieur (73) assurant l'étanchéité et le couvercle extérieur (68, 76, 80) absorbant les efforts mécaniques.

36. Système de transmission par câbles à fibres optiques selon l'une des revendications 3 ou 27
**caractérisé par le fait**
que le raccord rétreint protège le micro-câble (1) en forme de tube fin, à l'introduction de câble du manchon de câble, contre des efforts de traction, de pression et de torsion.

37. Système de transmission par câbles à fibres optiques selon l'une des revendications 16 ou 17
**caractérisé par le fait**
que, grâce à des boucles de compensation (47), des différences dans la dilatation en longueur du micro-câble (10) par rapport au bitume qui l'englobe peuvent être compensées.

38. Système de transmission par câbles à fibres optiques selon l'une des revendications 3, 27, 36 ou 37
**caractérisé par le fait**
que l'ensemble du manchon de câble comprenant le corps du manchon, le couvercle, la cassette à épissures, la gaine de protection, les unités d'introduction de câbles, les systèmes d'étanchéité, les raccords rétreints et les boucles de compensation, est préfabriqué en usine.

39. Système de transmission par câbles à fibres optiques selon l'une des revendications 2 ou 26
**caractérisé par le fait**
que, pour une étanchéité élastique, on peut utiliser des gaines thermorétractables à chaud ou à froid, des bagues toriques, des joints annulaires à lèvres ou des joints à élasticité permanente.

40. Système de transmission par câbles à fibres optiques selon la revendication 27
**caractérisé par le fait**
que des têtes d'étanchéité (DK1 - DK4) en matériau plastiquement façonnable, de préférence en métal, sont rétreintes, d'une façon étanche, aux points de rétreint (KRK) répartis circulairement, sur les tubes des câbles à fibres optiques (MK1 - MK6), par le fait que le tube du manchon (MR1, MR2) est également en matériau plastiquement façonnable, de préférence en métal, et qu'il est rétreint à ses extrémités sur les têtes d'étanchéité (DK1 - DK4), aux points de rétreinte (KRMR) à répartition circulaire, par le fait que le tube du manchon (MR1, MR2) est dimensionné en longueur de telle sorte qu'on peut y loger des épissures de câbles à fibres optiques et, sous une forme ondulée, des boucles de surlongueur suffisantes de câbles à fibres optiques (LU1 - LU2).

41. Système de transmission par câbles à fibres optiques selon la revendication 27 ou 40
**caractérisé par le fait**
que les épissures de câbles à fibres optiques (LS) sont disposées l'une derrière l'autre à l'intérieur du manchon de câble (KM).

42. Système de transmission par câbles à fibres optiques selon la revendication 40
**caractérisé par le fait**
que les épissures de câbles à fibres optiques (LS) sont disposées l'une à côté de l'autre à l'intérieur du manchon de câble (KM).

43. Système de transmission par câbles à fibres optiques selon l'une des revendications 40 à 42
**caractérisé par le fait**
que l'alésage (BDK) dans la tête d'étanchéité (DK1, DK2) est adapté respectivement au diamètre du tube du câble à fibres optiques (MK1 - MK6) et par le fait que, dans l'alésage (BDK), est disposée une butée circulaire (AS) pour le tube du câble à fibres optiques (MK1 - MK6) correspondant.

44. Système de transmission par câbles à fibres optiques selon l'une des revendications 40 à 42
**caractérisé par le fait**
que la tête d'étanchéité (DK3, DK4) comporte plusieurs trous d'introduction (EB), par le fait que, dans les trous d'introduction (EB), des tubulures d'introduction de câbles (KES1 - KES4), qui peuvent être rétreintes, sont mises en place d'une façon étanche, les étanchéités entre les tubes des câble à fibres optiques (MK1 - MK6) et les tubulures d'introduction de câbles (KE1 - KE4) se faisant aux points de rétreinte (KRK) à répartition circulaire.

45. Système de transmission par câbles à fibres optiques selon l'une des revendications 40 à 44
**caractérisé par le fait**
que les têtes d'étanchéité (DK1 - DK4) et/ou le tube du manchon (MR1, MR2) sont en cuivre ou en métal façonnable plastiquement d'une façon semblable ou en alliages de corroyage à base de cuivre.

46. Système de transmission par câbles à fibres optiques selon l'une des revendications 40 à 44
**caractérisé par le fait**
que les têtes d'étanchéité (DK1 à DK4) et/ou le tube du manchon (MRI, MR2) sont en aluminium ou en alliages d'aluminium façonnables à froid et inaptes à la trempe.

47. Système de transmission par câbles à fibres optiques selon l'une des revendications 40 à 44
**caractérisé par le fait**
que les têtes d'étanchéité (DK1 à DK4) et/ou le tube du manchon (MR1, MR2) sont en acier façonnable plastiquement, non trempé et inoxydable.

48. Système de transmission par câbles à fibres optiques selon l'une des revendications 40 à 47
**caractérisé par le fait**
que les tubes électriquement conducteurs des micro-câbles (MK1) sont raccordés ensemble en contact électrique par le tube du manchon (MR1) et les têtes d'étanchéité rétreintes (DK1).

49. Système de transmission par câbles à fibres optiques selon l'une des revendications 2 ou 26
**caractérisé par le fait**
que les têtes d'étanchéité comportent des filetages à leurs extrémités, par le fait que des bagues déformables à autoblocage sont utilisées aux points d'étanchéité entre les enveloppes extérieures des têtes d'étanchéité et le tube du manchon et entre les alésages des têtes d'étanchéité et les extrémités des tubes des micro-câbles, par le fait que des écrous d'accouplement sont vissés, par dessus les bagues déformables à autoblocage, sur les filetages des têtes d'étanchéité.

50. Système de transmission par câbles à fibres optiques selon l'une des revendications précédentes
**caractérisé par le fait**
que le micro-câble (105) est posé dans une rainure du soubassement de pose et est introduit, par une introduction de câble (107) d'un puits à câbles (103) mis en place dans le même soubassement de pose, dans un manchon de câble prévu pour recevoir des micro-câbles et servant de manchon de transfert (110) et par le fait que les fibres optiques du micro-câble (105) peuvent être épissées aux fibres optiques d'un câble souple de rangement (111) pour raccordement aux câbles optiques d'un système existant de transmission par câbles à fibres optiques (104).

51. Procédé selon la revendication 50
**caractérisé par le fait**
que le micro-câble (105) introduit dans le puits à câbles (103) est protégé mécaniquement jusqu'au manchon de transfert (110) par un tube de protection (109).

52. Procédé selon l'une des revendications 50 ou 51
**caractérisé par le fait**
qu'un carottage (108) est exécuté, dans la zone d'introduction prévue dans le soubassement de pose (102), sur le côté extérieur de la paroi du puits à câbles (103), par le fait que l'introduction du micro-câble (105) est introduite dans le puits à câbles (103), d'une façon étanche avec des étanchéités (107), en traversant le carottage (108).

53. Procédé selon l'une des revendications 50 à 52
**caractérisé par le fait**
que des micro-câbles sont introduits dans un puits à câbles (103) à des hauteurs de pose différentes.

54. Système de transmission par câbles à fibres optiques selon l'une des revendications 16, 17 ou 37
**caractérisé par le fait**
qu'un dispositif de protection pour boucles de dilatation de câbles à fibres optiques, en particulier de micro-câbles, est mis en place dans un soubassement compact de pose pour fermer un carottage, par le fait que le dispositif de protection est constitué d'un couvercle de protection (SD) et d'un poinçon (ES), placé centré d'un côté pour être fixé dans un trou centré dans la base du trou de carottage (KB), par le fait que le diamètre du couvercle de protection (SD) correspond au diamètre du carottage (KB) et par le fait qu'un matériau de remplissage est disposé au dessus du couvercle de protection (SD) pour former une fermeture étanche et pour remplir le reste du carottage (KB).

55. Système de transmission par câbles à fibres optiques selon la revendication 54
**caractérisé par le fait**
que des rainures de pose (VN1, VN2) entrent et sortent tangentiellement dans le carottage (KB).

56. Système de transmission par câbles à fibres optiques selon l'une des revendications 54 ou 55
**caractérisé par le fait**
que le couvercle de protection (SD) comporte un oeil de levage (ZO) sur son côté toumé vers le haut.

57. Système de transmission par câbles à fibres optiques selon l'une des revendications 54 à 56
**caractérisé par le fait**
que le poinçon (ES), dans l'espace libre du carottage (KB), a, comme limitation de diamètre (ESB) pour la boucle de dilatation (DS), un diamètre qui correspond au rayon de courbure minimum admissible du câble introduit (MK).

58. Système de transmission par câbles à fibres optiques selon l'une des revendications 54 à 57
**caractérisé par le fait**
que le matériau de remplissage (FM) est composé de bitume.

59. Système de transmission par câbles à fibres optiques selon la revendication 58
**caractérisé par le fait**
que des produits solides concassés, par exemple des gravillons, sont ajoutés au matériau de remplissage (FM).

60. Système de transmission par câbles à fibres optiques selon l'une des revendications 54 à 59
**caractérisé par le fait**
que l'espace libre du carottage (KB) est rempli, au dessous du couvercle de protection (SD), d'un moyen de remplissage qui ne gêne pas les libres mouvements du micro-câble (MK).

61. Système de transmission par câbles à fibres optiques selon l'une des revendications 1 à 24
**caractérisé par le fait**
que le manchon de câble (KMO) se compose d'un corps extérieur (AK), à forte résistance mécanique, et d'un corps étanche de manchon de câble (KDK) mis en place dans le corps extérieur (AK), par le fait que le corps extérieur (AK) comporte un couvercle extérieur (AD) démontable, qui se trouve à la même hauteur que la surface supérieure (SO) du soubassement de pose (VG), par le fait que le corps étanche du manchon de câble (KDK), qui se trouve en dessous, est fermé par un couvercle étanche démontable par le haut, par le fait que des unités de raccordement de câbles (KA1, KA2, KA3) en forme de tubes sont introduites par le bas, à travers le corps extérieur (AK) dans le corps étanche de manchon de câble (KDK) et par le fait que les extrémités des câbles (K, MK) sont introduites d'une façon étanche dans ces unités de raccordement de câbles (KA1, KA2, KA3).

62. Système de transmission par câbles à fibres optiques selon la revendication 61
**caractérisé par le fait**
que les extrémités des câbles en forme de micro-câbles (MK), composés chacun d'un tube et des fibres optiques qui y sont guidées, sont raccordées étanches aux unités de raccordement de câbles (KA) par des raccords rétreints (KV).

63. Système de transmission par câbles à fibres optiques selon la revendication 61
**caractérisé par le fait**
qu'un morceau de gaine thermorétractable (SS) est disposé à la fin d'une unité de raccordement de câbles (KA3) pour l'introduction étanche d'un câble (K).

64. Système de transmission par câbles à fibres optiques selon l'une des revendications 61 à 63
**caractérisé par le fait**
que les points d'introduction des unités de raccordement de câbles (KA1, KA2, KA3) sont coudées dans la direction horizontale à la hauteur de pose des câbles (K, MK) mis en place dans le soubassement de pose (VG).

65. Système de transmission par câbles à fibres optiques selon l'une des revendications 61 à 63
**caractérisé par le fait**
que le manchon de câble (KMO) comporte des unités supplémentaires de raccordement de câbles sur sa paroi latérale, lesquels sont mises en place à la hauteur des rainures de pose pour les micro-câbles.

66. Système de transmission par câbles à fibres optiques selon l'une des revendications 61 à 63
**caractérisé par le fait**
que l'espace intermédiaire entre le corps étanche de manchon de câble (KDK) et le corps extérieur (AK) est rempli d'un produit de remplissage (FS), de préférence d'une mousse de matière plastique expansée.
